# EUROPEAN PATENT SPECIFICATION

(11) **EP 1 817 362 B1**
(45) Date of publication and mention of the grant of the patent: **22.09.2010**
(21) Application number: 05807368.5
(22) Date of filing: 21.11.2005
(51) Int. Cl.: C08G 69/40, C08G 69/48, G02B 1/04, C08F 8/10

(54) **Crosslinkable poly(oxyalkylene)-containing polyamide prepolymers**
Vernetzbare, Polyoxyalkylen-enthaltende Polyamidprepolymere
Prépolymères de polyamide pouvant être réticulés contenant un poly(oxyalkylène)

(30) Priority: 22.11.2004 US 630164 P
(43) Date of publication of application: 15.08.2007
(73) Proprietor: Novartis AG, 4056 Basel (CH)
(72) Inventor: PHELAN, John, Christopher, Duluth, GA 30097 (US)
(74) Representative: Bohest AG
(86) International application number: PCT/EP2005/012438
(87) International publication number: WO 2006/053777

(56) References cited:
- EP-A- 0 146 326
- WO-A-2004/048472
- US-B1- 6 479 587

## Description

The present invention is related to radiation-curable prepolymers useful for making polymeric articles, preferably ophthalmic device, more preferably soft hydrogel contact lenses. In particular, the present invention is related to water-soluble radiation-curable poly(oxyalkylene)-containing polyamides.

### BACKGROUND

It is well known that contact lenses can be used for cosmetics and the correction of visual acuity. The ideal contact lens is one which is not only comfortable to wear for extended periods of time, but also easily and reproducibly manufactured at minimum cost in time and labor.

Great of efforts have been made to develop fast, highly efficient contact lens manufacturing process. Such processes are described in U.S. Patent Nos. 5,508,317, 5,583,163, 5,789,464 and 5,849,810 describe a fast, highly efficient contact lens manufacturing process, in which contact lenses are cast-molded under a spatial limitation of actinic radiation. A "spatial limitation of actinic radiation" refers to an act or process in which energy radiation in the form of rays is directed by means of, for example, a mask or screen or combinations thereof, to impinge, in a spatially restricted manner, onto an area having a well defined peripheral boundary. In this case, only the lens-forming material, which is in the unmasked area in the mold cavity is crosslinked, whereas the lens-forming material located in the masked area (behind the mask) remains uncrosslinked. The remarkably high accurate edge of the lens can be created without a positive connection between two reusable, precision mold halves. When using a water-soluble photo-crosslinkable prepolymer as a lens-forming material, a finished lens of optical quality can be produced in a mold within a few seconds without the necessity for subsequent extraction or finishing steps to the contact lens. Moreover, following the production of a lens, the reusable molds can be cleaned rapidly and effectively of the uncrosslinked prepolymer and other residues, using water, on account of the water-soluble lens formulations, and can be blown dried with air. With such manufacturing process, contact lenses can be manufactured at considerably low cost.

Various water-soluble crosslinkable prepolymers have been developed, such as, for example, those disclosed in U.S. Patent Nos. 5,508,317, 5,583,163, 5,665,840, 5,712,356, 5,789,464, 5,849,841, 5,849,810, 6,165,408, 6,221,303, 6,303,687, 6,479,587, in U.S. Patent Application Publication No. 2004/0082680A1, in EP 932,635, and in PCT patent application WO 2000/31150. Contact lenses produced from the above-described water-soluble crosslinkable prepolymers have advantageous properties such as a good compatibility with the human cornea resulting in a high wearing comfort and the absence of irritation and allergenic effects. However, contact lenses made from those water-soluble photo-crosslinkable prepolymers may not always posses combination of most desirable physical/mechanical properties, for example, such as tensile properties (stress at break, elongation at break, and modulus), water contents, biocompatibility, and thermostability, for the intended uses.

Accordingly, there is still a need for a new prepolymer for economically producing durable, thermostable, highly-elastic soft contact lenses with desired physical/mechanical properties.

### SUMMARY OF THE INVENTION

In accomplishing the foregoing, there is provided, in accordance with one aspect of the present invention, a crosslinkable poly(oxyalkylene)-containing copolymer prepolymer, which is a reaction product of an amine-capped poly(oxyalkylene)-containing polyamide and a multifunctional compound having at least one ethylenically unsaturated group and a functional group coreactive with the capped amine groups of the amine-capped poly(oxyalkylene)-containing polyamide, wherein the amine-capped poly(oxyalkylene)-containing polyamide is a copolymerization product of a mixture comprising the components of:
(a) at least one aminoalkyl polyalkylene glycol of formula (1)

   CG-(R₁-O)ₙ-(R₂-O)ₘ-(R₃ -O)ₚ-CG' (1)

   wherein CG and CG' independently of each other are a primary or secondary amino group, or an amino-C₁-C₁₂ alkyl, R₁, R₂, and R₃, independently of one other, are each linear or branched C₂-C₄-alkylene or hydroxy-substituted C₂-C₈ alkylene radical, and n, m and p, independently of one another, are each a number from 0 to 500, wherein the sum of (n+m+p) is 5 to 1000,
(b) optionally at least one organic di- or poly-amine, wherein the organic diamine is a linear or branched C₂-C₂₄ aliphatic diamine, a C₅-C₂₄ cycloaliphatic or aliphatic-cycloaliphatic diamine, or a C₆-C₂₄ aromatic or araliphatic diamine, and wherein the organic poly amine is a compound of formula 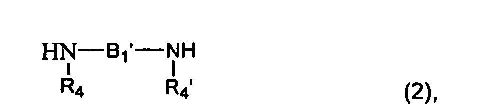 wherein R₄ and R₄' independently of each other are hydrogen or unsubstituted or substituted C₁-C₆ alkyl or together are a direct, ring-forming bond, and B₁' is a bivalent radical selected from the group consisting of a linear or branched C₃-C₂₄alkylene, an unsubstituted C₆-C₁₀arylene, a C₁-C₄ alkyl-substituted C₆-C₁₀ arylene, a C₇-C₁₈ aralkylene, C₆-C₁₀ arylene-C₁-C₂ alkylene-C₆-C₁₀arylene, C₃-C₈ cycloalkylene, C₃-C₈ cycloalkylene-C₁-C₆ alkylene, C₃-C₈ cycloalkylene-C₁-C₂ alkylene-C₃-C₈ cycloalkylene or C₁-C₆ alkylene-C₃-C₈ cycloalkylene-C₁-C₆ alkylene, each of which is interrupted by at least one bivalent amine group (-NH-) or has a primary or secondary amine group,
(c) at least one dicarboxyl derivative which is an organic compound with two groups of 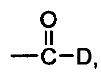 wherein D is halide, OH, or alkoxyl, cycloalkoxyl, or aralkoxyl, wherein the dicarboxyl derivative is derived from a linear or branched C₃-C₂₄ aliphatic dicarboxylic acid, a C₅-C₂₄ cycloaliphatic or aliphatic-cycloaliphatic dicarboxylic acid, a C₆-C₂₄ aromatic or araliphatic dicarboxylic acid, or a dicarboxylic acid which contains amino or imido groups or N-heterocyclic rings,
(d) at least one polycarboxyl derivative which is an organic compound with three or more groups of 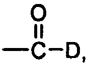 wherein D is defined above, and
(e) optionally a carbodiimide.

In another aspect, the present invention provides a crosslinkable poly(oxyalkylene)-containing prepolymer having formula (4)

CP-(Q)_{q} (4)

wherein q is an integer of ≥3, Q is an organic radical that comprises at least one crosslinkable group, CP is a multivalent linear or branched copolymer fragment comprising comprising segments A, A₁, T, and optionally segments G, wherein:
A is the bivalent radical of -(R₁-O)ₙ-(R₂-O)ₘ-(R₃-O)ₚ-, wherein R₁, R₂, and R₃, independently of one other, are each linear or branched C₂-C₄-alkylene or hydroxy-substituted C₂-C₈ alkylene radical, and n, m and p, independently of one another, are each a number from 0 to 500, wherein the sum of (n+m+p) is 5 to 1000;
G is a linear or branched C₃-C₂₄ aliphatic trivalent radical, a C₅-C₄₅ cycloaliphatic trivalent radical, a C₅-C₄₅ aliphatic-cycloaliphatic trivalent radical, or a C₃-C₂₄ aromatic or araliphatic trivalent radical;
A₁ is a linear or branched C₂-C₂₄ aliphatic bivalent radical, a C₅-C₂₄ cycloaliphatic or aliphatic-cycloaliphatic bivalent radical, a C₆-C₂₄ araliphatic bivalent radical, or aliphatic-heterocyclic bivalent radical, each of which is interrupted by at least one group of formula -NRₘ- in which Rₘ is hydrogen, a radical Q mentioned above or a radical of formula 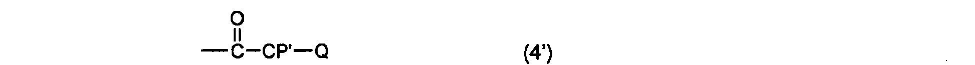 wherein Q is as defined above, and CP' is a bivalent copolymer fragment comprising one or more segments selected from the group consisting of A, A₁, T and G;
T is a bivalent radical of formula 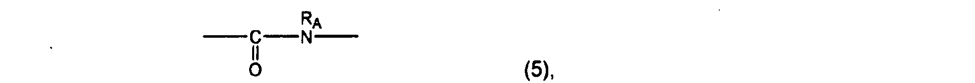 wherein R_{A} is hydrogen, an unsubstituted C₁-C₆ alkyl, or a substituted C₁-C₆ alkyl;
   provided that in the copolymer fragments CP and CP' a segment A is linked to a segment A₁ or G through a segment T;
   provided that the C atom of -CO- is bonded to a segment A₁ or G when Rₘ is a radical of formula (4');
   provided that Q is linked to the copolymer fragment CP or CP' through a segment T.

In another aspect, the present invention provides a polymer which is a product of actinically-crosslinking of an above-described water-soluble actinically-crosslinkable poly(oxyalkylene)-containing prepolymer of the invention in the presence or preferably in the absence of one or more additional vinylic monomers.

In a further aspect, the present invention provides a medical device, preferably an ophthalmic device, more preferably a contact lens, which is obtained by actinically crosslinking an above-described crosslinkable poly(oxyalkylene)-containing prepolymer of the invention in the presence or preferably in the absence of one or more additional vinylic monomers.

In another aspect, the present invention provides a medical device, comprising a poly(oxyalkylene)-containing copolymer hydrogel which is an actinically crosslinking product of a crosslinkable poly(oxyalkylene)-containing prepolymer in the absence or presence of an additional vinylic monomer and optionally in the presence of a photo-initiator, wherein the prepolymer is a reaction product of an amine-capped poly(oxyalkylene)-containing polyamide and a multifunctional compound having at least one ethylenically unsaturated group and a functional group coreactive with the capping amine groups of the amine-capped poly(oxyalkylene)-containing polyamide, wherein the amine-capped poly(oxyalkylene)-containing polyamide is a copolymerization product of a mixture comprising the components of:
(a) at least one aminoalkyl polyalkylene glycol of formula (1)

   CG-(R₁-O)ₙ-(R₂-O)ₘ-(R₃ -O)ₚ-CG' (1)

   wherein CG and CG' independently of each other are a primary or secondary amino group, or an amino-C₁-C₁₂ alkyl, R₁, R₂, and R₃, independently of one other, are each linear or branched C₂-C₄-alkylene or hydroxy-substituted C₂-C₈ alkylene radical, and n, m and p, independently of one another, are each a number from 0 to 100, wherein the sum of (n+m+p) is 5 to 1000,
(b) optionally at least one organic di- or poly-amine, wherein the organic diamine is a linear or branched C₂-C₂₄ aliphatic diamine, a C₅-C₂₄ cycloaliphatic or aliphatic-cycloaliphatic diamine, or a C₆-C₂₄ aromatic or araliphatic diamine, and wherein the organic poly amine is a compound of formula 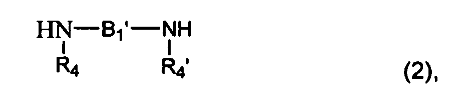 wherein R₄ and R₄' independently of each other are hydrogen or unsubstituted or substituted C₁-C₆ alkyl or together are a direct, ring-forming bond, and B₁' is a bivalent radical selected from the group consisting of a linear or branched C₃-C₂₄alkylene, an unsubstituted C₆-C₁₀arylene, a C₁-C₄ alkyl-substituted C₆-C₁₀ arylene, a C₇-C₁₈ aralkylene, C₆-C₁₀ arylene-C₁-C₂ alkylene-C₆-C₁₀arylene, C₃-C₈ cycloalkylene, C₃-C₆ cycloalkylene-C₁-C₆ alkylene, C₃-C₈ cycloalkylene-C₁-C₂ alkylene-C₃-C₈ cycloalkylene or C₁-C₆ alkylene-C₃-C₈ cycloalkylene-C₁-C₆ alkylene, each of which is interrupted by at least one bivalent amine group (-NH-) or has a primary or secondary amine group,
(c) at least one dicarboxyl derivative which is an organic compound with two groups of 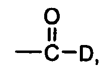 wherein D is halide, OH, or alkoxyl, cycloalkoxyl, or aralkoxyl, wherein the dicarboxyl derivative is derived from a linear or branched C₃-C₂₄ aliphatic dicarboxylic acid, a C₅-C₂₄ cycloaliphatic or aliphatic-cycloaliphatic dicarboxylic acid, a C₆-C₂₄ aromatic or araliphatic dicarboxylic acid, or a dicarboxylic acid which contains amino or imido groups or N-heterocyclic rings,
(d) at least one polycarboxyl derivative which is an organic compound with three or more groups of 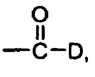 wherein D is defined above, and
(e) optionally a carbodiimide.

In a still further aspect, the present invention provides a method for making a contact lens, comprising the steps of:
(I) introducing a fluid lens-forming material into a mold, wherein the fluid lens-forming material is (i) a liquid or melt of a crosslinkable poly(oxyalkylene)-containing copolymer prepolymer in the presence or in the absence of one or more additional vinylic comonomers and optionally in the presence of a photo-initiator, or (ii) an aqueous solution of the crosslinkable poly(oxyalkylene)-containing copolymer prepolymer at a concentration of from 30% to 90% by weight, wherein the liquid or melt optionally is essentially free from solvents, wherein the aqueous solution optionally contains one or more compounds selected from the group consisting of physiologically compatible salts, isotonizing agents conventionally used in the field of contact lens care, vinylic comonomers and photo-initiators;
(II) initiating by actinic irradiation crosslinking of the crosslinkable poly(oxyalkylene)-containing copolymer prepolymer; and
(III) opening the mold so that the contact lens is removed from the mold,
   wherein the prepolymer is a reaction product of an amine-capped poly(oxyalkylene)-containing polyamide and a multifunctional compound having at least one ethylenically unsaturated group and a function group coreactive with the capped amine groups of the amine-capped poly(oxyalkylene)-containing polyamide, wherein the amine-capped poly(oxyalkylene)-containing polyamide is a copolymerization product of a mixture comprising the components of

(a) at least one aminoalkyl polyalkylene glycol of formula (1)

   CG-(R₁-O)ₙ-(R₂-O)ₘ-(R₃ -O)ₚ-CG' (1)

   wherein CG and CG' independently of each other are a primary or secondary amino group, or an amino-C₁-C₁₂ alkyl, R₁, R₂, and R₃, independently of one other, are each linear or branched C₂-C₄-alkylene or hydroxy-substituted C₂-C₈ alkylene radical, and n, m and p, independently of one another, are each a number from 0 to 100, wherein the sum of (n+m+p) is 5 to 1000,
(b) optionally at least one organic di- or poly-amine, wherein the organic diamine is a linear or branched C₂-C₂₄ aliphatic diamine, a C₅-C₂₄ cycloaliphatic or aliphatic-cycloaliphatic diamine, or a C₆-C₂₄ aromatic or araliphatic diamine, and wherein the organic poly amine is a compound of formula 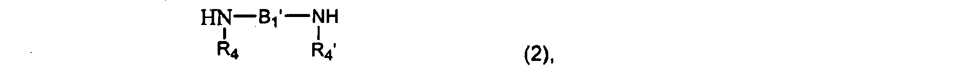 wherein R₄ and R₄' independently of each other are hydrogen or unsubstituted or substituted C₁-C₆ alkyl or together are a direct, ring-forming bond, and B₁' is a bivalent radical selected from the group consisting of a linear or branched C₃-C₂₄alkylene, an unsubstituted C₆-C₁₀arylene, a C₁-C₄ alkyl-substituted C₆-C₁₀ arylene, a C₇-C₁₈ aralkylene, C₆-C₁₀ arylene-C₁-C₂ alkylene-C₆-C₁₀arylene, C₃-C₈ cycloalkylene, C₃-C₈ cycloalkylene-C₁-C₆ alkylene, C₃-C₈ cycloalkylene-C₁-C₂ alkylene-C₃-C₈ cycloalkylene or C₁-C₆ alkylene-C₃-C₈ cycloalkylene-C₁-C₆ alkylene, each of which is interrupted by at least one bivalent amine group (-NH-) or has a primary or secondary amine group,
(c) at least one dicarboxyl derivative which is an organic compound with two groups of 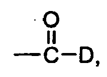 wherein D is halide, OH, or alkoxyl, cycloalkoxyl, or aralkoxyl, wherein the dicarboxyl derivative is derived from a linear or branched C₃-C₂₄ aliphatic dicarboxylic acid, a C₅-C₂₄ cycloaliphatic or aliphatic-cycloaliphatic dicarboxylic acid, a C₆-C₂₄ aromatic or araliphatic dicarboxylic acid, or a dicarboxylic acid which contains amino or imido groups or N-heterocyclic rings,
(d) at least one polycarboxyl derivative which is an organic compound with three or more groups of 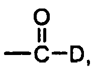 wherein D is defined above, and
(e) optionally a carbodiimide.

These and other aspects of the invention will become apparent from the following description of the preferred embodiments taken in conjunction with the following drawings. As would be obvious to one skilled in the art, many variations and modifications of the invention may be effected without departing from the spirit and scope of the novel concepts of the disclosure.

### DETAILED DESCRIPTION OF THE PREFERRED EMBODIMENTS

Reference now will be made in detail to the embodiments of the invention. It will be apparent to those skilled in the art that various modifications and variations can be made in the present invention without departing from the scope of the appended claim. For instance, features illustrated or described as part of one embodiment, can be used on another embodiment to yield a still further embodiment. Thus, it is intended that the present invention cover such modifications and variations within the scope of the appended claims. Other objects, features and aspects of the present invention are disclosed in or are obvious from the following detailed description. It is to be understood by one of ordinary skill in the art that the present discussion is a description of exemplary embodiments only, and is not intended as limiting the broader aspects of the present invention.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well known and commonly employed in the art.

In one aspect, the present invention relates to a water-soluble actinically-crosslinkable poly(oxyalkylene)-containing prepolymer, which is obtained by introducing ethylenically unsaturated groups into a poly(oxyalkylene)-containing polyamide with terminal amine groups (or amine-capped poly(oxyalkylene)-containing polyamide).

Exemplary ethylenically unsaturated groups include without limitation acryloyl, methacryloyl, allyl, vinyl, styrenyl, or other C=C containing groups.

A "prepolymer" refers to a starting polymer which can be cured (e.g., crosslinked and/or polymerized) actinically or thermally or chemically to obtain a crosslinked and/or polymerized polymer having a molecular weight much higher than the starting polymer. A "actinically-crosslinkable prepolymer" refers to a starting polymer which can be crosslinked upon actinic radiation to obtain a crosslinked polymer having a molecular weight much higher than the starting polymer. Examples of actinic radiation are UV irradiation, ionized radiation (e.g. gamma ray or X-ray irradiation), microwave irradiation.

As used herein, "actinically" in reference to curing or polymerizing of a polymerizable composition or material means that the curing (e.g., crosslinked and/or polymerized) is performed by actinic irradiation, such as, for example, UV irradiation, ionized radiation (e.g. gamma ray or X-ray irradiation), and microwave irradiation.

In accordance with the present invention, a poly(oxyalkylene)-containing polyamide with terminal amine groups must contain poly(oxyalkylene) segments, each of which is a divalent radical of

-(R₁-O)ₙ-(R₂-O)ₘ-(R₃ -O)ₚ-

in which R₁, R₂, and R₃, independently of one other, are each linear or branched C₂-C₄-alkylene or hydroxy-substituted C₂-C₈ alkylene radical, and n, m and p, independently of one another, are each a number from 0 to 500, wherein the sum of (n+m+p) is 5 to 1000. Each poly(oxyalkylene) segment is linked through an amide linkage (or bond) 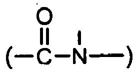 to at least one segment in the poly(oxyalkylene)-containing polyamide with terminal amine groups of the invention. It is discovered that a material with amide linkages has improved thermal stability as compared to similar materials containing urea or urethane linkages. The improved thermal stability of a poly(oxyalkylene)-containing polyamide preferably is characterized by its capability to endure repeated sterilization without undergoing significant changes (e.g., more than about 5% of changes) in material properties (e.g., tensile properties, lens diameter, water content).

Preferably, an amine-capped poly(oxyalkylene)-containing polyamide of the invention is a branched copolymer in which each of its polymeric chains including main and side chains are terminated with one capping group which can be an primary or secondary amine group.

An amine-capped poly(oxyalkylene)-containing polyamide of the invention is a copolymerization product of a mixture comprising (a) at least one amine-capped polyalkylene glycol (or poly(oxyalkylene), (b) optionally at least one organic di- or poly-amine, (c) at least one di-carboxyl derivative, (d) optionally at least one polycarboxyl derivative, and (e) optionally a carbodiimide. Preferably, the amine-capped poly(oxyalkylene)-containing copolymer is a copolymerization product of a mixture comprising (a) at least one poly(oxyalkylene)diamine, (b) at least one organic poly-amine, (c) at least one di-carboxyl derivative, (d) at least one polycarboxyl derivative, and (e) optionally a carbodiimide. More preferably, the amine-capped poly(oxyalkylene)-containing polyamide is a copolymerization product of a mixture comprising (a) at least one poly(oxyalkylene)diamine, (b) at least one organic poly-amine (preferably triamine), (c) at least one di-carboxyl derivative, (d) at least one polycarboxyl derivative (preferably tri-carboxyl derivative), and (e) optionally a carbodiimide.

In accordance with the present invention, a "poly(oxyalkylene)diamine" or "amine-capped poly(oxyalkylene)" refers to a compound of formula

CG-(R₁-O)ₙ-(R₂-O)ₘ-(R₃ -O)ₚ-CG' (1)

wherein CG and CG' independently of each other are a primary or secondary amino (amine) group, or an amino-C₁-C₁₂ alkyl, R₁, R₂, and R₃, are defined above. The sum of (n+m+p) is preferably from 8 to 200, more preferably from 8 to 100. Examples of preferred compounds of formula (1) include the family of poly(oxyalkylene)amines with various average molecular weights, e.g. so-called Jeffamines® having an average molecular weight of, for example, approximately from 200 to 5000.

In accordance with the present invention, an organic diamine is a compound with two amino groups (primary and/or secondary). An organic diamine is a linear or branched C₂-C₂₄ aliphatic diamine, a C₅-C₂₄ cycloaliphatic or aliphatic-cycloaliphatic diamine, or a C₆-C₂₄ aromatic or alkyl-aromatic diamine. A preferred organic diamine is bis(hydroxyethylene)ethylenediamine (BHEEDA) and isophorone diamine.

In accordance with the present invention, an organic polyamine is a compound of formula 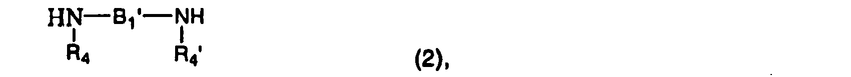 wherein R₄ and R₄' independently of each other are hydrogen or unsubstituted or substituted C₁-C₆ alkyl or together are a direct, ring-forming bond, and B₁' is a bivalent aliphatic, cycloaliphatic, aliphatic-cycloaliphatic, aromatic or araliphatic hydrocarbon radical that is interrupted by at least one bivalent amine group (-NH-) or has a primary or secondary amine group (such as, e.g., -NH₂ or -NHR, wherein R is C₁-C₆ alkyl, hydroxy-substituted C₁-C₆ alkyl or C₁-C₄ alkoxy-substituted C₁-C₆ alkyl).

Each of R₄ and R₄' independently of the other is hydrogen, unsubstituted C₁-C₆alkyl, hydroxy-substituted C₁-C₆alkyl or C₁-C₄alkoxy-substituted C₁-C₆alkyl. Each of R₄ and R₄' independently of the other is preferably hydrogen, unsubstituted C₁-C₆alkyl, or hydroxy-substituted C₁-C₄alkyl, more preferably hydrogen, C₁-C₂alkyl or hydroxy-C₁-C₂alkyl, and most preferably hydrogen. The radicals R₄ and R₄' may be different or, preferably, identical.

The radical B₁' is, linear or branched C₃-C₂₄alkylene or unsubstituted or C₁-C₄alkyl-substituted C₆-C₁₀arylene, C₇-C₁₈aralkylene, C₆-C₁₀arylene-C₁-C₂alkylene-C₆-C₁₀-arylene, C₃-C₈cycloalkylene, C₃-C₈cycloalkylene-C₁-C₆alkylene, C₃-C₈cylcoalkylene-C₁-C₂-alkylene-C₃-C₈cycloalkylene or C₁-C₆alkylene-C₃-C₈cycloalkylene-C₁-C₆alkylene, each of which is interrupted by at least one, preferably from 1 to 3, more preferably 1 or 2 groups of - NH-.

Examples of polyamines of formula (2) are symmetrical or asymmetrical dialkylenetriamines or trialkylenetetramines or cycloaliphatictriamine. Preferred polyamines include without limitation diethylenetriamine, N-2'-aminoethyl-1,3-propylenediamine, N,N-bis(3-aminopropyl)-amine, N,N-bis(6-aminohexyl)amine and triethylenetetramine.

The component (b) can be absent or preferably present in the reaction mixture for preparing an amine-capped poly(oxyalkylene)-containing copolymer. Where the component (b) is present, it comprise preferably at least one organic polyamine and optionally an organic diamine, more preferably at least one triamine and optionally an organic diamine.

In accordance with the invention, a di- or polycarboxyl derivative preferably is an organic compound with two or more groups of 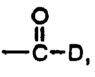 wherein D is halide (i.e., carbonyl chloride or acid chloride group), OH (i.e., carboxylic acid group), or alkoxyl or cycloakoxyl or aralkoxyl (i.e., ester group).

In accordance with the present invention, a dicarboxyl derivative is a derivative (i.e., carbonyl chloride, carboxylic acid or ester) of a linear or branched C₃-C₂₄ aliphatic dicarboxylic acid, a C₅-C₂₄ cycloaliphatic or aliphatic-cycloaliphatic dicarboxylic acid, a C₆-C₂₄ aromatic or araliphatic dicarboxylic acid, or a dicarboxylic acid which contains amino or imido groups or N-heterocyclic rings. Examples of suitable aliphatic dicarboxylic acids are: malonic acid, dimethylmalonic acid, succinic acid, octadecylsuccinic acid, pimelic acid, adipic acid, trimethyladipic acid, sebacic acid, azelaic acid, and dimeric acids (dimerisation products of unsaturated aliphatic carboxylic acids, such as oleic acid). Examples of suitable cycloaliphatic dicarboxylic acids are: 1,3-cyclobutanedicarboxylic acid, 1,3-cyclopentanedicarboxylic acid, 1,3- and 1,4-cyclohexanedicarboxylic acid, 1,3- and 1,4-dicarboxylmethylcyclohexane, 4,4'-dicyclohexyldicarboxylic acid. Examples of suitable unsaturated dicarboxylic acids are: maleic acid, fumaric acid, methylmaleic acid or itaconic acid. Examples of suitable aromatic dicarboxylic acids are: terephthalic acid, isophthalic acid, o-phthalic acid, 1,3-, 1,4-, 2,6- or 2,7-naphthalenedicarboxylic acids, 4,4'-diphenyldicarboxylic acid, 4,4'-diphenylsulphone-dicarboxylic acid, 1,1,3-trimethyl-5-carboxyl-3-(p-carboxyphenyl)-indane, 4,4'-diphenyl ether-dicarboxylic acid, bis-p-(carboxylphenyl)-methane.

In accordance with the present invention, a polycarboxyl derivative is a compound comprising at least three carbonyl halide or carboxylic acid or ester groups. A polycarboxyl derivative can be a linear or branched C₃-C₂₄ aliphatic polycarboxyl derivative, a C₅-C₄₅ cycloaliphatic or aliphatic-cycloaliphatic polycarboxyl derivative, or a C₆-C₂₄ aromatic or araliphatic polycarboxyl derivative. Preferably, a polycarboxyl derivative is a C₆-C₄₅ cycloaliphatic or aliphatic-cycloaliphatic compound containing 3-6 carbonyl halide or carboxylic acid or ester groups. Most preferably, a polycarboxyl derivative is a C₆-C₄₅ cycloaliphatic or aliphatic-cycloaliphatic compound containing 3 carbonyl halide or carboxylic acid or ester groups. Examples of aliphatic tricarboxylic acids are aconitic acid and citric acid. Examples of cycloaliphatic tricarboxylic acids are 1,3,5-cyclohexanetricarboxylic acid and 1,3,5-trimethyl-1,3,5-cyclohexanetricarboxylic acid. Examples of aromatic tricarboxylic acids are 1,2,3 benzene tricarboxylic acid, 1,2,4 benzene tricarboxylic acid. and 1,3,5 benzene tricarboxylic acid (trimesic acid).

Preferred di- or polyacid halides (i.e., di- or polycarbonyl chloride) are triacid chlorides, triacid bromides, diacid chlorides and diacid bromides. Examples of diacid chlorides are fumaryl chloride, suberoyl chloride, succinyl chloride, phthaloyl chloride, isophthaloyl chloride, terephthaloyl chloride, sebacoyl chloride, adipoyl chloride, trimethyladipoyl chloride, azelaoyl chloride, dodecanedioic acid chloride, succinic chloride, glutaric chloride, oxalyl chloride, and dimer acid chloride. Examples of triacid chlorides are trimesoyl chloride, cyclohexane-1,3,5-tricarbonyl chloride, trimer acid chloride.

In a preferred embodiment, the di- or polycarboxyl derivative is a di- or polycarbonyl halide (or di- or polyacid halide, or di- or polyacyl halide).

In another preferred embodiment, the di- or polycarboxyl derivative is a di- or polycarboxylic acid. In this preferred embodiment, the reaction mixture for making an amine-capped poly(oxyalkylen)-containing polyamide of the invention preferably comprises a carbodiimide, which can couple carboxyls to amines, resulting in formation of a amide.

When a carbodiimide is used in the coupling of a carboxyl and an amine, no cross-bridge is formed between the molecules being coupled. The carbodiimide facilitates amide formation. Examples of carbodiimides are 1-ethyl-3-(3-dimethylaminopropyl)carbodiimide (EDC), N,N'-dicyclohexylcarbodiimide (DCC), 1-cylcohexyl-3-(2-morpholinoethyl)carbodiimide, diisopropyl carbodiimide, or mixtures thereof. N-hydroxysuccinimide (NHS) or N-hydroxysulfo-succinimide may be desirably included in carbodiimide (e.g., EDC)-mediated coupling reaction to improve coupling (conjugation) efficiency. EDC couples NHS to carboxyls, resulting in an NHS-activated site on a molecule. The formed NHS-ester can react with amines to form amides.

Preferably, a resin-bound carbodiimide is used to coupling carboxyls and amines. The resin-bound reagents are easily removed by filtration or decanting and as such, purification of reaction products is simplified. It is preferably that resin-bound 1-hydroxybenzotriazole catalyst is used together with a resin-bound carbodiimide for making an amine-capped poly(oxyalkylene)-containing polyamide of the invention.

Where a carbodiimide is present in a reaction mixture for making an amine-capped poly(oxyalkylene)-containing polyamide of the invention, an amino acid can also be added into the reaction mixture.

Ethylenically unsaturated groups can be introduced into an amine-capped poly(oxyalkylene)-containing polyamide by reacting it with a multifunctional compound having at least one ethylenically unsaturated group and a functional group coreactive with capping amine groups, according to any methods known to a person skilled in the art, for example, by reacting it with an acryloyl chloride-containing compound or a methacryloyl chloride-containing compound, or by coupling it with a compound comprising at least one ethylenically unsaturated group and a carboxylic acid group in the presence of a carbodiimide.

One embodiment of a crosslinkable prepolymer of the invention is illustrated in formula (4)

CP-(Q)_{q} (4)

wherein q is an integer of 3 or higher, Q is an organic radical that comprises at least one crosslinkable group, CP is a multivalent linear or branched copolymer fragment comprising segments A, A₁, T, and optionally segments G, wherein:
A is the bivalent radical of -(R₁-O)ₙ-(R₂-O)ₘ-(R₃-O)ₚ-, wherein R₁, R₂, R₃, n, m, and p each are defined above;
G is a linear or branched C₃-C₂₄ aliphatic trivalent radical, a C₅-C₄₅ cycloaliphatic trivalent radical, a C₅-C₄₅ aliphatic-cycloaliphatic trivalent radical, or a C₃-C₂₄ aromatic or araliphatic trivalent radical;
A₁ is a linear or branched C₂-C₂₄ aliphatic bivalent radical, a C₅-C₂₄ cycloaliphatic or aliphatic-cycloaliphatic bivalent radical, a C₆-C₂₄ araliphatic bivalent radical, or aliphatic-heterocyclic bivalent radical, each of which is interrupted by at least one group of formula -NRₘ- in which Rₘ is hydrogen, a radical Q mentioned above or a radical of formula 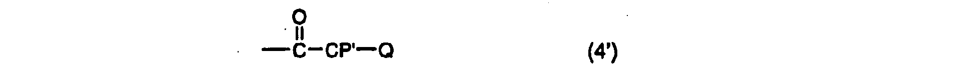 wherein Q is as defined above, and CP' is a bivalent copolymer fragment comprising one or more segments selected from the group consisting of A, A₁, T and G;
T is a bivalent radical of formula 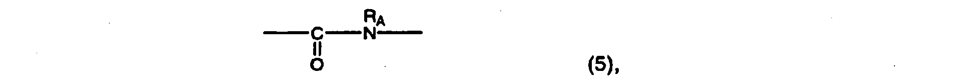 wherein R_{A} is hydrogen, an unsubstituted C₁-C₆ alkyl, or a substituted C₁-C₆ alkyl; provided that in the copolymer fragments CP and CP' a segment A is linked to a segment A₁ or G through a segment T;
   provided that the C atom of -CO- is bonded to a segment A₁ or G when Rₘ is a radical of formula (4');
   provided that Q is linked to the copolymer fragment CP or CP' through a segment T.

Q is, for example, an ethylenically unsaturated, copolymerizable radical that is bonded to the copolymer fragment CP in a suitable manner, for example, through a urethane linkage, a urea linkage, preferably an amide linkage.

The radical Q corresponds, for example, to a radical R₅ which is an olefinically unsaturated copolymerizable radical having 2 to 24 carbon atoms-which may be further substituted, or to a radical of formula -(NH )ᵣ-Q₁ or -O-Q₁, wherein Q₁ is a radical of formula 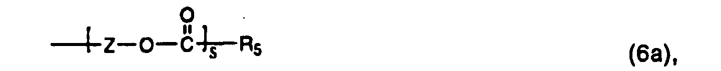 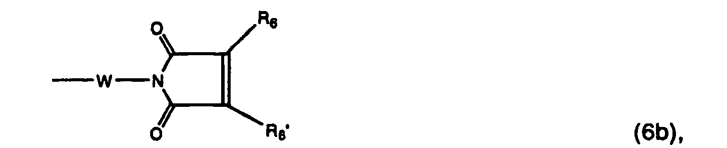 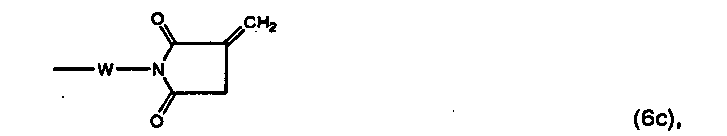 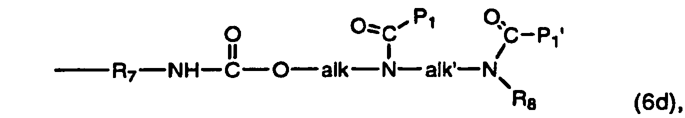 or 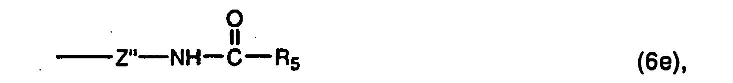 and wherein
Z is linear or branched C₂-C₁₂alkylene,
R₅ is an olefinically unsaturated copolymerisable radical having from 2 to 24 carbon atoms which may be further substituted,
W is a C₂-C₁₂alkylene radical, phenylene radical or C₇-C₁₂aralkylene radical, each of R₆ and R₆' independently of each other is hydrogen, C₁-C₄alkyl or halogen,
R₇ is a bivalent aliphatic, cycloaliphatic, aliphatic-cycloaliphatic, aromatic or araliphatic hydrocarbon radical,
R₈ is hydrogen or C₁-C₄alkyl,
each of alk and alk' independently of the other is a linear or branched C₁-C₁₂alkylene radical, each of r and s independently of each other is the number 0 or 1,
Z" is C₁-C₆alkylene and
P₁ and P₁' independently of each other are a radical of formula -(NH )ᵣ-Q₁ or -O-Q₁.
Z is preferably linear or branched C₂-C₆alkylene, more preferably linear C₂-C₆alkylene and most preferably linear C₂-C₄alkylene. In a preferred embodiment of the invention, Z is 1,3-propylene or, especially, 1,2-ethylene.

Suitable substituents on the olefinic C₂-C₂₄ radical R₅ are, for example, C₁-C₄alkoxy, halogen, phenyl or carboxy.
R₅ is, for example, a radical of formula 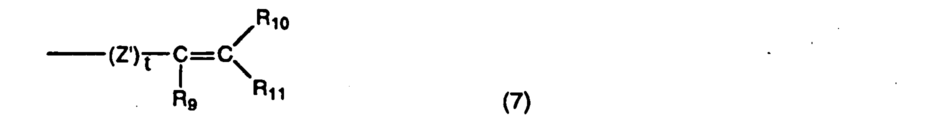 wherein t is the number 0 or 1,
R₉ is hydrogen, C₁-C₄alkyl or halogen,
each of R₁₀ and R₁₁ independently of the other is hydrogen, C₁-C₄alkyl, phenyl, carboxy or halogen, and
Z' is linear or branched C₁-C₁₂alkylene or unsubstituted or C₁-C₄alkyl- or C₁-C₄alkoxy-substituted phenylene or C₇-C₁₂aralkylene.

When Z' is a phenylene radical, it is, for example, unsubstituted or methyl- or methoxy-substituted 1,2-, 1,3- or 1,4-phenylene. Preferably, Z' as a phenylene radical is 1,3- or 1,4-phenylene.

When Z' is an aralkylene radical, it is, for example, unsubstituted or methyl- or methoxy-substituted benzylene, wherein the methylene group is bonded to the amine nitrogen in each case. Preferably, Z' as an aralkylene radical is the 1,3- or 1,4-phenylenemethylene radical wherein the methylene group is bonded to the amine nitrogen -NH- in each case.

Z' is preferably unsubstituted or methyl- or methoxy-substituted phenylene or phenylene-methylene or C₁-C₁₂alkylene, more preferably 1,3- or 1,4-phenylene or C₁-C₆alkylene, especially C₁-C₂alkylene and most preferably methylene.

t is the number 1 or, preferably, the number 0.

R₉ is preferably hydrogen, methyl or chlorine and most preferably hydrogen or methyl.

Each of R₁₀ and R₁₁ independently of the other is preferably hydrogen, carboxy, chlorine, methyl or phenyl. In a preferred embodiment of the invention, R₁₀ is hydrogen, chlorine, methyl or phenyl and R₁₁ is hydrogen or carboxy. Most preferably, R₁₀ and R₁₁ are each hydrogen.

Examples of suitable radicals R₅ are vinyl, 2-propenyl, allyl, 2-butenyl, o-, m- or p-vinyl-phenyl, styryl, 2 carboxyvinyl, 2-chloro-2-carboxyvinyl, 1,2-dichloro-2-carboxyvinyl, 1,2-dimethyl-2-carboxyvinyl and 2-methyl-2-carboxyvinyl.

Especially preferred radicals R₅ correspond to formula (7) wherein t is 0, R₉ is hydrogen or methyl, R₁₀ is hydrogen, methyl, chlorine or phenyl and R₁₁ is hydrogen or carboxy.

Other especially preferred radicals R₅ correspond to the above formula (7) wherein t is 1, Z' is 1,3- or 1,4-phenylene or C₁-C₆alkylene, especially C₁-C₂alkylene, R₉ is hydrogen or methyl and R₁₀ and R₁₁ are each hydrogen.

Z" is preferably C₁-C₄alkylene, especially methylene or 1,1-dimethylmethylene.

One group of suitable radicals Q corresponds to the above formula -(NH )ᵣ-Q₁ wherein r is 0 and Q₁ is a radical of the above formula (6a) wherein s is 0 and for R₅ the meanings and preferences given above apply.

A second group of suitable radicals Q corresponds to the above formula -(NH )ᵣ-Q₁ wherein r is 1 and Q₁ is a radical of the above formula (6a) wherein s is 0 and for R₅ and Z the meanings and preferences given above apply.

A further group of suitable radicals Q corresponds to the above formula -(NH )ᵣ-Q₁ wherein r is 1 and Q₁ is a radical of the above formula (6a) wherein s is 1 and for R₅ and Z the meanings and preferences given above apply.

A further group of suitable radicals Q corresponds to the above formula -(NH )ᵣ-Q₁ wherein r is 0 and Q₁ is a radical of the above formula (6e) wherein for R₅ and Z" the meanings and preferences given above apply.

In formulae (6b) and (6c), W is preferably a C₂-C₆alkylene radical or a 1,3- or 1,4-phenylene radical and most preferably a C₂-C₃alkylene radical. Each of R₆ and R₆' independently of the other is preferably hydrogen, methyl or chlorine. Most preferably, each of R₆ and R₆' independently of the other is hydrogen or methyl.

In formula (6d), R₇ is, for example, linear or branched C₃-C₁₈alkylene or unsubstituted or -C₁-C₄alkyl- or C₁-C₄alkoxy-substituted C₆-C₁₀arylene, C₇-C₁₈aralkylene, C₆-C₁₀arylene-C₁-C₂alkylene-C₆-C₁₀arylene, C₃-C₈cycloalkylene, C₃-C₈cycloalkylene-C₁-C₆alkylene, C₃-C₈cycloalkylene-C₁-C₂alkylene-C₃-C₈cycloalkylene, C₁-C₆alkylene-C₃-C₈cycloalkylene-C₁-C₆alkylene or an aliphatic-heterocyclic radical comprising at least one hydantoin group.

R₇ as alkylene is preferably a linear or branched C₃-C₁₄alkylene radical, more preferably a linear or branched C₄-C₁₂alkylene radical and most preferably a linear or branched C₆-C₁₀-alkylene radical. Some preferred alkylene radicals are 1,4-butylene, 2,2-dimethyl-1,4-butylene, 1,5-pentylene, 2,2-dimethyl-1,5-pentylene, 1,6-hexylene, 2,2,3- or 2,2,4-trimethyl-1,5-pentylene, 2,2-dimethyl-1,6-hexylene, 2,2,3- or 2,2,4- or 2,2,5-trimethyl-1,6-hexylene, 2,2-dimethyl-1,7-heptylene, 2,2,3- or 2,2,4- or 2,2,5- or 2,2,6-trimethyl-1,7-heptylene, 1,8-octylene, 2,2-dimethyl-1,8-octylene and 2,2,3- or 2,2,4- or 2,2,5- or 2,2,6- or 2,2,7-trimethyl-1,8-octylene.

When R₇ is arylene, it is, for example, naphthylene or especially phenylene, each of which may be substituted, for example, by C₁-C₄alkyl or by C₁-C₄alkoxy. Preferably, R₇ as arylene is 1,3- or 1,4-phenylene that is substituted by C₁-C₄alkyl or by C₁-C₄alkoxy in the ortho-position to at least one linkage site. Examples of substituted arylene are 1-methyl-2,4-phenylene, 1,5-dimethyl-2,4-phenylene, 1-methoxy-2,4-phenylene and 1-methyl-2,7-naphthylene.

R₇ as aralkylene is preferably naphthylalkylene and most preferably phenylalkylene. The alkylene group in aralkylene contains preferably from 1 to 12, more preferably from 1 to 6 and most preferably from 1 to 4 carbon atoms. Most preferably, the alkylene group in aralkylene is methylene or ethylene. Some examples are 1,3- or 1,4-benzylene, naphth-2-yl-7-methylene, 6-methyl-1,3- or -1,4-benzylene and 6-methoxy-1,3- or -1,4-benzylene.

When R₇ is cycloalkylene, it is preferably C₅-C₆cycloalkylene and most preferably cyclohexylene that is unsubstituted or substituted by methyl. Some examples are 1,3-cyclo-butylene, 1,3-cyclopentylene, 1,3- or 1,4-cyclohexylene, 1,3- or 1,4-cycloheptylene, 1,3- or 1,4- or 1,5-cyclooctylene, 4-methyl-1,3-cyclopentylene, 4-methyl-1,3-cyclohexylene, 4,4-dimethyl-1,3-cyclohexylene, 3-methyl- or 3,3-dimethyl-1,4-cyclohexylene, 3,5-dimethyl-1,3-cyclohexylene and 2,4-dimethyl-1,4-cyclohexylene.

When R₇ is cycloalkylene-alkylene, it is preferably cyclopentylene-C₁-C₄alkylene and especially cyclohexylene-C₁-C₄alkylene, each unsubstituted or mono- or poly-substituted by C₁-C₄alkyl, especially methyl. More preferably, the group cycloalkylene-alkylene is cyclohexylene-ethylene and, most preferably, cyclohexylene-methylene, each unsubstituted or substituted in the cyclohexylene radical by from 1 to 3 methyl groups. Some examples are cyclopent-1-yl-3-methylene, 3-methyl-cyclopent-1-yl-3-methylene, 3,4-dimethyl-cyclopent-1-yl-3-methylene, 3,4,4-trimethyl-cyclopent-1-yl-3-methylene, cyclohex-1-yl-3- or -4-methylene, 3- or 4- or 5-methyl-cyclohex-1-yl-3- or -4-methylene, 3,4- or 3,5-dimethyl-cyclohex-1-yl-3- or -4-methylene and 3,4,5- or 3,4,4- or 3,5,5-trimethyl-cyclohex-1-yl-3- or -4-methylene.

When R₇ is alkylene-cycloalkylene-alkylene, it is preferably C₁-C₄alkylene-cyclopentylene-C₁-C₄alkylene and especially C₁-C₄alkylene-cyclohexylene-C₁-C₄alkylene, each unsubstituted or mono- or poly-substituted by C₁-C₄alkyl, especially methyl. More preferably, the group alkylene-cycloalkylene-alkylene is ethylene-cyclohexylene-ethylene and, most preferably, is methylene-cyclohexylene-methylene, each unsubstituted or substituted in the cyclohexylene radical by from 1 to 3 methyl groups. Some examples are cyclopentane-1,3-dimethylene, 3-methyl-cyclopentane-1,3-dimethylene, 3,4-dimethyl-cyclopentane-1,3-dimethylene, 3,4,4-trimethyl-cyclopentane-1,3-dimethylene, cyclohexane-1,3- or -1,4-dimethylene, 3- or 4- or 5-methyl-cyclohexane-1,3- or -1,4-dimethylene, 3,4- or 3,5-dimethyl-cyclohexane-1,3- or -1,4-dimethylene, 3,4,5- or 3,4,4- or 3,5,5-trimethyl-cyclohexane-1,3- or -1,4-dimethylene.

R₇ as C₃-C₈cycloalkylene-C₁-C₂alkylene-C₃-C₈cycloalkylene or C₆-C₁₀arylene-C₁-C₂alkylene-C₆-C₁₀arylene is preferably C₅-C₆cycloalkylene-methylene-C₅-C₆cycloalkylene or phenylene-methylene-phenylene, each of which may be unsubstituted or substituted in the cycloalkyl or phenyl ring by one or more methyl groups.

When R₇ is an aliphatic-heterocyclic radical containing hydantoin groups, it may correspond, for example, to formula 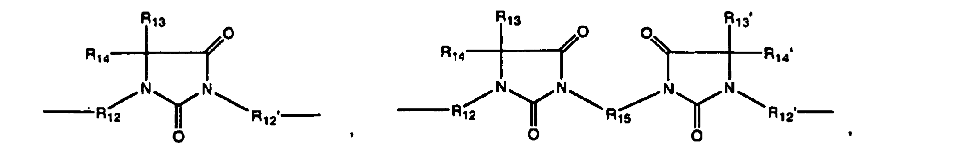 or 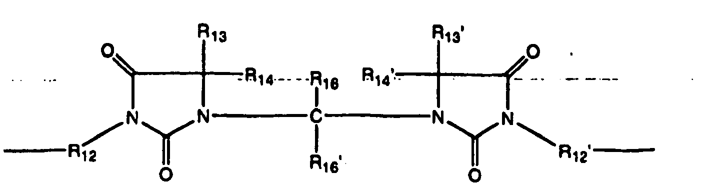 wherein R₁₂ and R₁₂' are each C₁-C₆alkylene, preferably C₂-C₄alkylene and especially C₂-C₃alkylene, R₁₃, R₁₃', R₁₄ and R₁₄' are each independently of the others hydrogen, C₁-C₆alkyl or C₅-C₇cycloalkyl, preferably are each independently of the others hydrogen or C₁-C₄alkyl and especially are each methyl, R₁₅ is C₁-C₁₂alkylene and preferably C₁-C₆-alkylene and R₁₆ and R₁₆' are each independently of the other hydrogen or C₁-C₄alkyl and preferably hydrogen or methyl.

The radical R₇ in formula (6d) has a symmetrical or, preferably, an asymmetrical structure.

A preferred group of radicals Q₁ of formula (6d) comprises those wherein R₇ is linear or branched C₆-C₁₀alkylene; cyclohexylene-methylene or cyclohexylene-methylene-cyclohexylene each unsubstituted or substituted in the cyclohexyl moiety by from 1 to 3 methyl groups; or phenylene or phenylene-methylene-phenylene each unsubstituted or substituted in the phenyl moiety by methyl.

The bivalent radical R₇ is derived preferably from a diisocyanate and most preferably from a diisocyanate selected from the group isophorone diisocyanate (IPDI), toluylene-2,4-diisocyanate (TDI), 4,4'-methylenebis(cyclohexyl isocyanate), 1,6-diisocyanato-2,2,4-trimethyl-n-hexane (TMHDI), methylenebis(phenyl isocyanate), methylenebis(cyclohexyl-4-isocyanate) and hexamethylene diisocyanate (HMDI).

Each of the radicals alk and alk' independently of the other is preferably a C₂-C₈alkylene radical, more preferably a C₂-C₄alkylene radical and most preferably the 1,2-ethylene radical.

R₈ is preferably methyl or especially hydrogen.

P₁ is a radical of the formula -(NH )ᵣ-Q₁ or -O-Q₁, wherein Q₁ is a radical of the above formula (6a), (6b) or (6c), and wherein for the variables contained therein the meanings and preferences given above apply in each case.

P₁ is preferably a radical of the formula -(NH )ᵣ-Q₁ or -O-Q₁, wherein Q₁ is a radical of the above formula (6a), and most preferably is a radical of formula (6') or (6"') given below.

When Q is a radical R₅, the meaning and preferences given above for R₅ apply in each case.

Especially preferred radicals Q correspond to formula 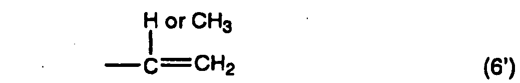 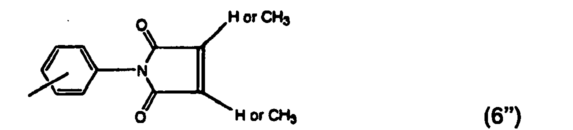 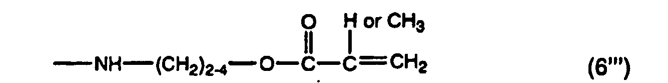 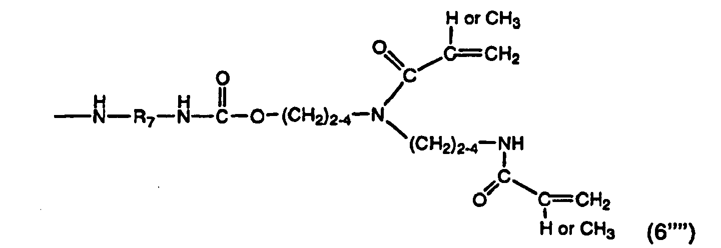 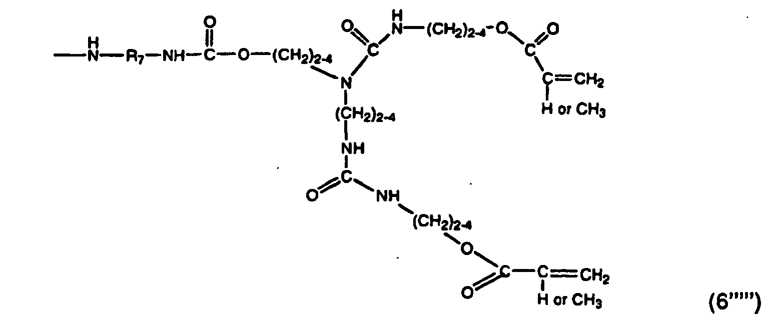 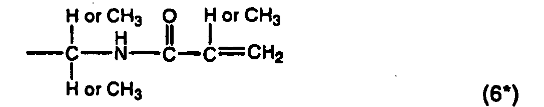 or 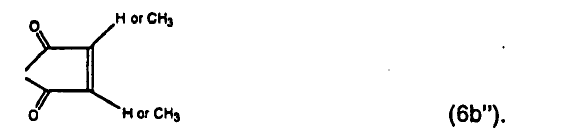 wherein for R₇ the meanings and preferences given above apply in each case.

Especially preferred as the radical Q are radicals of formula (6') and (6"').

In the bivalent radical of -(R1-O)n-(R2-O)m-(R3-O)p-, R₁, R₂, and R₃, independently of one other, are each linear or branched C₂-C₄-alkylene or hydroxy-substituted C₂-C₈ alkylene radical, and n, m and p, independently of one another, are each a number from 0 to 500, wherein the sum of (n+m+p) is 5 to 1000. The sum of (n+m+p) is preferably 8 to 200, more preferably from 8 to 100. A is derived preferably bis-aminoalkylene-polyalkylene glycols of various average molecular weights.

The prepolymers of the invention may have uniform segments A or, alternatively, two or more structurally different segments A, for example, 2 or 3 or, preferably, 2 different segments A.

A₁ is preferably derived from an aliphatic, cycloaliphatic, aliphatic-cycloaliphatic, aromatic or araliphatic diamine or dicarboxyl derivative, especially from a C₅-C₂₄ cycloaliphatic or aliphatic-cycloaliphatic diamine or dicarboxyl derivative. The prepolymers of the invention may have uniform segments A, or, alternatively, two or more structurally different segments A₁.

The prepolymers of the invention may have uniform segments T or, alternatively, two or more structurally different segments T.

Preferably, at least one segment A, is a linear or branched C₄-C₂₄ alkylene radical that is interrupted by from 1 to 3, preferably 1 or 2, more preferably by one divalent amine groups of -NRₘ-. More preferably, at least one segment A₁ is a linear or branched alkylene having from 3 to 14 carbon atoms that is interrupted by one divalent amine group of formula -NRₘ-.

When Rₘ is a radical Q or a radical of formula (4'), then, for the segments A, A₁, T and G contained therein and for the radical Q, the meanings, preferences and conditions given above apply in each case.

One group of preferred radicals A₁ corresponds to formula 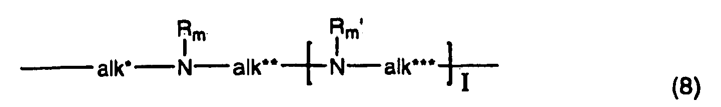 wherein each of alk*, alk** and alk*** independently of the others is a C₂-C₁₂alkylene radical, preferably a C₂-C₆alkylene radical and most preferably a C₂-C₄alkylene radical; I is the number 0 or 1 and especially the number 0 and for Rₘ and Rₘ' independently the meanings and preferences given above for Rₘ apply in each case.

The trivalent radical G may be a linear or branched C₃-C₂₄ aliphatic trivalent radical, a C₅-C₄₅ cycloaliphatic or aliphatic-cycloaliphatic trivalent radical, or a C₆-C₂₄ aromatic or araliphatic trivalent radical. Preferably, the trivalent radical G is a C₆-C₄₅ cycloaliphatic or aliphatic-cycloaliphatic trivalent radical containing at least one heteroatom selected from the group consisting of oxygen and nitrogen.

The average molecular weight of the polymer fragments CP is, for example, in a range of approximately from 350 to 25 000, preferably from 500 to 15000 and most preferably from 1000 to 10000.

A crosslinkable poly(oxyalkylene)-containing prepolymer of the invention can be prepared in a manner known to person skilled in the art, for example in a two-step process. In the first step, an amine-capped poly(oxyalkylene)-containing polyamide of the invention is prepared by reacting together a mixture comprising (a) at least one amine-capped polyalkylene glycol (or poly(oxyalkylene), (b) optionally at least one organic di- or poly-amine, (c) at least one di-carboxyl derivative, (d) at least one polycarboxyl derivative, and (e) optionally a carbodiimide. In the second step, a multifunctional compound having at least one ethylenically unsaturated group and a functional group coreactive with the capping amine groups of the amine-capped poly(oxyalkylene)-containing polyamide obtained in the first step in the absence or presence of a carbodiimide.

Schemes 1-6 illustrate various possible schemes for synthesizing an ethylenically unsaturated group-capped poly(oxyalkylene)-containing prepolymer.

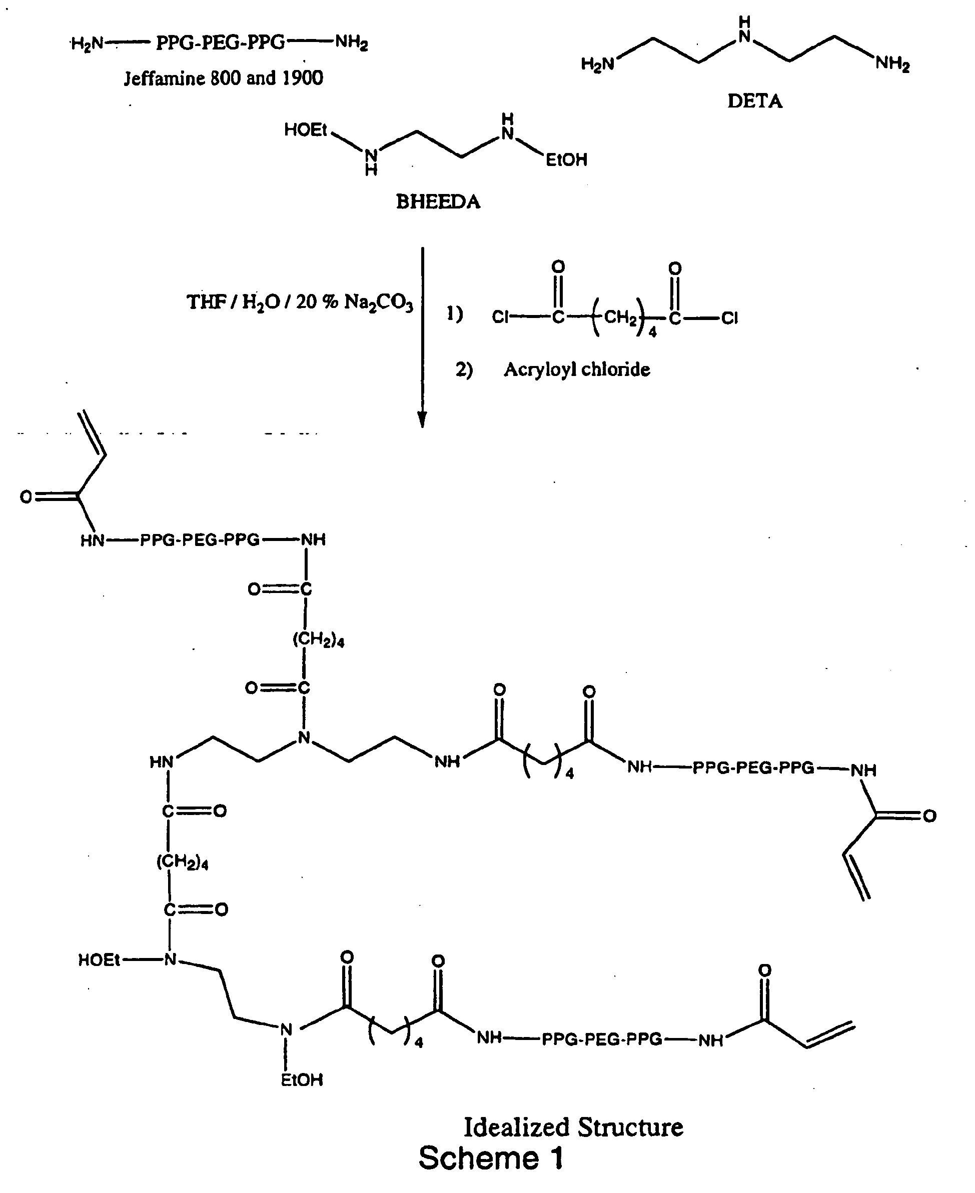

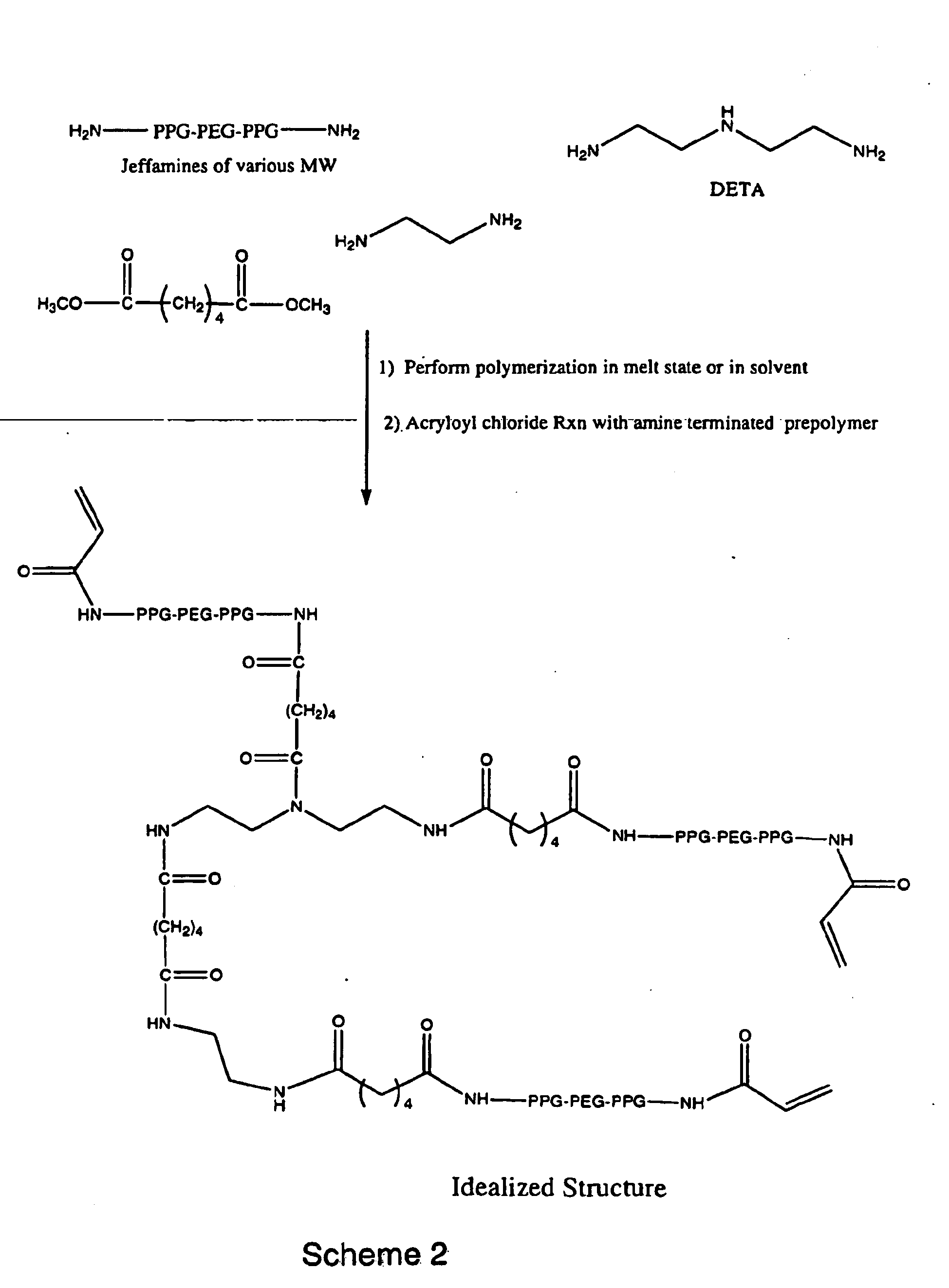

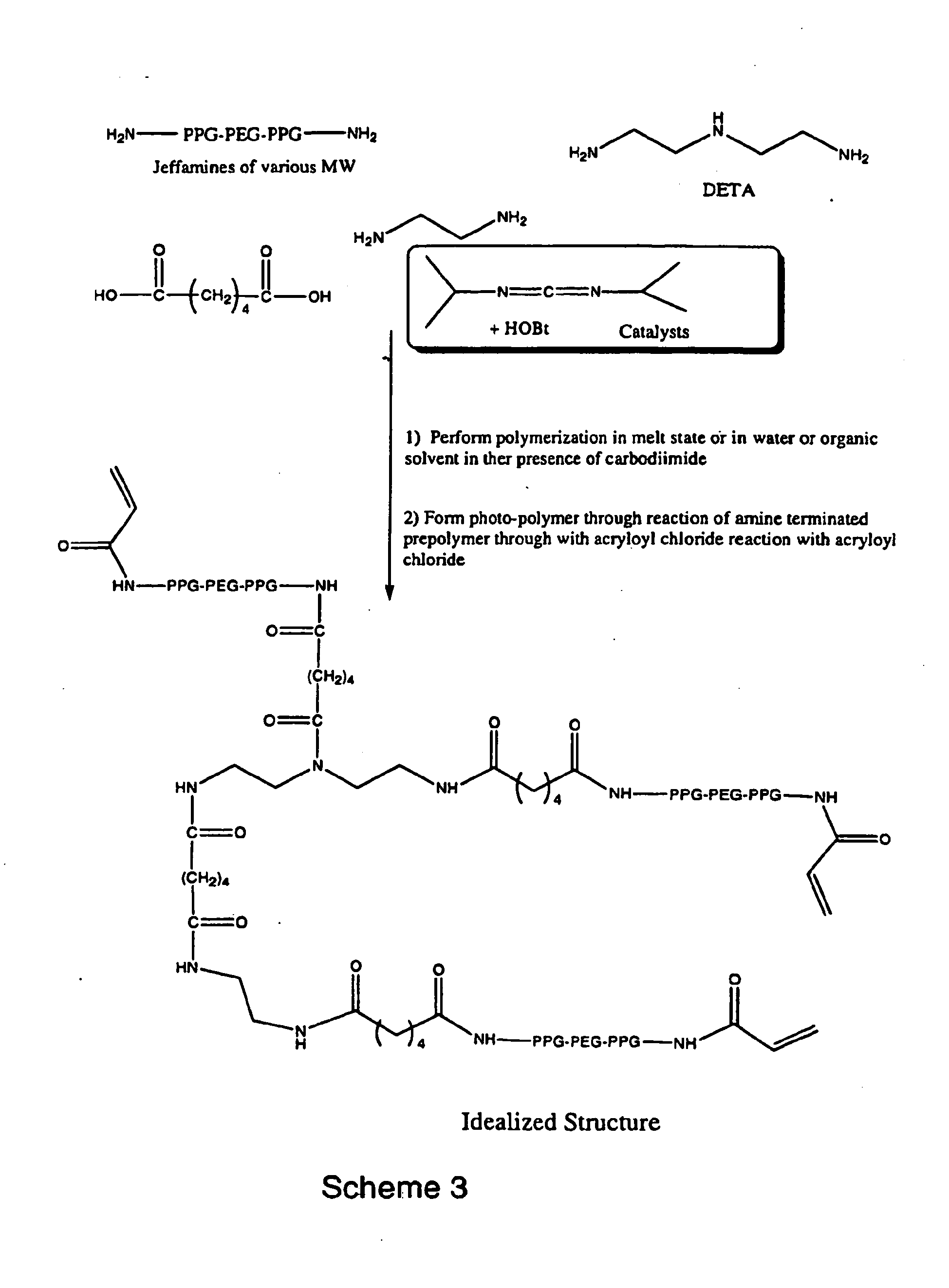

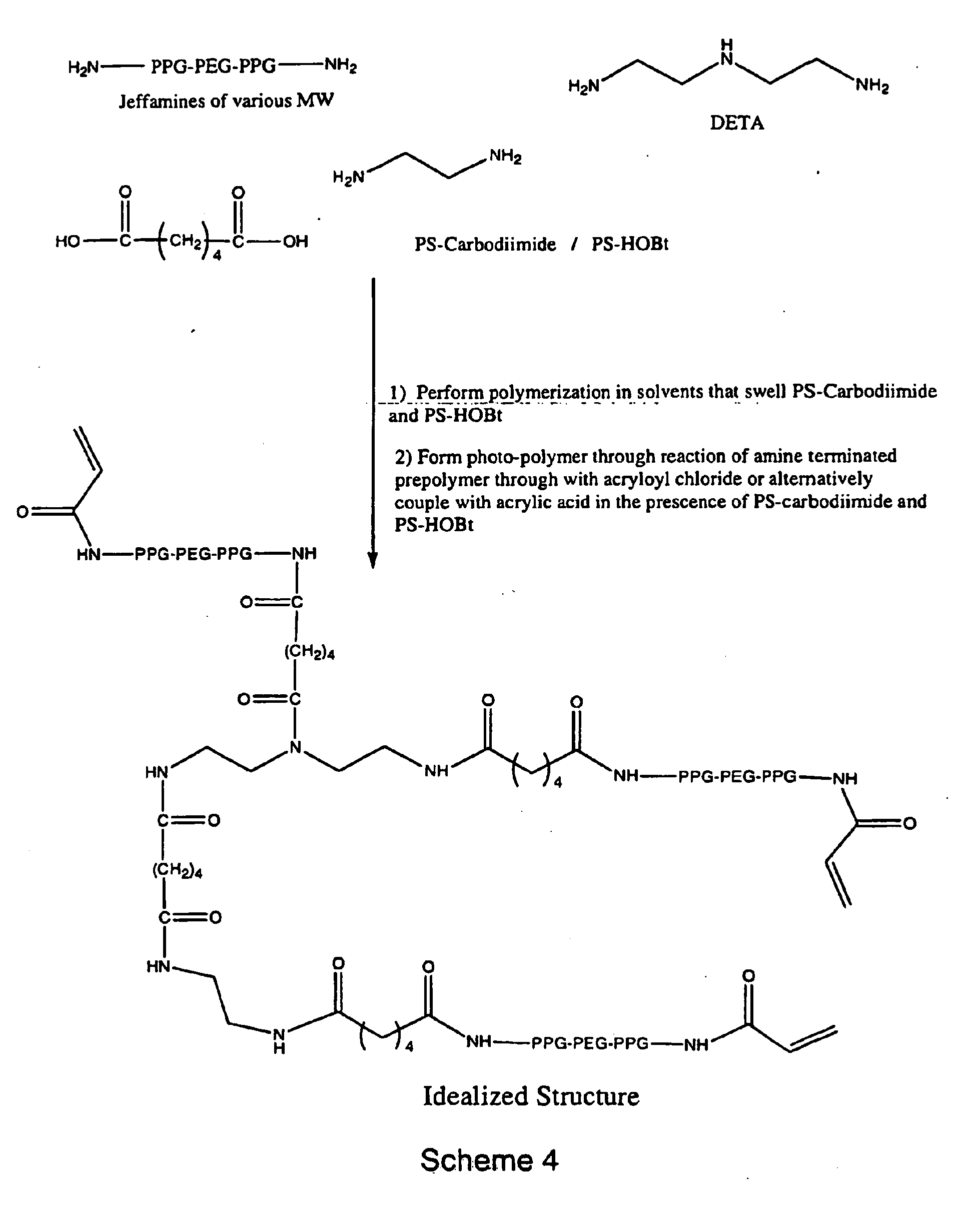

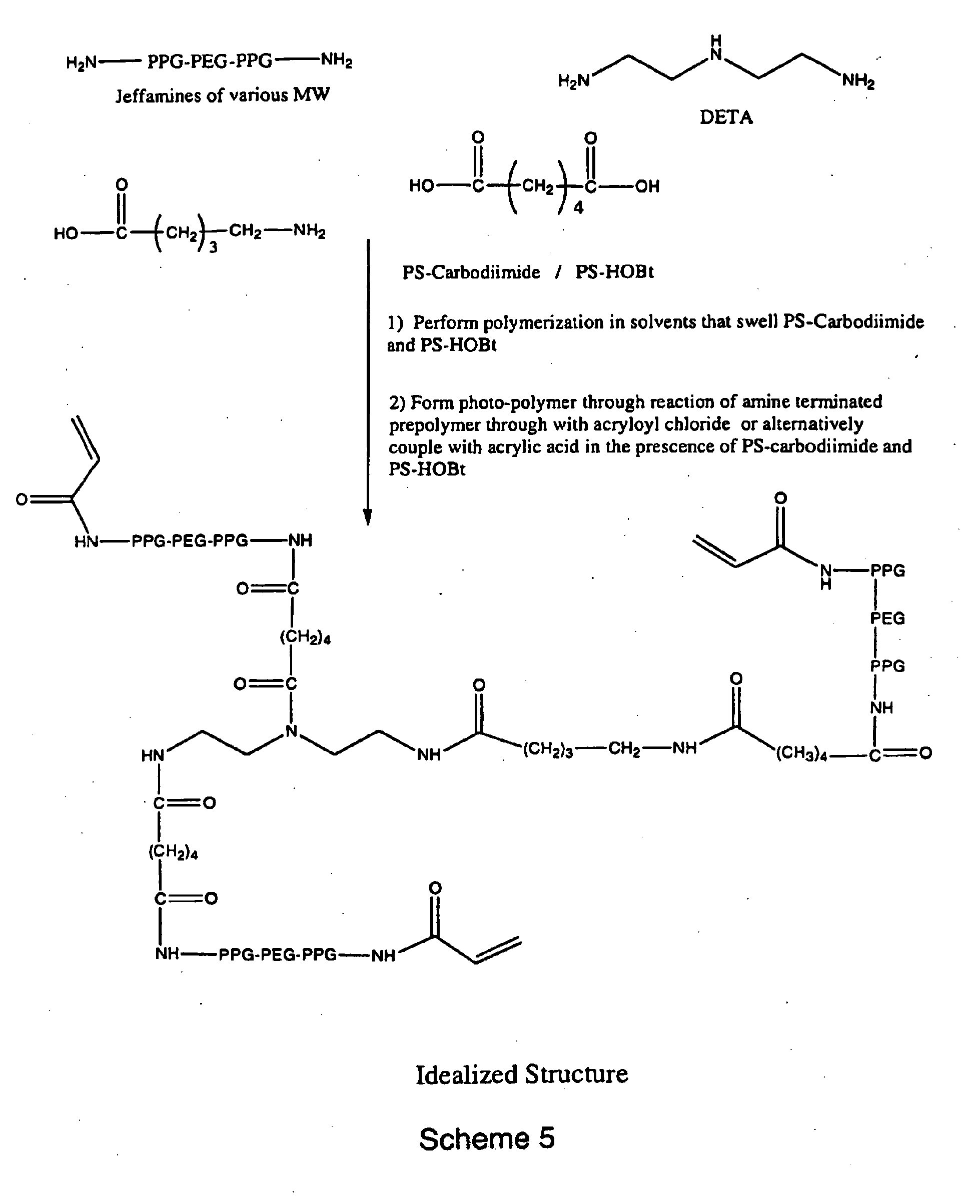

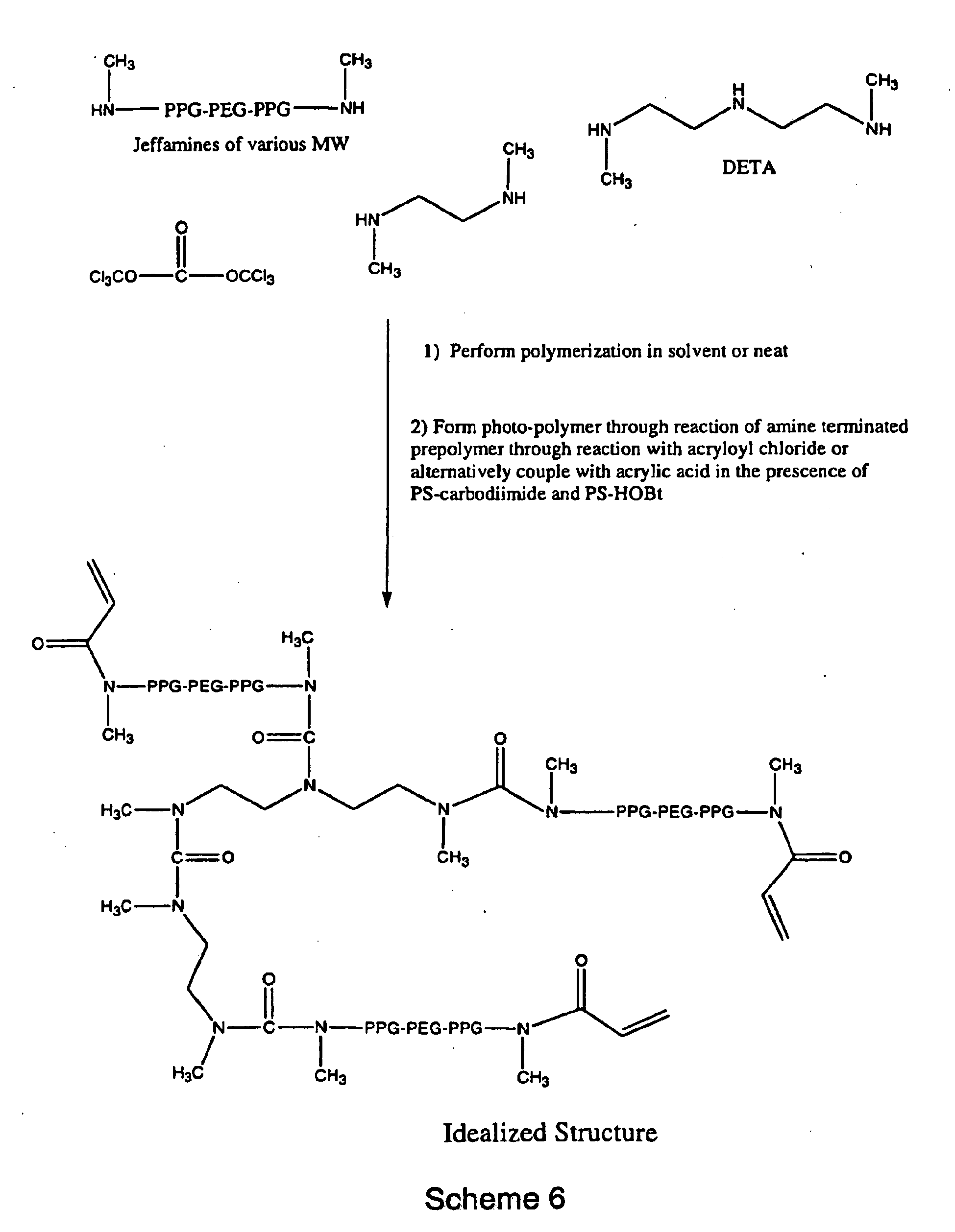

The first step reaction can be, for example, carried out in an aqueous or aqueous-organic medium or organic solvent (e.g, ethyllactate, THF, isopropanol). A suitable medium has been found to be especially a mixture of water and a readily water-soluble organic solvent, e.g. an alkanol, such as methanol, ethanol or isopropanol, a cyclic ether, such as tetrahydrofuran (THF), or a ketone, such as acetone. An especially suitable reaction medium is a mixture of water and a readily water-soluble solvent having a boiling point of from 50 to 85°C, preferably from 50 to 70°C, especially a water/tetrahydrofuran or a water/acetone mixture.

The reaction temperature in the first reaction step of the process is, for example, from -20 to 85°C, preferably from -10 to 50°C and most preferably from -5 to 30°C.

The reaction times in the first reaction step of the process may vary within wide limits, a time of approximately from 1 to 10 hours, preferably from 2 to 8 hours and most preferably 2 to 3 hours having proved practicable.

In accordance with a preferred embodiment of the invention, the stoichiometry in the reaction of the components (a), (b), (c), (d), and (e) is advantageously selected in a way such that the number of equivalents of the amino groups contained in the components (a) and (b) is greater than the number of equivalents of the carboxyl derivative groups contained in the components (c) and (d). For example, the number of equivalents of the amine groups in the components (a) and (b) is from 1 to 50, preferably from 1.1 to 20, more preferably from 1.1 to 5 and most preferably from 1.1 to 3 folds of the number of equivalents of the carboxyl derivative groups in the components (c) and (d).

It is furthermore preferred that the component (a) is used in excess in relation to the component (b) if the component (b) is preferably present.

Once the reaction of components (a) and (b) with components (c) and (d) is completed, the obtained amine-capped poly(oxyalkylene)-containing polyamide can be reacted directly with a multifunctional compound having at least one ethylenically unsaturated group and a function group coreactive with the capping amine groups of the amine-capped poly(oxyalkylene)-containing polyamide, to prepare a crosslinkable poly(oxyalkylene)-containing prepolymer of the invention. Optionally, the obtained amine-capped poly(oxyalkylene)-containing polyamide can be purified before reacting with the multifunctional compound.

The isolation and purification of the amine-capped poly(oxyalkylene)-containing polyamide obtained in the first reaction step and/or the crosslinkable poly(oxyalkylene)-containing prepolymer obtained in the second reaction step can be carried out according to known processes, for example extraction, precipitation, crystallization, re-crystallization, ultrafiltration or by chromatographic purification methods.

The prepolymers according to the invention are radiation-curable, but uncrosslinked or at least substantially uncrosslinked; nevertheless, they are stable, i.e. spontaneous crosslinking due to homopolymerization does not take place substantially. The term "radiation-curable" in reference to a prepolymer means that the prepolymer can be crosslinked or polymerized by actinic radiation, including, for example, UV radiation, ionizing radiation such gamma radiation or X-rays, microwave.

The radiation-curable prepolymers are advantageously liquid or readily meltable or water-soluble; the radiation-curable prepolymers are most preferably water-soluble. The average molecular weight of the radiation-curable prepolymers according to the invention may vary within a broad range. An average molecular weight of e.g. 1000 to 50,000 has proved to be advantageous for the radiation-curable prepolymers according to the invention.

Furthermore, the radiation-curable prepolymers according to the invention may be purified in a manner known *per se,* for example, by precipitation with an organic solvent, dialysis, or preferably by ultrafiltration. As a result of this purification procedure, the radiation-curable prepolymers according to the invention may be obtained in extremely pure form, e.g. as solvent-free liquids or melts or as concentrated aqueous solutions, which are free from or at least substantially free from reaction products such as salts, and from starting materials or other non-polymeric constituents.

The preferred purifying process for the prepolymers according to the invention, ultrafiltration, may be carried out in a manner known *per se.* Thus, it is possible to carry out ultrafiltration repeatedly, for example two to ten times. Alternatively, ultrafiltration may also be carried out continuously, until reaching the desired degree of purity. The desired degree of purity may be basically selected at any desired level.

In another aspect, the present invention relates to a polymer which is a product of crosslinking of a radiation-curable prepolymer of the invention (described-above) in the presence or preferably in the absence of one or more additional vinylic monomers. As already mentioned above, the radiation-curable prepolymers according to the invention may be crosslinked in an extremely effective and well-directed manner upon actinic irradiation, in particular by UV irradiation. Crosslinking may take place in the presence or preferably in the absence of an additional vinylic monomer. The resulting crosslinked polymers are insoluble in water.

The polymer of the invention is a hydrogel, and when fully hydrated (i.e. the water content is in equilibrium with a saline solution, typically achieved within 45 minutes for a contact lens-shaped piece of polymer) has a water content of 30-90%, preferably 45-80%, by weight. Preferably, the polymer, when fully hydrated, has an averaged contact angle of 75 degrees or less, more preferably 65 degrees or less.

An "average contact angle " refers to a contact angle of water on a surface of a material (measured by Sessile Drop method), which is obtained by averaging measurements of at least 3 individual samples (e.g., contact lenses). Average contact angles (Sessile Drop) of contact lenses can be measured using a VCA 2500 XE contact angle measurement device from AST, Inc., located in Boston, Massachusetts. This equipment is capable of measuring advancing or receding contact angles or sessile (static) contact angles. The measurements are preferably performed on fully hydrated materials.

Contact angle is a general measure of the surface hydrophilicity of a contact lens or an article (e.g., the cavity surface of a container). In particular, a low contact angle corresponds to more hydrophilic surface.

A "vinylic monomer", as used herein, refers to a low molecular weight compound that has an ethylenically unsaturated group and can be polymerized actinically or thermally. Low molecular weight typically means average molecular weights less than 700 Daltons. Exemplary ethylenically unsaturated groups include without limitation acryloyl, methacryloyl, allyl, vinyl, styrenyl, or other C=C containing groups.

In a further aspect, the present invention provides a medical device, preferably an ophthalmic device, more preferably a contact lens, which is obtained by crosslinking an above-described radiation-curable prepolymer of the invention in the presence of or preferably in the absence of one or more additional vinylic monomers.

A "medical device", as used herein, refers to a device or a part thereof having one or more surfaces that contact tissue, blood, or other bodily fluids of patients in the course of their operation or utility. Exemplary medical devices include: (1) extracorporeal devices for use in surgery such as blood oxygenators, blood pumps, blood sensors, tubing used to carry blood which contact blood which is then returned to the patient; (2) prostheses implanted in a human or animal body such as vascular grafts, stents, pacemaker leads, heart valves, that are implanted in blood vessels or in the heart; (3) devices for temporary intravascular use such as catheters, guide wires, which are placed into blood vessels or the heart for purposes of monitoring or repair; (4) artificial tissues such as artificial skin for burn patients; (5) dentifrices, dental moldings; (6) ophthalmic devices. In a preferred embodiment, medical devices are ophthalmic devices; and (7) cases or containers for storing ophthalmic devices or ophthalmic solutions.

An "ophthalmic device", as used herein, refers to a contact lens (hard or soft), an intraocular lens, a corneal onlay, other ophthalmic devices (e.g., stents, or the like) used on or about the eye or ocular vicinity.

An ophthalmic device is preferably a contact lens which is preferably characterized by having: a water content of from 30% to 90%, preferably from 45% to 75% by weight; an elongation at break of at least 25%, preferably at least 100%, more preferably at least 150%, and a modulus of from 0.05 to 2.0 Mpa, preferably from 0.2 to 1.5 MPa, more preferably from 0.3 to 1.0 MPa. Preferably, the contact lens, when fully hydrated, has an averaged contact angle of 75 degrees or less, more preferably 65 degrees or less.

In the case of photo-crosslinking, a photo-initiator is suitably added which can initiate radical crosslinking. Examples of these are familiar to the person skilled in the art, and suitable photo-initiators which may be mentioned in particular are benzoin-methylether, 1-hydroxy-cyclo-hexyl-phenylketone, Darocure^{®} 1173 or Irgacure^{®} types. Crosslinking may be commenced by actinic radiation, e.g. UV light, or by ionized radiation, e.g. gamma rays or X-rays.

Photo-crosslinking may also be carried out without adding a solvent, e.g. if the radiation-curable prepolymer is a liquid or readily meltable prepolymer, or it takes place in a suitable solvent. Suitable solvents are basically all solvents that dissolve the radiation-curable prepolymers according to the invention and optionally the additional vinylic monomers, e.g. water, alcohols such as lower alkanols, e.g. ethanol or methanol, furthermore carboxylic acid amides, such as dimethyl-formamide, or dimethyl sulphoxide, and likewise mixtures of suitable solvents, e.g. mixtures of water with an alcohol, such as a water/ethanol or a water/methanol mixture.

Photo-crosslinking is preferably effected whilst solvent-free or essentially solvent-free or directly from an aqueous solution of the prepolymers according to the invention, which may be obtained as the result of the preferred purification step, ultrafiltration, optionally after adding additional vinylic monomers. For example, photo-crosslinking may be undertaken from a 15 to 90% aqueous solution.

The process for the production of the crosslinked polymers according to the invention comprises radiation-crosslinking a radiation-curable prepolymer of the invention and optionally further copolymerizable vinylic monomers, especially in substantially pure form, i.e. for example after ultrafiltration once or several times whilst solvent-free or substantially solvent-free or in solution, especially in aqueous solution, in the presence or preferably in the absence of an additional vinylic monomer, preferably using a photoinitiator.

Water content and mechanical properties of radiation cured prepolymers can be adjusted by adjusing relative ratios of components used in the preparation of the prepolymer. For example, prepolymers that contain a higher ratio of crosslinkable groups are expected to yield lenses with higher modulus. Formulations that are enriched with hydrophobic components (e.g. long chain diacid chloride versus short chain diacid chloride) are expected to result in hydrogels with increased mechanical strength and lower water content. Mechanical strength often increases with molecular weight. Therefore, formulations that contain higher molecular weight Jeffamines are likely to result hydrogels with improved elastic properties.

The vinylic monomer which may be additionally used for photo-crosslinking in accordance with the invention may be hydrophilic, hydrophobic or may be a mixture of a hydrophobic and a hydrophilic vinylic monomer. Suitable vinylic monomers include especially those normally used for the manufacture of contact lenses.

A "vinylic monomer", as used herein, refers to a low molecular weight compound that has an ethylenically unsaturated group and can be polymerized actinically or thermally. Low molecular weight typically means average molecular weights less than 700 Daltons. Exemplary ethylenically unsaturated groups include without limitation acryloyl, methacryloyl, allyl, vinyl, styrenyl, or other C=C containing groups.

A "hydrophilic vinylic monomer" refers to a monomer which as a homopolymer typically yields a polymer that is water-soluble or can absorb at least 10 percent by weight water. A "hydrophobic vinylic monomer" refers to a monomer which as a homopolymer typically yields a polymer that is insoluble in water and can absorb less than 10 percent by weight water.

It is preferable to use a hydrophobic vinylic monomer, or a mixture of a hydrophobic vinylic monomer with a hydrophilic vinylic monomer, whereby this mixture contains at least 50 percent by weight of a hydrophobic vinyl monomer. In this way, the mechanical properties of the polymer may be improved without the water content dropping substantially. Both conventional hydrophobic vinylic monomers and conventional hydrophilic vinylic monomers are suitable for copolymerization with the radiation-curable prepolymers according to the invention.

Suitable hydrophobic vinylic monomers include, without limitation, C₁-C₁₈-alkylacrylates and -methacrylates, C₃-C₁₈ alkylacrylamides and -methacrylamides, acrylonitrile, methacrylonitrile, vinyl-C₁-C₁₈-alkanoates, C₂-C₁₈-alkenes, C₂-C₁₈-halo-alkenes, styrene, C₁-C₆-alkylstyrene, vinylalkylethers in which the alkyl moiety has 1 to 6 carbon atoms, C₂-C₁₀-perfluoralkyl-acrylates and -methacrylates or correspondingly partially fluorinated acrylates and methacrylates, C₃-C₁₂-perfluoralkyl-ethyl-thiocarbonylaminoethyl-acrylates and methacrylates, acryloxy-and-methacryloxy-alkylsiloxanes, N-vinylcarbazole, C₁-C₁₂-alkylesters of maleic acid, fumaric acid, itaconic acid, mesaconic acid and the like. Preference is given e.g. to C₁-C₄-alkylesters of vinylically unsaturated carboxylic acids with 3 to 5 carbon atoms or vinylesters of carboxylic acids with up to 5 carbon atoms.

Examples of suitable hydrophobic vinylic monomers include methylacrylate, ethyl-acrylate, propylacrylate, isopropylacrylate, cyclohexylacrylate, 2-ethylhexylacrylate, methylmethacrylate, ethylmethacrylate, propylmethacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyl toluene, vinyl ethyl ether, perfluorohexylethyl-thio-carbonyl-aminoethyl-methacrylate, isobornyl methacrylate, trifluoroethyl methacrylate, hexafluoro-isopropyl methacrylate, hexafluorobutyl methacrylate, tris-trimethylsilyloxy-silyl-propyl methacrylate, 3-methacryloxypropyl-pentamethyl-disiloxane and bis(methacryloxypropyl)-tetramethyl-disiloxane.

Suitable hydrophilic vinylic monomers include, without limitation, hydroxy-substituted lower alkylacrylates and -methacrylates, acrylamide, methacrylamide, lower alkyl-acrylamides and -methacrylamides, ethoxylated acrylates and methacrylates, hydroxy-substituted lower alkyl-acrylamides and -methacrylamides, hydroxy-substituted lower alkylvinyl-ethers, sodium ethylene sulphonate, sodium styrene sulphonate, 2-acrylamido-2-methyl-propane-sulphonic acid, N-vinyl pyrrole, N-vinyl succinimide, N-vinyl pyrrolidone, 2- or 4-vinyl pyridine, acrylic acid, methacrylic acid, amino- (whereby the term "amino" also includes quaternary ammonium), mono-lower-alkylamino- or di-lower-alkylamino-lower-alkyl-acrylates and - methacrylates, allyl alcohol. Preference is given e.g. to hydroxy-substituted C₂-C₄-alkyl(meth)acrylates, five- to seven-membered N-vinyl-lactams, N,N-di-C₁-C₄-alkyl-methacrylamides and vinylically unsaturated carboxylic acids with a total of 3 to 5 carbon atoms.

Examples of suitable hydrophilic vinylic monomers include hydroxyethyl methacrylate, hydroxyethyl acrylate, acrylamide, methacrylamide, dimethylacrylamide, allyl alcohol, vinyl pyridine, vinyl pyrrolidone, glycerol methacrylate, N-(1,1-dimethyl-3-oxobutyl)acrylamide. Preferred hydrophobic vinylic monomers are methyl methacrylate, ethylmathacrylate and vinyl acetate. It is understood that acetate groups may be hydrolyzed during autoclave and such hydrolysis process may impart hydrophilic character once converted to PVA units. Preferred hydrophilic vinylic monomers are 2-hydroxyethyl methacrylate, N-vinyl pyrrolidone, N,N-dimethylacrylamide and acrylamide.

The processing according to the invention for molding radiation-curable prepolymers into ophthalmic articles, especially contact lenses, may take place in a manner known *per se,* for example, photo-crosslinking of the radiation-curable prepolymers according to the invention in an appropriate contact lens mold. Further examples of molded articles according to the invention, apart from contact lenses, are e.g. intra-ocular lenses or eye dressings, furthermore biomedical articles which may be used in surgery, such as heart valves, artificial arteries, also films or membranes, e.g. membranes for diffusion control, photo-structurable films for data storage, or photo resist materials, e.g. membranes or molded articles for etch resist printing or screen resist printing.

In another further aspect, the present invention provides a method for producing an ophthalmic device, the method comprising the steps of: a) introducing an above-described radiation-curable prepolymer of the invention, which is liquid or readily meltable at room temperature, and which is essentially free from solvents, into a mold, in the presence or preferably in the absence of one or more additional vinylic monomers, and optionally in the presence of a photo-initiator, b) crosslinking by actinic radiation the radiation-curable prepolymer, and c) opening the mold so that the device can be removed from the mold.

In a still further aspect, the present invention provides a method for producing an ophthalmic device, the method comprising the steps of: a) introducing an aqueous solution of an above-described radiation-curable prepolymer of the invention, in the presence or preferably in the absence of one or more additional vinylic monomers, and optionally in the presence of a photo-initiator, into a mold; b) crosslinking by actinic radiation the radiation-curable prepolymer, and c) opening the mold so that the device can be removed from the mold.

Preferably the viscosity of the aqueous formulation is 15 to 100000 cps, more preferably 50-2000 cps, at room temperature.

The radiation-curable prepolymers according to the invention may be introduced into a mold by methods known *per se,* especially conventional dispensing, e.g. dropwise addition. If vinylic monomers are present, the monomers employed are those mentioned above, in desired quantities. Any vinylic monomers that are optionally present are advantageously first of all mixed with the prepolymer according to the invention and then introduced into the mold.

Appropriate molds are made, for example, from polypropylene. Suitable materials for reusable moulds are e.g. quartz, sapphire glass metals or combinations thereof.

If the molded articles to be produced are contact lenses, these may be produced in a manner known *per se,* e.g. in a conventional "spin-casting mold", as described for example in U.S. Patent No. 3,408,429, or by the so-called full mold process in a static form, as described e.g. in U.S. Patent Nos. 4,347,198, 5,508,317, 5,583,463, 5,789,464, and 5,849,810.

Crosslinking may be initiated in the mold e.g. by means of actinic radiation, such as UV irradiation, ionizing radiation (e.g., gamma or X-ray irradiation).

As already mentioned, photo-crosslinking is advantageously carried out in the presence of a photo-initiator which can initiate radical crosslinking. The photo-initiator is advantageously added to the prepolymers according to the invention prior to introducing them into the mold, preferably by mixing the polymers and the photo-initiator together. The amount of photo-initiator may be selected from a wide range, whereby an amount of up to 0.05 g/g polymer and especially up to 0.003 g/g polymer has proved favorable.

What is notable is that the crosslinking according to the invention may be effected in a very short time, e.g. in ≤ 60 minutes, advantageously in ≤ 20 minutes, preferably in ≤ 10 minutes, most preferably in ≤ 5 minutes, particularly preferably in 1 to 60 seconds and most particularly in 1 to 30 seconds.

What is also notable is that the contact lenses according to the invention can be produced from a radiation-curable prepolymer in a very simple and efficient way compared with the prior art. This is based on many factors. On the one hand, the starting materials may be acquired or produced inexpensively. Secondly, there is the advantage that the prepolymers are surprisingly stable, so that they may undergo a high degree of purification. Therefore, for crosslinking, a polymer may be used which requires practically no more subsequent purification, such as in particular complicated extraction of unpolymerized constituents. Furthermore, crosslinking may take place solvent-free or in aqueous solution, so that a subsequent solvent exchange or the hydration step is not necessary. Finally, photopolymerization is effected within a short period, so that from this point of view also the production process for the contact lenses according to the invention may be set up in an extremely economic way.

Opening of the mold so that the molded article can be removed from the mold may take place in a manner known *per se.*

If the molded article produced according to the invention is a contact lens which is produced solvent-free from an already purified prepolymer according to the invention, then after removal of the molded article, it is not normally necessary to follow up with purification steps such as extraction. This is because the prepolymers employed do not contain any undesired constituents of low molecular weight; consequently, the crosslinked product is also free or substantially free from such constituents and subsequent extraction can be dispensed with. Accordingly, the contact lens can be directly transformed in the usual way, by hydration, into a ready-to-use contact lens. Appropriate embodiments of hydration are known to the person skilled in the art, whereby ready-to-use contact lenses with very varied water content may be obtained. The contact lens is expanded, for example, in water, in an aqueous salt solution, especially an aqueous salt solution having an osmolarity of 200 to 450 milli-osmole in 1000 ml (unit: mOsm/l), preferably 250 to 350 mOsm/l and especially 300 mOsm/l, or in a mixture of water or an aqueous salt solution with a physiologically compatible polar organic solvent, e.g. glycerol. Preference is given to expansions of the article in water or in aqueous salt solutions.

The aqueous salt solutions used for hydration are advantageously solutions of physiologically compatible salts, such as buffer salts conventionally used in the field of contact lens care, e.g. phosphate salts, or isotonizing agents conventionally used in the field of contact lens care, such as in particular alkali halides, e.g. sodium chloride, or solutions of mixtures thereof. One example of an especially suitable salt solution is an artificial,

preferably buffered lachrymal fluid, which is adapted to natural lachrymal fluid as regards pH value and osmolarity, e.g. an unbuffered or preferably buffered common salt solution, for example buffered by phosphate buffer, whose osmolarity and pH value correspond to the osmolarity and pH value of human lachrymal fluid.

The above-defined hydration fluids are preferably pure, i.e. free or substantially free from undesired constituents. This is most preferably pure water or an artificial lachrymal fluid as described above.

If the molded article produced according to the invention is a contact lens which is produced from an aqueous solution of an already purified prepolymer according to the invention, then the crosslinked product also does not contain any troublesome impurities. It is therefore not necessary to carry out subsequent extraction. Since crosslinking is carried out in an essentially aqueous solution, it is additionally unnecessary to carry out subsequent hydration. The contact lenses obtainable by this process are therefore notable, according to an advantageous embodiment, for the fact that they are suitable for their intended usage without extraction. By intended usage is understood, in this context, that the contact lenses can be used in the human eye.

The contact lenses obtained according to the invention have a wide range of unusual and extremely advantageous properties. One of these properties which may be named is for example its excellent compatibility with the human cornea, which is based on a well-balanced relationship between water content, oxygen permeability and good mechanical properties including elasticity and durability. Moreover, the contact lenses according to the invention have high resistance of shape. No changes in shape can be detected even after autoclaving e.g. at about 120°C. The contact lenses obtained according to the invention can also have a water content of from 30% to 90%, an elongation at break of at least 150%, and a modulus of from 0.3 to 1.0 Mpa, an enhanced thermal stability and a decreased susceptibility to autoclave-induced change in modulus.

The photo-curable prepolymers of the invention can also find uses as binder polymers in inks for making colored contact lenses. The present invention is also related to a water-based ink comprising a photocurable prepolymer of the invention and a colorant.

A "binder polymer" refers to a crosslinkable polymer that can be crosslinked by a crosslinker or upon initiation by a chemical or physical means (e.g., moisture, heating, UV irradiation) to trap or bind colorants onto or into a contact lens such as that term is known in the art.

A "colored contact lens" refers to a contact lens (hard or soft) having a color image printed thereon. A color image can be a cosmetic pattern, for example, iris-like patterns, Wild Eye^{™} patterns, made-to-order (MTO) patterns; an inversion mark that allows a user to handle and insert easily a contact lens; a toric rotation mark, or contact lenses stock keeping units (SKUs), for example, either in forms of numbers or as bar codes. A color image can be a single color image or a multi-color image. A color image is preferably a digital image, but it can also be an analog image.

A colored contact lens can be produced by printing a high-quality color image directly on a contact lens by pad printing and/or inkjet printing techniques or by using a print-on-mold process described in U.S. Patent No. 5,034,166 to Rawlings et al. A contact lens can be clear before it is printed upon. Alternatively, a contact lens can be tinted prior to being printed upon. That is, a colorant may have been added to that lens using methods that are well known in the art before that lens is printed upon using any printing methods.

A "colored coat" refers to a coating on an object and having a color image printed therein.

"Colorant" means either a dye or a pigment or a mixture thereof that is used to print a color image on an article.

A "pigment" means a powdered substance that is suspended in a liquid in which it is insoluble. Pigments are used to impart color. Pigments, in general, are more opaque than dyes. They can be conventional or non-pearlescent pigments or pearlescent pigments.

"Dye" means a substance that is soluble in a solvent and that is used to impart color. Dyes are typically translucent and absorb but do not scatter light. Dyes can cover both optical regions of contact lenses and non-optical regions of contact lenses. Nearly any dye can be used in the present invention, so long as it can be used in an apparatus as described below. These dyes include fluorescent dyes, phosphorescent dyes, and conventional dyes.

The ink used in the invention can also include a thermal initiator or a photoinitiator. The identity of the initiator is not critical and is not part of the present invention. One of ordinary skill in the art will readily recognize the kind and amount of an initiator (photoinitiator or thermoinitiator) that will yield good results in the present invention. Any suitable photoinitiators can be used in the ink formulations. The photoinitiator presently preferred by the inventors is Irgacure 2959, Irgacure 907, Irgacure 500, Irgacure 651, Irgacure 369, Darocure 1173, and Darocure 4265. In addition, combinations of initiators can be used.

The inks used in the invention can optionally (but preferably do not) include a crosslinker. A "cross linker" refers to a compound comprising two or more functional groups, as they are known in the art. A cross linker molecule can be used to crosslink two or more monomers or polymer molecules. Cross linkers are known in the art and are disclosed in various US Patents. Such crosslinkers may be added to the ink in order to match the physical properties (e.g. modulus) of the cured ink to that of the cured lens to which it is applied.

The inks used in the invention can optionally include a surfactant. The term "surfactant," as used herein, refers to a surface-active compound as that term is known in the art, such as, for example, Surfynol 420 and Surfynol 104 (from Air Products), Pluronic F108 and F38 (from BASF). A surfactant can have one ore more of the following functions: to adjust the surface tension of an ink, to defoam, to improve the separation of pigment particles, and to prevent settling or clumping of pigment particles.

The inks used in the invention can optionally (but preferably do not) include an antimicrobial compound. Some suitable antimicrobial materials include polyquaternary ammonium compounds, such as those described in U.S. Patent No. 3,931,319 to Green et al*.* (e.g. "POLYQUAT"). Other antimicrobial or antibacterials that can be utilized in the present invention are peptides, other polyquats, mucin, mucin mimics, glycopeptides, glycoproteins, silk proteins, cellulose, dextran or other anti-microbial or anti-bacterial entitles.

The ink used in the invention can further comprise one or more vinylic monomers or macromers, preferably at least one functionalizing vinylic monomer containing at least one functional group selected from the group consisting of hydroxyl group -OH, amino group -NHR (wherein R is hydrogen or C₁ to C₈ alkyl), carboxylic group -COOH, epoxy group, amide group -CONHR, and combinations thereof.

The ink used in the invention can further comprise one or more components selected from the group consisting of humectants, antioxidant agents, anti-coagulating agents, and other additives known in the art.

The ink used in the present invention comprises water as a solvent in an amount sufficient to solubilize the binder polymer and achieve a viscosity above 50 centipoise.

The inks may also (but preferably do not) comprise a solvent in addition to water. The solvent can be any appropriate organic or inorganic solvent. Any known suitable solvents can be used, so long as they do not precipitate the binder polymer, or adversely affect the stability of the colorant. Exemplary solvents include, without limitation, acetone, alcohols (e.g., methanol, ethanol, propanol, isopropanol), glycols, ketones, esters, cyclopentanone, cyclohexanone, tetrahydrofuran, acetone, methyl-2-pyrrolidone, dimethyl formamide, acetophenone, methylene dichloride, dimethyl sulfoxide, gamma-butyrolactone, ethylene dichloride, isophorone, o-dichlorobenzene, tetrahydrofuran, diacetone alcohol, methyl ethyl ketone, acetone, 2-nitropropane, ethylene glycol monoethyl ether, propylene carbonate, cyclohexanol, chloroform, trichloroethylene, 1,4-dioxane, ethyl acetate, ethylene glycol monobutyl ether, chlorobenzene, nitroethane, ethylene glycol monomethyl ether, butyl acetate, 1-butanol, methyl isobutyl ketone, nitromethane, toluene, ethanol, diethylene glycol, benzene, diethyl ether, ethanolamine, carbon tetrachloride, propylene glycol, hexane, ethylene glycol, and formamide.

The viscosity of an ink solution can be as high as about 5,000 centipoise (cps), but is preferably between 1000 to 3500 cps. The viscosity is preferably above 100 cps; more preferably above 200 cps. Most preferably, the viscosity of the ink is between 250 and 350 cps. If the viscosity is expressed in terms of natural log viscosity, the most preferred range is between 5.5 and 5.9 log (cps).

The proper concentration of binder polymer and the colorant in water to achieve the preferred ink viscosity can be determined, for example, by a design of experiment by modeling the design as a quadratic D-optimal mixture design. This can be done, for example, with a commercial software program, such as Design Expert (v. 6.0.0, from Stat-Ease of Minneapolis, MN), according to a similar procedure described in U.S. Patent Application Publication No. 2004/0044099A1.

An ink used in the invention comprises: water in an amount of from 30% to 98% by weight, preferably from 50% to 93% by weight; a water-soluble and actinically-curable binder polymer in an amount of from 2% to 40% by weight, preferably 6% to 30%; and a colorant in an amount of from 0.5% to 30% by weight, preferably 1.5% to 20%. Preferably, the ink further comprises a photoinitiator in an amount of from 0.05% to 2.0%.

All the above-mentioned advantages apply not only to contact lenses, but also to other molded articles according to the invention.

The previous disclosure will enable one having ordinary skill in the art to practice the invention. In order to better enable the reader to understand specific embodiments and the advantages thereof, reference to the following non-limiting examples is suggested. However, the following examples should not be read to limit the scope of the invention.

### Example 1: Synthesis of Poly(alkyleneoxide)-containina Polyamide

A mixture consisting of 61.87 grams of O,O'-bis(2-aminopropyl) polypropylene glycol-block-poly(ethylene glycol-block-polypropylene glycol 800 ("Jeffamine-800), 19.39 grams of O,O'-bis-(2-aminopropyl) polypropylene glycol-block-poly(ethylene glycol-block-polypropylene glycol 1900 ("Jeffamine-1900), 3.738 grams of diethylenetriamine (DETA), 9.89 grams of N,N'-bis(2-hydroxy ethyl)ethylenediamine (BHEEDA), 410 grams of tetrahydrofuran (THF), 800 mL of water, and 200 mL of 20 percent (wt /vol) of Na₂CO₃ in water is stirred at about 600 RPM at about 21°C. A few drops of this mixture are analyzed by FT-IR. The IR sample is prepared by spreading a few drops of the reaction mixture on a NaCl disk and allowing the resulting film to dry for about 15 minutes at about 60°C. About 31.34 grams of adipoyl chloride dissolved in about 35 grams of THF is added slowly into the reaction mixture over about 7 minutes. After the addition of adipoyl chloride solution is completed, the temperature of the reaction vessel has been increased to about 28°C. About 15 minutes after the addition of adipoyl chloride is completed, a few drops of the reaction mixture were removed and analyzed by FT-IR. The IR sample is prepared as described above. The FT-IR spectrum shows an absorption characteristic of amide linkages at about 1645 cm⁻¹ after the adipoyl chloride addition.

### Ethylenically functionalization of Poly(alkyleneoxide)-containing polyamide)

100-mL of 20% Na₂CO₃ solution is added to the above resultant reaction mixture and immediately followed by adding about 3.0 grams of acryloyl chloride into the reaction mixture. After about 30 minutes, an additional 50 mL of 20% Na₂CO₃ solution is added to the reaction mixture quickly followed by the addition of about 3.0 grams of acryloyl chloride. After about 30 minutes, a third dose of 50 mL of 20% Na₂CO₃ solution is added to the reaction mixture quickly followed by the addition of about 3.0 grams of acryloyl chloride. Approximately 60 mg of 4-hydroxy-2,2,6,6,-tetramethyl-1-piperidinyloxy, free radical) (CAS# 2226-96-2) (4-hydroxy TEMPO) is then added to the mixture, which is then concentrated by rotary evaporation (bath temperature - 55°C) until THF is no longer present. The sample is filtered through a course fritted glass filter and then purified by ultrafiltration. A tangential ultrafiltration membrane cartridge with a 3 kilo dalton cut off is employed. Ultrafiltration is allowed to proceed until the conductivity of the permeate is about 54 microsiemens/cm. The sample is then concentrated by rotary evaporation at about 55 °C until the percentage of water in the solution is about 44 percent. Several drops of the concentrated prepolymer solution are spreaded on a NaCl disk and the resulting film is allowed to dry at about 70 °C for about 15 minutes before being analyzed by FT-IR. GPC analysis shows that the obtained prepolymer has M_{w} = 3650, Mₙ = 2670, M_{w}/Mₙ = 1.37.

### Example 2: Synthesis of Poly(alkyleneoxide)-containing polyamide

A mixture consisting of 60.29 grams of O,O'-bis(2-aminopropyl) polypropylene glycol-block-poly(ethylene glycol-block-polypropylene glycol 800 ("Jeffamine-800), 35.79 grams of O,O'-bis-(2-aminopropyl) polypropylene glycol-block-poly(ethylene glycol-block-polypropylene glycol 1900 ("Jeffamine-1900), 0.2075 grams of diethylenetriamine (DETA), 1.1039 grams of 2-methylpentamethylenediamine, 500 mL grams of tetrahydrofuran (THF), 400 mL of water, and 200 mL of 20 percent (wt /vol) of Na₂CO₃ in water is stirred at about 800 RPM at about 20°C. About 18.59 grams of sebacyl chloride dissolved in about 30 mL of THF is added the reaction mixture over about 5 minutes.

### Ethylenically functionalization of Poly(alkyleneoxide)-containing polyamide

About 15 minutes after the-addition of-adipoyl chloride is completed, 50 mL of 20% (wt./vol) of sodium carbonate is added to the reaction mixture quickly followed by the addition of 5 grams of acryloyl chloride. The addition of 20% sodium carbonate followed by acryloyl chloride is repeated two more times. The resultant solution is stabilized with about 60 mg of 4-Hydroxy-TEMPO, vacuum filtered to remove precipitated NaCl and then concentrated by rotary evaporation (bath temp 55°C) until THF is no longer present. The aqueous polymer solution is then further purified by ultrafiltration (Millipore Prep Scale tangential flow regenerated cellulose, TTF, 2.5 ft² membrane. The stainless steel ultrafiltration unit is equipped with an electric pump and pressurized to 5 bar to facilitate liquid flow. Ultrafiltration is continued until the conductivity of the permeate dropped from 4.3 milli-siemens/cm to about 28 micro-siemens/cm. The sample is then concentrated by rotary evaporation until the polymer solution contained about 48% water. The resulting polymer solution is then adjusted to 50% water. FT-IR analysis: A few drops of this solution are spread on an NaCl disk and the resulting film is dried at 70°C for about 15 minutes. Select FT-IR peaks: 3312, 2868, 1667, 1648, 1540, 1455, 1350, 1302, 1250, 1110, 950, 853 cm⁻¹.
GPC analysis: M_{w} = 9510, Mₙ = 4790, M_{w}/Mₙ = 1.98

### Example 3: Synthesis of Poly(alkyleneoxide)-containing Polyamide

A mixture consisting of 60.29 grams of O,O'-bis(2-aminopropyl) polypropylene glycol-block-poly(ethylene glycol-block-polypropylene glycol 800 ("Jeffamine-800"), 35.79 grams of O,O'-bis-(2-aminopropyl) polypropylene glycol-block-poly(ethylene glycol-block-polypropylene glycol 1900 ("Jeffamine-1900), 1.9475 grams of diethylenetriamine (DETA), 5.4900 grams of 2-methylpentamethylenediamine, 400 mL of water, 200 mL of 20% sodium carbonate, 400 mL of and methylene chloride is stirred at about 800 RPM at about 6°C. About 15.7 grams of sebacyl chloride dissolved in about 35 mL of methylene chloride is added into the reaction mixture over about 3 minutes. Adding about 1500 mL of THF, 1 liter of isopropanol and 200 mL of water breaks up the resulting suspension. Approximately 5 grams of acryloyl chloride and 50 mL of 20% sodium carbonate are added to the reaction mixture. The acryloyl chloride and 20% sodium carbonate additions are repeated two more times and then the reaction mixture is stabilized with 4-HydroxyTEMPO. The reaction mixture is then filtered and then concentrated by rotary evaporation (bath temp - 55°C) until organic solvents are removed. The resulting aqueous polymer solution is further purified by ultrafiltration. A stainless steel ultrafiltration (UF)unit equipped with an electric pump and a 3 kilodalton regenerated cellulose membrane (2.5 ft2, TTF, tangential flow cartridge) is used in this operation. The UF unit is pressurized to about 5 bar to facilitate liquid flow. The UF process is continued until the conductivity of the permeate is decreased to about 4.96 micro-siemans/cm. The polymer solution is concentrated by ultrafiltration and then by rotary evaporation (bath temp 55°C) until the water content of the polymer solution is about 55%. Approximately 82 grams of a 45 percent polymer solution in water are obtained. A sample is prepared for FT-IR analysis by spreading a few drops of the polymer solution on a NaCl disk and drying the resulting film at 70°C for several minutes. Selected FT-IR peaks: 3305, 2866, 1674, 1644, 1539, 1456, 1349, 1292, 1251, 1108, 949, 862 cm⁻¹. GPC analysis: M_{w} = 14100, Mₙ= 8050, M_{w}/Mₙ = 1.75

### Example 4: Preparation of Contact Lenses

Clear hydrogel contact lenses are prepared by filling poly(propylene) molds with aqueous solutions containing an actinically-crosslinkable prepolymer prepared in Examples 1-3, photo-initiator (Irgacure 2959) and irradiating the filled molds with UV light near 300 nm (Grobel Lamp). The composition of each lens formulation is shown in Table 1, in which all of the percentages are by weight. The Grobel lamp produces UV light near 300 nm. The Grobel unit is equipped with a 305 nm filter designed to produce 50% transmission at 305 nm when the filter thickness is 2mm.

**Table 1**

| Lens Formulations | Prepolymer (%) | Irgacure 2959 (%) | Water (%) |
|---|---|---|---|
| **I** | 44.65¹ | 0.076 | 55.27 |
| II | 45.19² | 0.096 | 54.71 |
| III | 38.84³ | 0.036 | 61.12 |

| | | | |
|---|---|---|---|
| * solid content. 1. Prepolymer prepared in Example 1. 2. Prepolymer prepared in Example 2. 3. Prepolymer prepared in Example 3. | | | |

Curing conditions are listed in Table 2. Clear hydrogel lenses are obtained and placed in glass vials containing borate buffered saline. The vials are sealed and the thermal stability / autoclave stability of the lenses is evaluated as described below.

**Table 2**

| | Formulation I | Formulation II^{*} | Formulation III |
|---|---|---|---|
| UV Exposure (mW/cm2) | 2.3 | 2.2 | 2.2 |
| Exposure Time (seconds) | 30 | 15 | 10-90 |
| Lens Water Content (percent) | 92-93 | 92 | Too Floppy |

| | | | |
|---|---|---|---|
| ^{*} Having a viscosity of about 424 cps at 25°C. | | | |

### Thermal Stability Testing

The thermal stability of lenses is evaluated by measuring diameters of lenses that are subjected to autoclave at about 121°C for zero minutes (non-autoclave as control), 45 minutes (autoclave) and 90 minutes (double autoclave). Lens diameters are measured at room temperature in borate buffered saline using a tool makers microscope. Diameter data and water content data is summarized in Tables 3 (lens formulation I) and 4 (lens formulation II). Water content (% by weight) in a Lens is measured gravimetrically using a Sartorius Moisture Analyzer.

**Table 3**

| Lens number | Lens Diameter (mm) | | |
|---|---|---|---|
| | Non-Sterilized | Single-Sterilized | Double-Sterilized |
| 1 | 21.125 | 21.045 | 21.198 |
| 2 | 21.325 | 21.247 | 21.130 |
| 3 | 21.199 | 21.248 | 21.177 |
| AVE | 21.216 | 21.180 | 21.168 |
| (Std dev) | (0.010) | (0.117) | (0.035) |
| AVE Water content | 90.78% by weight | 93.01% by weight | 92.95% by weight |

**Table 4**

| Lens number | Lens Dimater (mm) | | |
|---|---|---|---|
| | Non-Sterilized | Single-Sterilized | Double-Sterilized |
| 1 | 20.689 | 20.457 | 20.632 |
| 2 | 20.389 | 20.719 | 20.363 |
| 3 | 20.390 | 20.670 | 20.405 |
| 4 | 20.369 | 20.457 | 20.574 |
| 5 | 20.356 | 19.633 | 20.354 |
| AVE | 20.439 | 20.387 | 20.466 |
| (Std dev) | (0.141) | (0.438) | (0.129) |
| AVE water content | 92.14% (0.026) | 91.68% (0.793) | 92.96% (0.135) |
| (Std dev) | | | |

The diameters of the non-sterilized (autoclave), single sterilized (autoclave) and double sterilized (autoclave) lenses are equivalent.

Contact lenses obtained from formulations I and II are stable to multiple autoclave treatments as shown in Tables 3 and 4. Diameters of the three lens groups measured at room temperature are found to be equivalent as shown in Tables 3 and 4. In addition, lens water content does not change when lenses are subjected to autoclave treatment.

Although various embodiments of the invention have been described using specific terms, devices, and methods, such description is for illustrative purposes only. The words used are words of description rather than of limitation. It is to be understood that changes and variations may be made by those skilled in the art without departing from the scope of the present invention, which is set forth in the following claims. Therefore, the scope of the appended claims should not be limited to the description of the preferred versions contained in the various embodiments.

## Claims

1. A crosslinkable poly(oxyalkylene)-containing copolymer prepolymer, which is a reaction product of an amine-capped poly(oxyalkylene)-containing polyamide and a multifunctional compound having at least one ethylenically unsaturated group and a functional group coreactive with the capped amine groups of the amine-capped poly(oxyalkylene)-containing polyamide, wherein the amine-capped poly(oxyalkylene)-containing polyamide is a copolymerization product of a mixture comprising the components of:
(a) at least one aminoalkyl polyalkylene glycol of formula (1)
CG-(R₁-O)ₙ-(R₂-O)ₘ-(R₃ -O)ₚ-CG' (1)
wherein CG and CG' independently of each other are a primary or secondary amino group, or an amino-C₁-C₁₂ alkyl, R₁, R₂, and R₃, independently of one other, are each linear or branched C₂-C₄-alkylene or hydroxy-substituted C₂-C₈ alkylene radical, and n, m and p, independently of one another, are each a number from 0 to 500, wherein the sum of (n+m+p) is 5 to 1000,
(b) optionally at least one organic di- or poly-amine, wherein the organic diamine is a linear or branched C₂-C₂₄ aliphatic diamine, a C₅-C₂₄ cycloaliphatic or aliphatic-cycloaliphatic diamine, or a C₆-C₂₄ aromatic or araliphatic diamine, and wherein the organic poly amine is a compound of formula 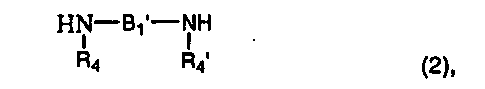 wherein R₄ and R₄' independently of each other are hydrogen or unsubstituted or substituted C₁-C₆ alkyl or together are a direct, ring-forming bond, and B₁' is a bivalent radical selected from the group consisting of a linear or branched C₃-C₂₄alkylene, an unsubstituted C₆-C₁₀arylene, a C₁-C₄ alkyl-substituted C₆-C₁₀ arylene, a C₇-C₁₈ aralkylene, C₆-C₁₀ arylene-C₁-C₂ alkylene-C₆-C₁₀arylene, C₃-C₈ cycloalkylene, C₃-C₈ cycloalkylene-C₁-C₆ alkylene, C₃-C₈ cycloalkylene-C₁-C₂ alkylene-C₃-C₈ cycloalkylene or C₁-C₆ alkylene-C₃-C₈ cycloalkylene-C₁-C₆ alkylene, each of which is interrupted by at least one bivalent amine group (-NH-) or has a primary or secondary amine group,
(c) at least one dicarboxyl derivative which is an organic compound with two groups of 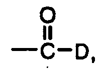 wherein D is halide, OH, or alkoxyl, cycloalkoxyl, or aralkoxyl, wherein the dicarboxyl derivative is derived from a linear or branched C₃-C₂₄ aliphatic dicarboxylic acid, a C₅-C₂₄ cycloaliphatic or aliphatic-cycloaliphatic dicarboxylic acid, a C₆-C₂₄ aromatic or araliphatic dicarboxylic acid, or a dicarboxylic acid which contains amino or imido groups or N-heterocyclic rings,
(d) at least one polycarboxyl derivative which is an organic compound with three or more groups of 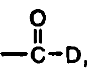 wherein D is defined above, and
(e) optionally a carbodiimide.

2. The crosslinkable poly(oxyalkylene)-containing prepolymer of claim 1, wherein D is halide.

3. The crosslinkable poly(oxyalkylene)-containing prepolymer of claim 2, wherein D is chloride.

4. The crosslinkable poly(oxyalkylene)-containing prepolymer of claim 3, wherein the dicarboxyl derivative is a diacid chloride which is fumaryl chloride, suberoyl chloride, succinyl chloride, phthaloyl chloride, isophthaloyl chloride, terephthaloyl chloride, sebacoyl chloride, adipoyl chloride, trimethyladipoyl chloride, azelaoyl chloride, dodecanedioic acid chloride, succinic chloride, glutaric chloride, oxalyl chloride, cyclobutanedicarbonyl chloride, cyclopentanedicarbonyl chloride, cyclohexanedicarbonyl chloride, methylcyclohexanedicarbonyl chloride, dicyclohexyldicarbonyl chloride, dimer acid chloride, or mixtures thereof.

5. The crosslinkable poly(oxyalkylene)-containing prepolymer of claim 2, wherein the mixture comprises a tricarbonyl halide.

6. The crosslinkable poly(oxyalkylene)-containing prepolymer of claim 5, wherein the tricarbonyl halide is cycloaliphatic tricarbonyl halide, aliphaticcycloaliphatic tricarbonyl chloride, benzene tricarbonyl chloride, or mixtures thereof.

7. The crosslinkable poly(oxyalkylene)-containing prepolymer of claim 6, wherein the tricarbonyl halide is cyclohexane-1,3,5-tricarbonyl chloride, 1,3,5-trimethyl-1,3,5-cyclohexanetricarbonyl chloride, trimesoyl chloride, or mixtures thereof.

8. The crosslinkable poly(oxyalkylene)-containing prepolymer of claim 1, wherein D is OH, wherein the mixture comprises a carbodiimide.

9. The crosslinkable pofy(oxyalkylene)-containing prepolymer of claim 8, wherein the carbodiimide is 1-ethyl-3-(3-dimethylaminopropyl)carbodiimide (EDC), N,N'-dicyclohexylcarbodiimide (DCC), 1-cylcohexyl-3-(2-morpholinoethyl)carbodiimide, diisopropyl carbodiimide, or mixtures thereof.

10. The crosslinkable poly(oxyalkylene)-containing prepolymer of claim 8, wherein the carbodiimide is a resin-bound carbodiimide, wherein the mixture comprises optionally a resin-bound 1-hydroxybenzotriazole as catalyst.

11. The crosslinkable poly(oxyalkylene)-containing prepolymer of claim 8, wherein the mixture further comprises an amino acid.

12. The crosslinkable poly(oxyalkylene)-containing prepolymer of claim 1, wherein the multifunctional compound comprises an ethylenically unsaturated group and a carboxylic acid group, wherein the reaction between the multifunctional compound and the amine-capped poly(oxyalkylene)-containing polyamide occurs in the presence of a carbodiimide.

13. The crosslinkable poly(oxyalkylene)-containing prepolymer of claim 12, wherein the carbodiimide is a resin-bound carbodiimide.

14. A crosslinkable poly(oxyalkylene)-containing prepolymer having formula (4)
CP-(Q)_{q} (4)
wherein q is an integer of ≥3, Q is an organic radical that comprises at least one crosslinkable group, CP is a multivalent linear or branched copolymer fragment comprising segments A, A₁, T, and optionally segments G, wherein:
A is the bivalent radical of -(R₁-O)ₙ-(R₂-O)ₘ-(R₃-O)ₚ-, wherein R₁, R₂, and R₃, independently of one other, are each linear or branched C₂-C₄-alkylene or hydroxy-substituted C₂-C₈ alkylene radical, and n, m and p, independently of one another, are each a number from 0 to 500, wherein the sum of (n+m+p) is 5 to 1000;
G is a linear or branched C₃-C₂₄ aliphatic trivalent radical, a C₅-C₄₅ cycloaliphatic trivalent radical, a C₅-C₄₅ aliphatic-cycloaliphatic trivalent radical, or a C₃-C₂₄ aromatic or araliphatic trivalent radical;
A₁ is a linear or branched C₂-C₂₄ aliphatic bivalent radical, a C₅-C₂₄ cycloaliphatic or aliphatic-cycloaliphatic bivalent radical, a C₆-C₂₄ araliphatic bivalent radical, or aliphatic-heterocyclic bivalent radical, each of which is interrupted by at least one group of formula -NRₘ- in which Rₘ is hydrogen, a radical Q mentioned above or a radical of formula 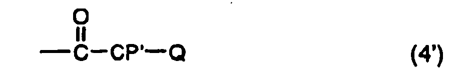
wherein Q is as defined above, and CP' is a bivalent copolymer fragment comprising one or more segments selected from the group consisting of A, A₁, T and G;
T is a bivalent radical of formula 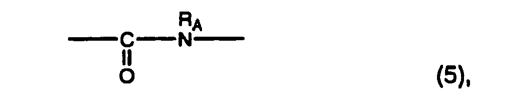
wherein R_{A} is hydrogen, an unsubstituted C₁-C₆ alkyl, or a substituted C₁-C₆ alkyl;
provided that in the copolymer fragments CP and CP' a segment A is linked to a segment A₁ or G through a segment T;
provided that the C atom of -CO- is bonded to a segment A₁ or G when Rₘ is a radical of formula (4');
provided that Q is linked to the copolymer fragment CP or CP' through a segment T.

15. The crosslinkable poly(oxyalkylene)-contairiing copolymer prepolymer of claim 14, wherein Q is
(i) an organic radical R₅ which is an olefinically unsaturated copolymerizable radical having 2 to 24 carbon atoms which may be further substituted, or
(ii) a radical of formula -(NH )ᵣ-Q₁ or -O-Q₁, wherein Q₁ is 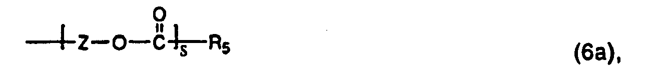 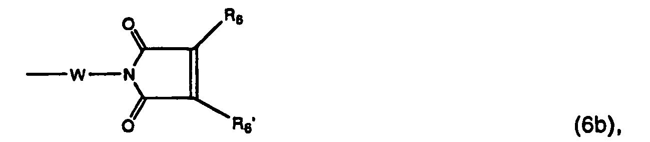 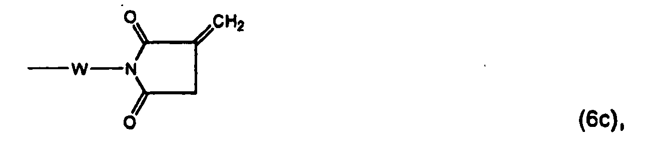 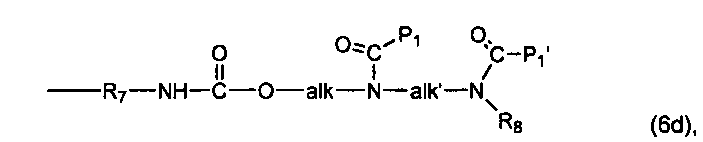 or 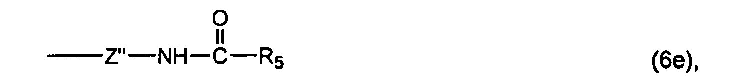
and wherein
Z is linear or branched C₂-C₁₂alkylene,
W is a C₂-C₁₂alkylene radical, phenylene radical or C₇-C₁₂aralkylene radical,
each of R₆ and R₆' independently of each other is hydrogen, C₁-C₄alkyl or halogen,
R₇ is a bivalent aliphatic, cycloaliphatic, aliphatic-cycloaliphatic, aromatic or araliphatic hydrocarbon radical,
R₈ is hydrogen or C₁-C₄alkyl,
each of alk and alk' independently of the other is a linear or branched C₁-C₁₂alkylene radical, each of r and s independently of each other is the number 0 or 1,
Z" is C₁-C₆alkylene and
P₁ and P₁' independently of each other are a radical of formula -(NH )ᵣ-Q₁ or -O-Q₁, wherein Q1 is a radical of the above formula (6a), (6b), (6c) or (6e).

16. The crosslinkable poly(oxyalkylene)-containing copolymer prepolymer of claim 15, wherein Q is a radical of formula -(NH )ᵣ-Q₁ wherein r is 0 and Q1 is a radical of formula (6a) wherein s is 0, R5 is a radical of formula 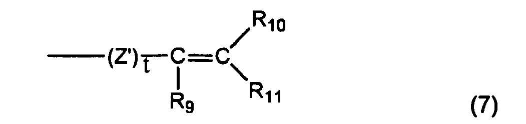 wherein t is the number 0 or 1,
R₉ is hydrogen, C₁-C₄alkyl or halogen,
each of R₁₀ and R₁₁ independently of the other is hydrogen, C₁-C₄alkyl, phenyl, carboxy or halogen, and
Z' is linear or branched C₁-C₁₂alkylene or unsubstituted or C₁-C₄alkyl- or C₁-C₄alkoxy-substituted phenylene or C₇-C₁₂aralkylene.

17. The crosslinkable poly(oxyalkylene)-containing copolymer prepolymer of claim 15, wherein Q is a radical of formula -(NH )ᵣ-Q₁ wherein r is 1 and Q₁ is a radical of formula (6a) wherein s is 1, R₅ is a radical of formula 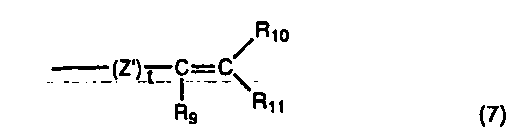 wherein t is 0,
R₉ is hydrogen, C₁-C₄alkyl, R₁₀ is hydrogen, methyl, chlorine or phenyl, R₁₁ hydrogen or carboxy, and Z' is linear or branched C₁-C₁₂alkylene.

18. The crosslinkable poly(oxyalkylene)-containing copolymer prepolymer of claim 15, wherein O is a radical of formula 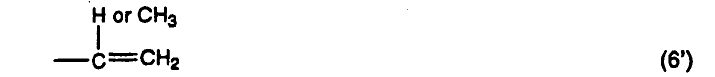 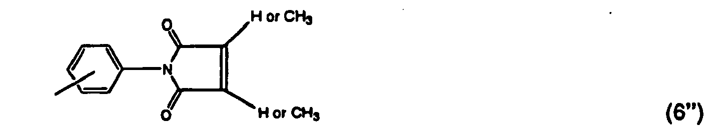 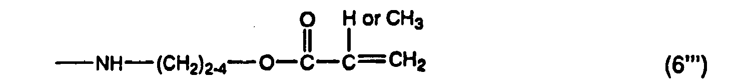 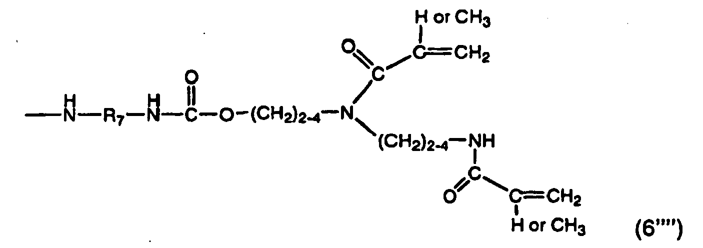 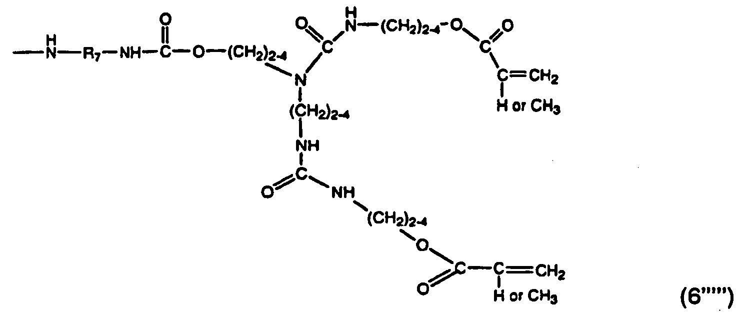 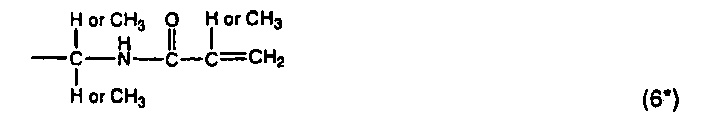 or 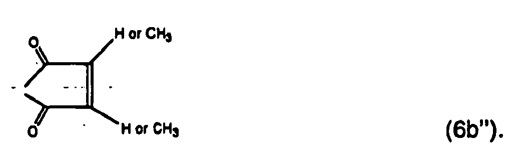 wherein for R₇ the meanings and preferences given above apply in each case.

19. The crosslinkable poly(oxyalkylene)-containing copolymer prepolymer of claim 18, wherein Q is a radical of formula (6') or (6"').

20. A polymer obtained by crosslinking a crosslinkable poly(oxyalkylene)-containing prepolymer according to any one of claims 1 to 13, in the presence or absence of an additional vinylic monomer.

21. A polymer of claim 20, obtained by crosslinking a crosslinkable poly(oxyalkylene)-containing copolymer prepolymer according to any one of claims 1 to 13, in the absence of an additional vinylic monomer.

22. A polymer obtained by crosslinking a crosslinkable poly(oxyalkylene)-containing prepolymer according to any one of claims 14 to 19, in the presence or absence of an additional vinylic monomer.

23. A medical device, comprising a poly(oxyalkylene)-containing copolymer hydrogel which is an actinically crosslinking product of a crosslinkable poly(oxyalkylene)-containing prepolymer in the absence or presence of an additional vinylic monomer and optionally in the presence of a photo-initiator, wherein the prepolymer is a reaction product of an amine-capped poly(oxyalkylene)-containing polyamide and a multifunctional compound having at least one ethylenically unsaturated group and a functional group coreactive with the capping amine groups of the amine-capped poly(oxyalkylene)-containing polyamide, wherein the amine-capped poly(oxyalkylene)-containing polyamide is a copolymerization product of a mixture comprising the components of:
(a) at least one aminoalkyl polyalkylene glycol of formula (1)
CG-(R₁-O)ₙ-(R₂-O)ₘ-(R₃-O)ₚ-CG' (1)
wherein CG and CG' independently of each other are a primary or secondary amino group, or an amino-C₁-C₁₂ alkyl, R₁, R₂, and R₃, independently of one other, are each linear or branched C₂-C₄-alkylene or hydroxy-substituted C₂-C₈ alkylene radical, and n, m and p,
independently of one another, are each a number from 0 to 100, wherein the sum of (n+m+p) is 5 to 1000,
(b) optionally at least one organic di- or poly-amine, wherein the organic diamine is a linear or branched C₂-C₂₄ aliphatic diamine, a C₅-C₂₄ cycloaliphatic or aliphatic-cycloaliphatic diamine, or a C₆-C₂₄ aromatic or araliphatic diamine, and wherein the organic poly amine is a compound of formula 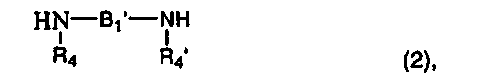 wherein R₄ and R₄' independently of each other are hydrogen or unsubstituted or substituted C₁-C₆ alkyl or together are a direct, ring-forming bond, and B₁' is a bivalent radical selected from the group consisting of a linear or branched C₃-C₂₄alkylene, an unsubstituted C₆-C₁₀arylene, a C₁-C₄ alkyl-substituted C₆-C₁₀ arylene, a C₇-C₁₈ aralkylene, C₆-C₁₀ arylene-C₁-C₂ alkylene-C₆-C₁₀arylene, C₃-C₈ cycloalkylene, C₃-C₈ cycloalkylene-C₁-C₆ alkylene, C₃-C₈ cycloalkylene-C₁-C₂ alkylene-C₃-C₈ cycloalkylene or C₁-C₆ alkylene-C₃-C₈ cycloalkylene-C₁-C₆ alkylene, each of which is interrupted by at least one bivalent amine group (-NH-) or has a primary or secondary amine group,
(c) at least one dicarboxyl derivative which is an organic compound with two groups of 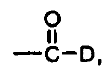 wherein D is halide, OH, or alkoxyl, cycloalkoxyl, or aralkoxyl, wherein the dicarboxyl derivative is derived from a linear or branched C₃-C₂₄ aliphatic dicarboxylic acid, a C₅-C₂₄ cycloaliphatic or aliphatic-cycloaliphatic dicarboxylic acid, a C₆-C₂₄ aromatic or araliphatic dicarboxylic acid, or a dicarboxylic acid which contains amino or imido groups or N-heterocyclic rings,
(d) at least one polycarboxyl derivative which is an organic compound with three or more groups of 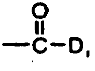 wherein D is defined above, and
(e) optionally a carbodiimide.

24. The medical device of claim 23, wherein D is halide.

25. The medical device of claim 24, wherein D is chloride.

26. The medical device of claim 25, wherein the dicarboxyl derivative is a diacid chloride which is fumaryl chloride, suberoyl chloride, succinyl chloride, phthaloyl chloride, isophthaloyl chloride, terephthaloyl chloride, sebacoyl chloride, adipoyl chloride, trimethyladipoyl chloride, azelaoyl chloride, dodecanedioic acid chloride, succinic chloride, glutaric chloride, oxalyl chloride, cyclobutanedicarbonyl chloride, cyclopentanedicarbonyl chloride, cyclohexanedicarbonyl chloride, methylcyclohexanedicarbonyl chloride, dicyclohexyldicarbonyl chloride, dimer acid chloride, or mixtures thereof.

27. The medical device of claim 24, wherein the mixture comprises a tricarbonyl halide.

28. The medical device of claim 27, wherein the tricarbonyl halide is cycloaliphatic tricarbonyl halide, aliphaticcycloaliphatic tricarbonyl chloride, benzene tricarbonyl chloride, or mixtures thereof.

29. The medical device of claim 28, wherein the tricarbonyl halide is cyclohexane-1,3,5-tricarbonyl chloride, 1,3,5-trimethyl-1,3,5-cyclohexanetricarbonyl chloride, trimesoyl chloride, or mixtures thereof.

30. The medical device of claim 23, wherein D is OH, wherein the mixture comprises a carbodiimide.

31. The medical device of claim 30, wherein the carbodiimide is a resin-bound carbodiimide, wherein the mixture comprises optionally a resin-bound 1-hydroxybenzotriazole as catalyst.

32. The medical device of claim 30, wherein the mixture further comprises an amino acid.

33. The medical device of claim 23, wherein the multifunctional compound comprises an ethylenically unsaturated group and a carboxylic acid group, wherein the reaction between the multifunctional compound and the amine-capped poly(oxyalkylene)-containing polyamide occurs in the presence of a carbodiimide.

34. The medical device of claim 33, wherein the carbodiimide is a resin-bound carbodiimide.

35. The medical device of claim 23, wherein the crosslinkable poly(oxyalkylene)-containing prepolymer has formula (4)
CP-(Q)_{q} (4)
wherein q is an integer of ≥3, Q is an organic radical that comprises at least one crosslinkable group, CP is a multivalent linear or branched copolymer fragment comprising comprising segments A, A₁, T, and optionally segments G, wherein:
A is the bivalent radical of -(R₁-O)ₙ-(R₂-O)ₘ(R₃-O)ₚ-, wherein R₁, R₂, and R₃, independently of one other, are each linear or branched C₂-C₄-alkylene or hydroxy-substituted C₂-C₈ alkylene radical, and n, m and p, independently of one another, are each a number from 0 to 500, wherein the sum of (n+m+p) is 5 to 1000;
G is a linear or branched C₃-C₂₄ aliphatic trivalent radical, a C₅-C₄₅ cycloaliphatic trivalent radical, a C₅-C₄₅ aliphatic cycloaliphatic trivalent radical, or a C₃-C₂₄ aromatic or araliphatic trivalent radical;
A₁ is a linear or branched C₂-C₂₄ aliphatic bivalent radical, a C₅-C₂₄ cycloaliphatic or aliphatic-cycloaliphatic bivalent radical, a C₆-C₂₄ araliphatic bivalent radical, or aliphatic-heterocyclic bivalent radical, each of which is interrupted by at least one group of formula -NRₘ- in which Rₘ is hydrogen, a radical Q mentioned above or a radical of formula 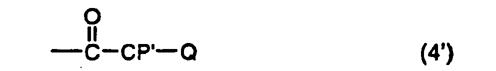
wherein Q is as defined above, and CP' is a bivalent copolymer fragment comprising one or more segments selected from the group consisting of A, A₁, T and G;
T is a bivalent radical of formula 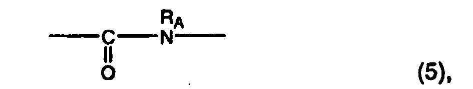
wherein R_{A} is hydrogen, an unsubstituted C₁-C₆ alkyl, or a substituted C₁-C₆ alkyl;
provided that in the copolymer fragments CP and CP' a segment A is linked to a segment A₁ or G through a segment T;
provided that the C atom of -CO- is bonded to a segment A₁ or G when Rₘ is a radical of formula (4');
provided that Q is linked to the copolymer fragment CP or CP' through a segment T.

36. The medical device of claim 35, wherein Q is :
(i) an organic radical R₅ which is an olefinically unsaturated copolymerizable radical having 2 to 24 carbon atoms which may be further substituted; or
(ii) a radical of formula -(NH )ᵣ-Q₁ or -O-Q₁, wherein Q₁ is a radical of formula 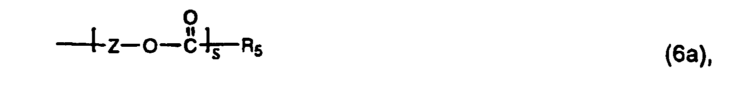 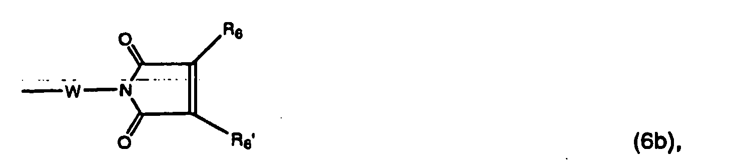 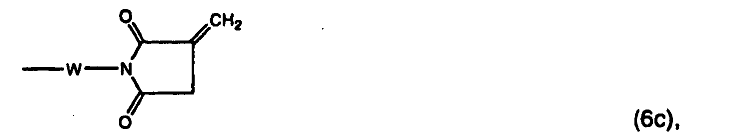 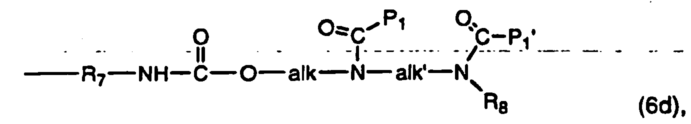 or 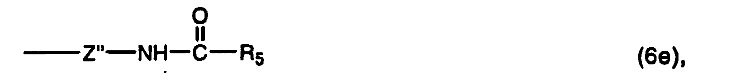 and wherein
Z is linear or branched C₂-C₁₂alkylene,
R₅ is an olefinically unsaturated copolymerisable radical having from 2 to 24 carbon atoms which may be further substituted,
W is a C₂-C₁₂alkylene radical, phenylene radical or C₇-C₁₂aralkylene radical,
each of R₆ and R₆' independently of each other is hydrogen, C₁-C₄alkyl or halogen,
R₇ is a bivalent aliphatic, cycloaliphatic, aliphatic-cycloaliphatic, aromatic or araliphatic hydrocarbon radical,
R₈ is hydrogen or C₁-C₄alkyl,
each of alk and alk' independently of the other is a linear or branched C₁-C₁₂alkylene radical, each of r and s independently of each other is the number 0 or 1,
Z" is C₁-C₆alkylene and
P₁ and P₁' independently of each other are a radical of a radical of formula -(NH )ᵣ-Q₁ or -O-Q₁.

37. The medical device of claim 19, wherein Q is a radical of formula 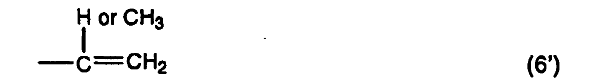 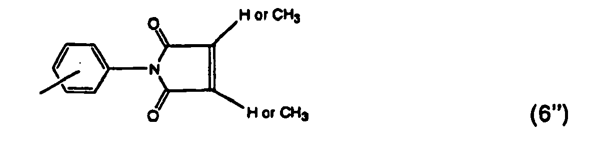 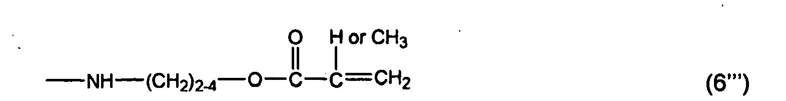 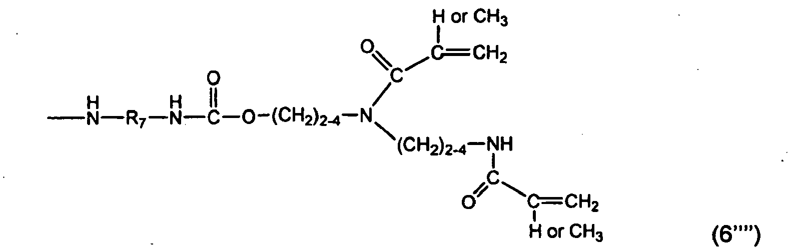 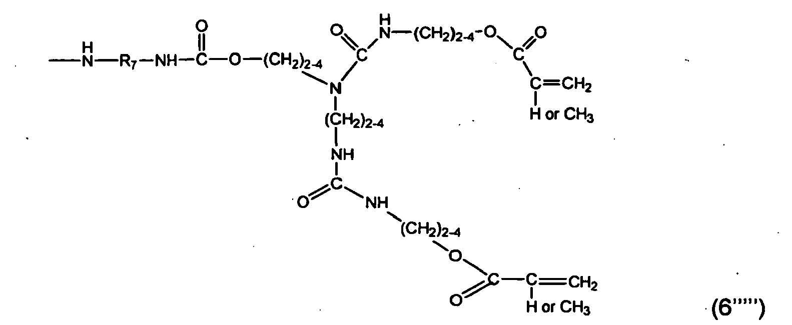 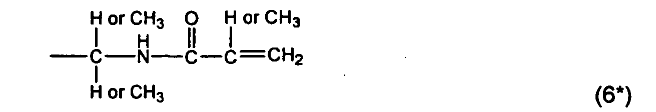 or 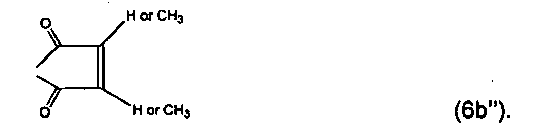 wherein for R₇ the meanings and preferences given above apply in each case.

38. The medical device of claim 37, wherein Q is a radical of formula -(NH )ᵣ-Q₁ wherein r is 0 and Q₁ is a radical of formula (6a) wherein s is 0, R₅ is a radical of formula 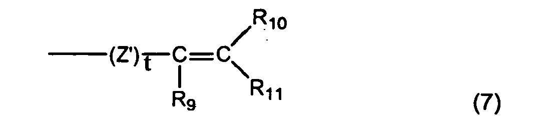 wherein t is the number 0 or 1,
R₉ is hydrogen, C₁-C₄alkyl or halogen,
each of R₁₀ and R₁₁ independently of the other is hydrogen, C₁-C₄alkyl, phenyl, carboxy or halogen, and
Z' is linear or branched C₁-C₁₂alkylene or unsubstituted or C₁-C₄alkyl- or C₁-C₄alkoxy-substituted phenylene or C₇-C₁₂aralkylene.

39. The medical device of claim 37, wherein Q is a radical of formula -(NH )ᵣ-Q₁ wherein r is 1 and Q1 is a radical of formula (6a) wherein s is 1, R₅ is a radical of formula 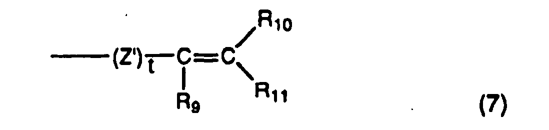 wherein t is 0,
R₉ is hydrogen, C₁-C₄alkyl, R₁₀ is hydrogen, methyl, chlorine or phenyl, R₁₁ hydrogen or carboxy, and Z' is linear or branched C₁-C₁₂alkylene.

40. The medical device of claim 23, wherein the medical device is a contact lens.

41. A method for making a contact lens, comprising the steps of:
(I) introducing a fluid lens-forming material into a mold, wherein the fluid lens-forming material is (i) a liquid or melt of a crosslinkable poly(oxyalkylene)-containing copolymer prepolymer in the presence or in the absence of one or more additional vinylic comonomers and optionally in the presence of a photo-initiator, or (ii) an aqueous solution of the crosslinkable poly(oxyalkylene)-containing copolymer prepolymer at a concentration of from 30% to 90% by weight, wherein the liquid or melt optionally is essentially free from solvents, wherein the aqueous solution optionally contains one or more compounds selected from the group consisting of physiologically compatible salts, isotonizing agents conventionally used in the field of contact lens care, vinylic comonomers and photo-initiators;
(II) initiating by actinic irradiation crosslinking of the crosslinkable poly(oxyalkylene)-containing copolymer prepolymer; and
(III) opening the mold so that the contact lens is removed from the mold,
wherein the prepolymer is a reaction product of an amine-capped poly(oxyalkylene)-containing polyamide and a multifunctional compound having at least one ethylenically unsaturated group and a function group coreactive with the capped amine groups of the amine-capped poly(oxyalkylene)-containing polyamide, wherein the amine-capped poly(oxyalkylene)-containing polyamide is a copolymerization product of a mixture comprising the components of
(a) at least one aminoalkyl polyalkylene glycol of formula (1)
CG-(R₁-O)ₙ(R₂-O)ₘ₋(R₃ -O)ₚ-CG' (1)
wherein CG and CG' independently of each other are a primary or secondary amino group, or an amino-C₁-C₁₂ alkyl, R₁, R₂, and R₃, independently of one other, are each linear or branched C₂-C₄-alkylene or hydroxy-substituted C₂-C₈ alkylene radical, and n, m and p, independently of one another, are each a number from 0 to 100, wherein the sum of (n+m+p) is 5 to 1000,
(b) optionally at least one organic di- or poly-amine, wherein the organic diamine is a linear or branched C₂-C₂₄ aliphatic diamine, a C₅-C₂₄ cycloaliphatic or aliphatic-cycloaliphatic diamine, or a C₆-C₂₄ aromatic or araliphatic diamine, and wherein the organic poly amine is a compound of formula 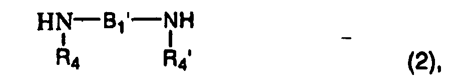 wherein R₄ and R₄' independently of each other are hydrogen or unsubstituted or substituted C₁-C₆ alkyl or together are a direct, ring-forming bond, and B₁' is a bivalent radical selected from the group consisting of a linear or branched C₃-C₂₄alkylene, an unsubstituted C₆-C₁₀arylene, a C₁-C₄ alkyl-substituted C₆-C₁₀ arylene, a C₇-C₁₈ aralkylene, C₆-C₁₀ arylene-C₁-C₂ alkylene-C₆-C₁₀arylene, C₃-C₈ cycloalkylene, C₃-C₈ cycloalkylene-C₁-C₆ alkylene, C₃-C₈ cycloalkylene-C₁-C₂ alkylene-C₃-C₈ cycloalkylene or C₁-C₆ alkylene-C₃-C₈ cycloalkylene-C₁-C₆ alkylene, each of which is interrupted by at least one bivalent amine group (-NH-) or has a primary or secondary amine group,
(c) at least one dicarboxyl derivative which is an organic compound with two groups of 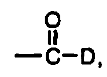 wherein D is halide, OH, or alkoxyl, cycloalkoxyl, or aralkoxyl, wherein the dicarboxyl derivative is derived from a linear or branched C₃-C₂₄ aliphatic dicarboxylic acid, a C₅-C₂₄ cycloaliphatic or aliphatic-cycloaliphatic dicarboxylic acid, a C₆-C₂₄ aromatic or araliphatic dicarboxylic acid, or a dicarboxylic acid which contains amino or imido groups or N-heterocyclic rings,
(d) at least one polycarboxyl derivative which is an organic compound with three or moregroups of 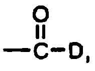 wherein D is defined above, and
(e) optionally a carbodiimide.

42. The method of claim 41, said radiation-curable prepolymer is substantially purified before introducing step.

43. The method of claim 42, wherein the fluid forming material is the aqueous solution, said radiation-curable prepolymer is substantially purified before introducing step.

44. The method of claim 43, wherein said aqueous solution contains buffer salts conventionally used in the field of contact lens care and/or isotonizing agents conventionally used in the field of contact lens care.

45. The method of claim 42, wherein the fluid forming material is the liquid or melt.

46. The method of claim 45, further comprising the step of (IV) hydrating said contact lens in water, in an aqueous salt solution having an osmolarity of about 200 to 450 mOsm/ml, or in a mixture of water or an aqueous salt solution with a physiologically compatible polar organic solvent.

## Patentansprüche

1. Vernetzbares Poly(oxyalkylen)-enthaltendes Copolymer Präpolymer, welches ein Reaktionsprodukt eines mit Amin-Endgruppen versehenen Poly(oxyalkylen)-enthaltenden Polyamid und einer multifunktionellen Verbindung mit mindestens einer ethylenisch-ungesättigten Gruppe und einer, mit der Amin-Endruppe des mit Amin-Endgruppen versehenen Poly(oxyalkylen)-enthaltenden Polyamid, coreaktiven funktionellen Gruppe ist, wobei das mit Amin-Endgruppen versehene Poly(oxyalkylen)-enthaltende Polyamid ein Copolymerisationsprodukt einer Mischung enthaltend die folgenden Verbindungen ist:
(a) mindestens ein Aminoalkyl-polyalkylenglykol der Formel (1)
CG-(R₁-O)ₙ-(R₂-O)ₘ-(R₃ -O)ₚ-CG' (1)
wobei CG und CG' unabhängig voneinander eine primäre oder sekundäre Amingruppe, oder ein Amino-C₁-C₁₂ alkyl, R₁, R₂, und R₃, unabhängig voneinander, je ein lineares oder verzweigtes C₂-C₄-Alkylen oder Hydroxy-substitutiertes C₂-C₈ Alkylen Radikal sind, und n, m und p, unabhängig voneinander, je eine Zahl von 0 bis 500 sind, wobei die Summe (n+m+p) eine Zahl von 5 bis 1000 ist,
(b) optional mindestens ein organisches Di- oder Polyamin, wobei das organische Diamin ein lineares oder verzweigtes C₂-C₂₄ aliphatisches Diamin, ein C₅-C₂₄ cycloaliphatisches oder aliphatisch-cycloaliphatisches Diamin, oder ein C₆-C₂₄ aromatisches oder araliphatisches Diamin ist, und wobei das organische Polyamin eine Verbindung der Formel 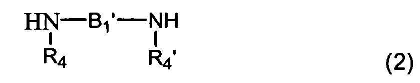 ist, wobei R₄ und R₄' unabhängig voneinander Wasserstoff oder unsubstituiertes oder substituiertes C₁-C₆ Alkyl oder zusammen eine direkte Bindung oder eine ringförmige Bindung sind, und B₁' ein divalentes Radikal ausgewält aus der Gruppe bestehend aus einem linearen oder verzweigten C₃-C₂₄Alkylen, einem unsubstituierten C₆-C₁₀ Arylen, einem C₁-C₄ alkylsubstituierten C₆-C₁₀ Arylen, einem C₇-C₁₈ Aralkylen, C₆-C₁₀ Arylen-C₁-C₂ Alkylen-C₆-C₁₀ Arylen, C₃-C₈ Cycloalkylen, C₃-C₈ Cycloalkylen-C₁-C₆ Alkylen, C₃-C₈ Cycloalkylen-C₁-C₂ Alkylen-C₃-C₈ Cycloalkylen oder C₁-C₆ Alkylen-C₃-C₈ Cycloalkylen-C₁-C₆ Alkylen ist, von denen jedes mindestens durch eine divalente Amingruppe (-NH-) getrennt ist oder eine primäre oder sekundäre Amingruppe aufweist,
(c) mindestens ein Dicarboxylderivat welches eine organische Verbindung mit zwei 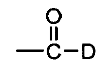 Gruppen ist, wobei D Halogenid, OH, oder Alkoxyl, Cycloalkoxyl, oder Aralkoxyl ist, wobei das Dicarboxylderivat erhalten wird aus einer linearen oder verzweigten C₃-C₂₄ aliphatischen Dicarboxylsäure, einer C₅-C₂₄ cycloaliphatischen oder aliphatischcycloaliphatischen Dicarboxylsäure, einer C₆-C₂₄ aromatischen oder araliphatischen Dicarboxylsäure, oder einer Dicarboxylsäure welche Amino- oder Imidogruppen oder N-heterocyclische Ringe enthält,
(d) mindestens ein Polycarboxylderivat welches eine organische Verbindung mit drei oder mehr 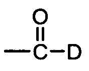 Gruppen ist, wobei D wie oben definiert ist, und
(e) optional ein Carbodiimid.

2. Vernetzbares Poly(oxyalkylen)-enthaltendes Präpolymer gemäss Anspruch 1, wobei D Halogenid ist.

3. Vernetzbares Poly(oxyalkylen)-enthaltendes Präpolymer gemäss Anspruch 2, wobei D Chlorid ist.

4. Vernetzbares Poly(oxyalkylen)-enthaltendes Präpolymer gemäss Anspruch 3, wobei das Dicarboxylderivat ein Disäurechlorid ist welches Fumarylchlorid, Suberoylchlorid, Succinylchlorid, Phthaloylchlorid, Isophthaloylchlorid, Terephthaloylchlorid, Sebacoylchlorid, Adipoylchlorid, Trimethyladipoylchlorid, Azelaoylchlorid, Dodecanedisäurechlorid, Succinsäurechlorid, Glutarsäurechlorid, Oxalylchlorid, Cyclobutandicarbonylchlorid, Cyclopentandicarbonylchlorid, Cyclohexandicarbonylchlorid, Methylcyclohexandicarbonylchlorid, Dicyclohexyldicarbonylchlorid, Dimer Säurechlorid, oder Mischungen daraus ist.

5. Vernetzbares Poly(oxyalkylen)-enthaltendes Präpolymer gemäss Anspruch 2, wobei die Mischung Tricarbonylhalogenid enthält.

6. Vernetzbares Poly(oxyalkylen)-enthaltendes Präpolymer gemäss Anspruch 5, wobei das Tricarbonylhalogenid ein cycloaliphatisches Tricarbonylhalogenid, aliphatisch-cycloaliphatisches Tricarbonylchlorid, Benzol-Tricarbonylchlorid, oder Mischungen daraus ist.

7. Vernetzbares Poly(oxyalkylen)-enthaltendes Präpolymer gemäss Anspruch 6, wobei das Tricarbonylhalogenid Cyclohexan-1,3,5-Tricarbonylchlorid, 1,3,5-Trimethyl-1,3,5-Cyclohexan-Tricarbonylchlorid, Trimesoylchlorid, oder Mischungen daraus ist.

8. Vernetzbares Poly(oxyalkylen)-enthaltendes Präpolymer gemäss Anspruch 1, wobei D OH ist, wobei die Mischung ein Carbodiimid enthält.

9. Vernetzbares Poly(oxyalkylen)-enthaltendes Präpolymer gemäss Anspruch 8, wobei das Carbodiimid 1-Ethyl-3-(3-dimethylaminopropyl)carbodiimid (EDC), N,N'-Dicyclohexylcarbodiimid (DCC), 1-Cylcohexyl-3-(2-morpholinoethyl)carbodiimid, diisopropylcarbodiimid, oder Mischungen daraus ist.

10. Vernetzbares Poly(oxyalkylen)-enthaltendes Präpolymer gemäss Anspruch 8, wobei das Carbodiimid ein trägergebundenes Carbodiimid ist, wobei die Mischung optional ein trägergebundenes 1-Hydroxybenzotriazol als Katalysator enthält.

11. Vernetzbares Poly(oxyalkylen)-enthaltendes Präpolymer gemäss Anspruch 8, wobei die Mischung ferner eine Aminosäure enthält.

12. Vernetzbares Poly(oxyalkylen)-enthaltendes Präpolymer gemäss Anspruch 1, wobei die multifunktionelle Verbindung eine ethylenisch-ungesättigte Gruppe und eine Carboxylsäuregruppe enthält, wobei die Reaktion zwischen der multifunktionelle Verbindung und des, mit Amin-Endgruppen versehenen Poly(oxyalkylen)-enthaltenden, Polyamid in der Gegenwart eines Carbodiimids abläuft.

13. Vernetzbares Poly(oxyalkylen)-enthaltendes Präpolymer gemäss Anspruch 12, wobei das Carbodiimid ein trägergebundenes Carbodiimid ist.

14. Vernetzbares Poly(oxyalkylen)-enthaltendes Präpolymer gemäss Formel (4)
CP-(Q)_{q} (4)
wobei q eine Zahl ≥3 ist, Q ein organisches Radikal enthaltend mindestens eine vernetzbare Gruppe ist, CP ein multivalentes lineares oder verzweigtes Copolymer-Fragment ist, welches Segmente A, A₁, T umfasst, und optional Segmente G, wobei:
A ein divalentes Radikal -(R₁-O)ₙ-(R₂-O)ₘ-(R₃-O)ₚ- ist, wobei R₁, R₂, und R₃, unabhängig voneinander, je ein lineares oder verzweigtes C₂-C₄-Alkylen- oder Hydroxysubstituiertes C₂-C₈ Alkylen Radikal sind, und n, m und p, unabhängig voneinander, je eine Zahl von 0 bis 500 sind, wobei die Summe (n+m+p) eine Zahl von 5 bis 1000 ist,
G ein lineares oder verzweigtes C₃-C₂₄ aliphatisch-trivalentes Radikal, ein C₅-C₄₅ cycloaliphatisch-trivalentes Radikal, ein C₅-C₄₅ aliphatisch-cycloaliphatisch-trivalentes Radikal, oder ein C₃-C₂₄ aromatisch- oder araliphatisch-trivalentes Radikal ist;
A₁ ein lineares oder verzweigtes C₂-C₂₄ aliphatisch-divalentes Radikal, ein C₅-C₂₄ cycloaliphatische- oder aliphatisch-cycloaliphatisch-divalentes Radikal, ein C₆-C₂₄ araliphatisch-divalentes Radikal, oder ein aliphatisch-heterocyclisch-divalentes Radikal ist, von denen jedes mindestens durch eine Gruppe der Formel -NRₘ- getrennt ist, in welcher Rₘ Wasserstoff, ein Radikal Q wie oben oder ein Radikal der Formel 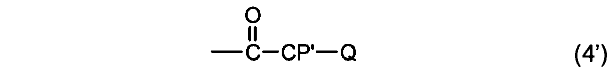 ist, wobei Q wie oben definiert ist, und CP' ein divalentes Copolymer-Fragment ist, welches Segmente A, A₁, T und G umfasst;
T ein divalentes Radikal der Formel 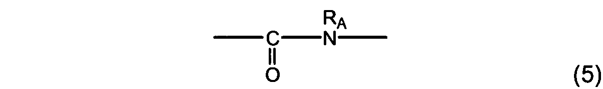 ist, wobei R_{A} Wasserstoff, ein unsubstituiertes C₁-C₆ Alkyl, oder ein substituiertes C₁-C₆ Alkyl ist;
mit der Bedingung dass in den Copolymer-Fragmenten CP und CP' ein Segment A mit einem Segment A₁ oder G durch ein Segment T verbunden ist;
mit der Bedingung dass das C-Atom von -CO- an ein Segment A₁ oder G gebunden ist wenn Rₘ ein Radikal der Formel (4') ist;
mit der Bedingung dass Q mit einem Copolymer-Fragment CP oder CP' durch ein Segment T verbunden ist.

15. Vernetzbares Poly(oxyalkylen)-enthaltendes Copolymer-Präpolymer gemäss Anspruch 14, wobei Q
(i) ein organisches Radikal R₅ ist, welches ein olefinisch-ungesättigtes copolymerisierbares Radikal mit 2 bis 24 Kohlenstoffatomen ist, welches weiter substituiert sein kann, oder
(ii) ein Radikal der Formeln -(NH )ᵣ-Q₁ oder -O-Q₁, wobei Q₁ ein 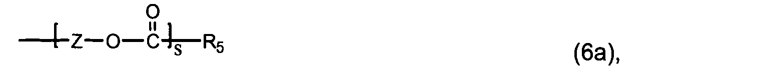 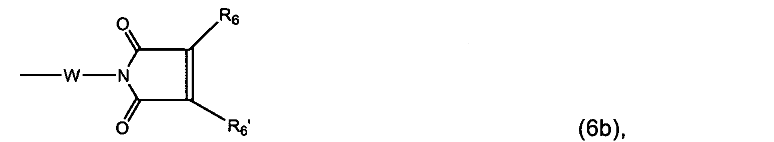 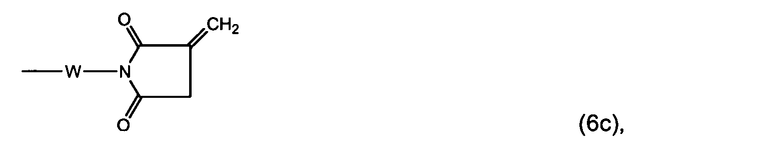 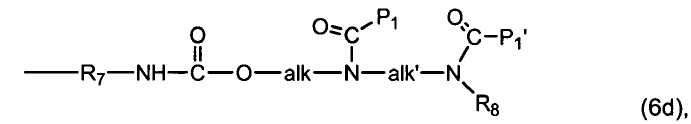 oder 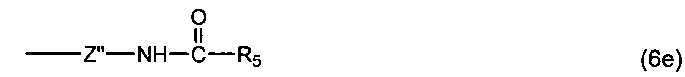 ist, und wobei
Z ein lineares oder verzweigtes C₂-C₁₂ Alkylen ist,
W ein C₂-C₁₂ Alkylen-Radikal, ein Phenylen-Radikal oder ein C₇-C₁₂ Aralkylen-Radikal ist,
jeder der R₆ und R₆' unabhängig voneinander Wasserstoff, C₁-C₄ Alkyl oder Halogen ist, R₇ ein divalentes aliphatisches, cycloaliphatisches, aliphatisch-cycloaliphatisches, aromatisches oder araliphatisches Kohlenwasserstoff-Radikal ist,
R₈ Wasserstoff oder C₁-C₄ Alkyl ist,
jeder der alk und alk' unabhängig voneinander ein lineares oder verzweigtes C₁-C₁₂ Alkylen-Radikal ist,
jeder der r und s unabhängig voneinander eine Zahl 0 oder 1 ist,
Z" ein C₁-C₆ Alkylen ist und
P₁ und P₁' unabhängig voneinander ein Radikal der Formeln -(NH )₄-Q₁ oder -O-Q₁ sind, wobei Q1 ein Radikal der oben gezeigten Formuln (6a), (6b), (6c) oder (6e) ist.

16. Vernetzbares Poly(oxyalkylen)-enthaltendes Copolymer-Präpolymer gemäss Anspruch 15, wobei Q ein Radikal der Formel -(NH )ᵣ-Q₁ ist, wobei r 0 ist und Q₁ ein Radikal der Formel (6a) ist, wobei s 0 ist, R₅ ein Radikal der Formel 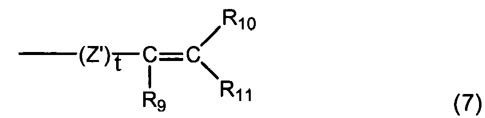 ist,
wobei t eine Zahl 0 oder 1 ist,
R₉ Wasserstoff, C₁-C₄ Alkyl oder Halogen ist,
Jeder der R₁₀ und R₁₁ unabhängig voneinander Wasserstoff, C₁-C₄ Alkyl, Phenyl, Carboxy oder Halogen ist, und
Z' ein lineares oder verzweigtes C₁-C₁₂ Alkylen oder unsubstituiertes oder C₁-C₄ Alkyl- oder C₁-C₄ Alkoxy-substituiertes Phenylen oder C₇-C₁₂ Aralkylen ist.

17. Vernetzbares Poly(oxyalkylen)-enthaltendes Copolymer-Präpolymer gemäss Anspruch 15, wobei Q ein Radikal der Formel -(NH )ᵣ-Q₁ ist, wobei r 1 ist und Q₁ ein Radikal der Formel (6a) ist, wobei s 1 ist, R₅ ein Radikal der Formel 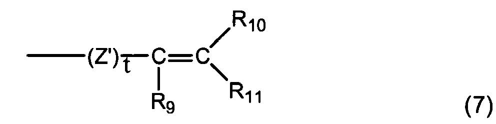 ist, wobei t 0 ist,
R₉ Wasserstoff oder C₁-C₄ Alkyl ist, R₁₀ Wasserstoff, Methyl, Chlor oder Phenyl ist, R₁₁ Wasserstoff oder Carboxy ist, und Z' ein lineares oder verzweigtes C₁-C₁₂ Alkylen ist.

18. Vernetzbares Poly(oxyalkylen)-enthaltendes Copolymer-Präpolymer gemäss Anspruch 15, wobei Q ein Radikal der Formel 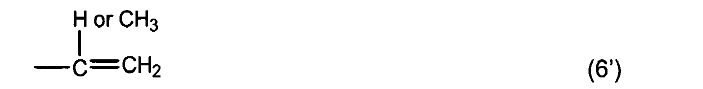 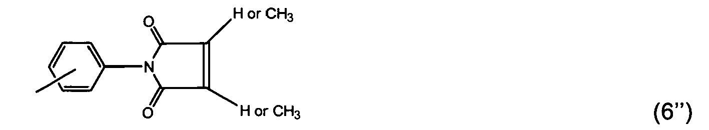 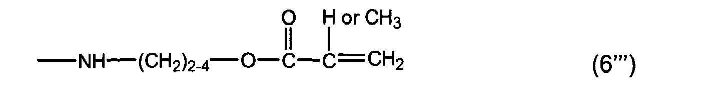 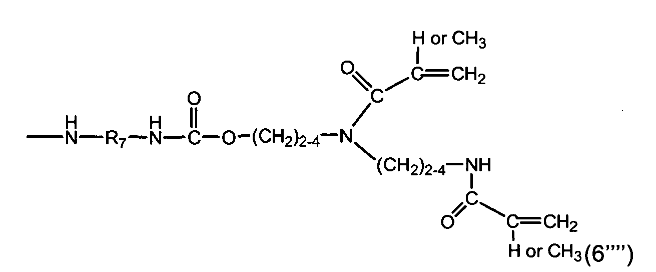 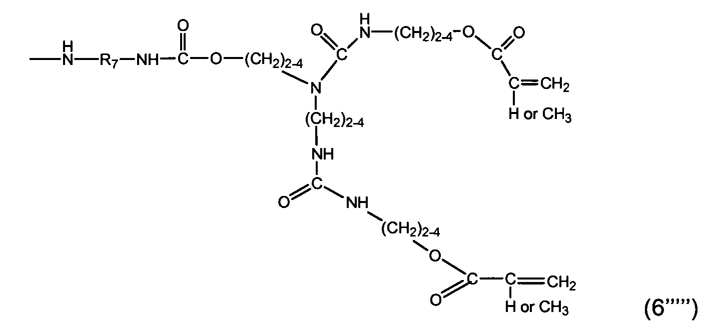 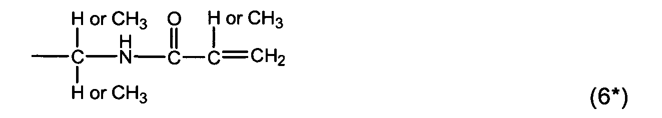 oder 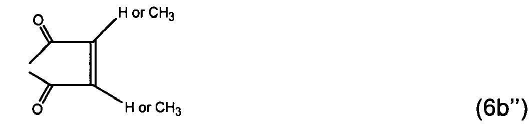 ist, wobei für R₇ in jedem Fall die Bedeutungen und bevorzugten Bedeutungen wie oben angegeben gelten.

19. Vernetzbares Poly(oxyalkylen)-enthaltendes Copolymer-Präpolymer gemäss Anspruch 18, wobei Q ein Radikal der Formel (6') oder (6"') ist.

20. Polymer erhalten durch die Vernetzung eines vernetzbaren Poly(oxyalkylen)-enthaltenden Präpolymer gemäss einem der Ansprüche 1 bis 13, in der Gegenwart oder Abwesenheit eines zusätzlichen vinylischen Monomers.

21. Polymer gemäss Anspruch 20 erhalten durch die Vernetzung eines vernetzbaren Poly(oxyalkylen)-enthaltenden Copolymer-Präpolymer gemäss einem der Ansprüche 1 bis 13, in der Gegenwart oder Abwesenheit eines zusätzlichen vinylischen Monomers.

22. Polymer erhalten durch die Vernetzung eines vernetzbaren Poly(oxyalkylen)-enthaltenden Präpolymer gemäss einem der Ansprüche 14 bis 19, in der Gegenwart oder Abwesenheit eines zusätzlichen vinylischen Monomers.

23. Medizinische Vorrichtung, enthaltend ein Poly(oxyalkylen)-enthaltendes Copolymer Hydrogel welches ein photochemisches Vernetzungsprodukt eines vernetzbaren Poly(oxyalkylen)-enthaltenden Präpolymer, in der Abwesenheit oder Gegenwart eines zusätzlichen vinylischen Monomers, und optional in der Gegenwart eines Photoinitiators ist, wobei das Präpolymer ein Reaktionsprodukt eines mit Amin-Endgruppen versehenen Poly(oxyalkylen)-enthaltenden Polyamid und einer multifunktionellen Verbindung mit mindestens einer ethylenisch-ungesättigten Gruppe und einer, mit der Amin-Endruppe des mit Amin-Endgruppen versehenen Poly(oxyalkylen)-enthaltenden Polyamid, coreaktiven funktionellen Gruppe ist, wobei das mit Amin-Endgruppen versehene Poly(oxyalkylen)-enthaltende Polyamid ein Copolymerisationsprodukt einer Mischung enthaltend die folgenden Verbindungen ist:
(a) mindestens ein Aminoalkyl-polyalkylenglykol der Formel (1)
CG-(R₁-O)ₙ-(R₂-O)ₘ-(R₃ -O)ₚ-CG' (1)
wobei CG und CG' unabhängig voneinander eine primäre oder sekundäre Amingruppe, oder ein Amino-C₁-C₁₂ alkyl, R₁, R₂, und R₃, unabhängig voneinander, je ein lineares oder verzweigtes C₂-C₄-Alkylen oder Hydroxy-substitutiertes C₂-C₈ Alkylen Radikal sind, und n, m und p, unabhängig voneinander, je eine Zahl von 0 bis 500 sind, wobei die Summe (n+m+p) eine Zahl von 5 bis 1000 ist,
(b) optional mindestens ein organisches Di- oder Polyamin, wobei das organische Diamin ein lineares oder verzweigtes C₂-C₂₄ aliphatisches Diamin, ein C₅-C₂₄ cycloaliphatisches oder aliphatisch-cycloaliphatisches Diamin, oder ein C₆-C₂₄ aromatisches oder araliphatisches Diamin ist, und wobei das organische Polyamin eine Verbindung der Formel 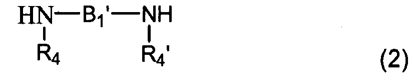 ist, wobei R₄ und R₄' unabhängig voneinander Wasserstoff oder unsubstituiertes oder substituiertes C₁-C₆ Alkyl oder zusammen eine direkte Bindung oder eine ringförmige Bindung sind, und B₁' ein divalentes Radikal ausgewält aus der Gruppe bestehend aus einem linearen oder verzweigten C₃-C₂₄ Alkylen, einem unsubstituierten C₆-C₁₀ Arylen, einem C₁-C₄ alkylsubstituierten C₆-C₁₀ Arylen, einem C₇-C₁₈ Aralkylen, C₆-C₁₀ Arylen-C₁-C₂ Alkylen-C₆-C₁₀ Arylen, C₃-C₈ Cycloalkylen, C₃-C₈ Cycloalkylen-C₁-C₆ Alkylen, C₃-C₈ Cycloalkylen-C₁-C₂ Alkylen-C₃-C₈ Cycloalkylen oder C₁-C₆ Alkylen-C₃-C₈ Cycloalkylen-C₁-C₆ Alkylen ist, von denen jedes mindestens durch eine divalente Amingruppe (-NH-) getrennt ist oder eine primäre oder sekundäre Amingruppe aufweist,
(c) mindestens ein Dicarboxylderivat welches eine organische Verbindung mit zwei 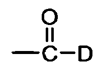 Gruppen ist, wobei D Halogenid, OH, oder Alkoxyl, Cycloalkoxyl, oder Aralkoxyl ist, wobei das Dicarboxylderivat erhalten wird aus einer linearen oder verzweigten C₃-C₂₄ aliphatischen Dicarboxylsäure, einer C₅-C₂₄ cycloaliphatischen oder aliphatischcycloaliphatischen Dicarboxylsäure, einer C₆-C₂₄ aromatischen oder araliphatischen Dicarboxylsäure, oder einer Dicarboxylsäure welche Amino- oder Imidogruppen oder N-heterocyclische Ringe enthält,
(d) mindestens ein Polycarboxylderivat welches eine organische Verbindung mit drei oder mehr 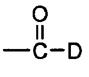 Gruppen ist, wobei D wie oben definiert ist, und
(e) optional ein Carbodiimid.

24. Medizinische Vorrichtung gemäss Anspruch 23, wobei D Halogenid ist.

25. Medizinische Vorrichtung gemäss Anspruch 24, wobei D Chlorid ist.

26. Medizinische Vorrichtung gemäss Anspruch 25, wobei das Dicarboxylderivat ein Disäurechlorid ist welches Fumarylchlorid, Suberoylchlorid, Succinylchlorid, Phthaloylchlorid, Isophthaloylchlorid, Terephthaloylchlorid, Sebacoylchlorid, Adipoylchlorid, Trimethyladipoylchlorid, Azelaoylchlorid, Dodecanedisäurechlorid, Succinsäurechlorid, Glutarsäurechlorid, Oxalylchlorid, Cyclobutandicarbonylchlorid, Cyclopentandicarbonylchlorid, Cyclohexandicarbonylchlorid, Methylcyclohexandicarbonylchlorid, Dicyclohexyldicarbonylchlorid, Dimer Säurechlorid, oder Mischungen daraus ist.

27. Medizinische Vorrichtung gemäss Anspruch 24, wobei die Mischung Tricarbonylhalogenid enthält.

28. Medizinische Vorrichtung gemäss Anspruch 27, wobei das Tricarbonylhalogenid ein cycloaliphatisches Tricarbonylhalogenid, aliphatisch-cycloaliphatisches Tricarbonylchlorid, Benzol-Tricarbonylchlorid, oder Mischungen daraus ist.

29. Medizinische Vorrichtung gemäss Anspruch 28, wobei das Tricarbonylhalogenid Cyclohexan-1,3,5-Tricarbonylchlorid, 1,3,5-Trimethyl-1,3,5-Cyclohexan-Tricarbonylchlorid, Trimesoylchlorid, oder Mischungen daraus ist.

30. Medizinische Vorrichtung gemäss Anspruch 23, wobei D OH ist, wobei die Mischung ein Carbodiimid enthält.

31. Medizinische Vorrichtung gemäss Anspruch 30, wobei das Carbodiimid ein trägergebundenes Carbodiimid ist, wobei die Mischung optional ein trägergebundenes 1-Hydroxybenzotriazol als Katalysator enthält.

32. Medizinische Vorrichtung gemäss Anspruch 30, wobei die Mischung ferner eine Aminosäure enthält.

33. Medizinische Vorrichtung gemäss Anspruch 23, wobei die multifunktionelle Verbindung eine ethylenisch-ungesättigte Gruppe und eine Carboxylsäuregruppe enthält, wobei die Reaktion zwischen der multifunktionelle Verbindung und des, mit Amin-Endgruppen versehenen Poly(oxyalkylen)-enthaltenden, Polyamid in der Gegenwart eines Carbodiimids abläuft.

34. Medizinische Vorrichtung gemäss Anspruch 33, wobei das Carbodiimid ein trägergebundenes Carbodiimid ist.

35. Medizinische Vorrichtung gemäss Anspruch 23, wobei das vernetzbare Poly(oxyalkylen)-enthaltendes Präpolymer Formel (4) entspricht,
CP-(Q)_{q} (4)
wobei q eine Zahl ≥3 ist, Q ein organisches Radikal enthaltend mindestens eine vernetzbare Gruppe ist, CP ein multivalentes lineares oder verzweigtes Copolymer-Fragment ist, welches Segmente A, A₁, T umfasst, und optional Segmente G, wobei:
A ein divalentes Radikal -(R₁-O)ₙ-(R₂-O)ₘ-(R₃-O)ₚ- ist, wobei R₁, R₂, und R₃, unabhängig voneinander, je ein lineares oder verzweigtes C₂-C₄-Alkylen- oder Hydroxysubstituiertes C₂-C₈ Alkylen Radikal sind, und n, m und p, unabhängig voneinander, je eine Zahl von 0 bis 500 sind, wobei die Summe (n+m+p) eine Zahl von 5 bis 1000 ist,
G ein lineares oder verzweigtes C₃-C₂₄ aliphatisch-trivalentes Radikal, ein C₅-C₄₅ cycloaliphatisch-trivalentes Radikal, ein C₅-C₄₅ aliphatisch-cycloaliphatisch-trivalentes Radikal, oder ein C₃-C₂₄ aromatisch- oder araliphatisch-trivalentes Radikal ist;
A₁ ein lineares oder verzweigtes C₂-C₂₄ aliphatisch-divalentes Radikal, ein C₅-C₂₄ cycloaliphatisch- oder ein aliphatisch-cycloaliphatisch-divalentes Radikal, ein C₆-C₂₄ araliphatisch divalentes Radikal, oder aliphatisch-heterocyclisch-divalentes Radikal ist, von denen jedes mindestens durch eine Gruppe der Formel -NRₘ- getrennt ist, in welcher Rₘ Wasserstoff, ein Radikal Q wie oben oder ein Radikal der Formel 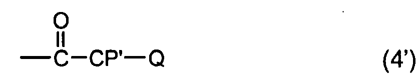 ist, wobei Q wie oben definiert ist, und CP' ein divalentes Copolymer-Fragment ist, welches Segmente A, A₁, T und G umfasst;
T ein divalentes Radikal der Formel 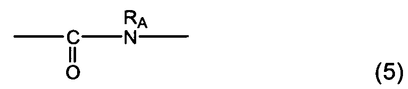 ist, wobei R_{A} Wasserstoff, ein unsubstituiertes C₁-C₆ Alkyl, oder ein substituiertes C₁-C₆ Alkyl ist;
mit der Bedingung dass in den Copolymer-Fragmenten CP und CP' ein Segment A mit einem Segment A₁ oder G durch ein Segment T verbunden ist;
mit der Bedingung dass das C-Atom von -CO- an ein Segment A₁ oder G gebunden ist wenn Rₘ ein Radikal der Formel (4') ist;
mit der Bedingung dass Q mit einem Copolymer-Fragment CP oder CP' durch ein Segment T verbunden ist.

36. Medizinische Vorrichtung gemäss Anspruch 35, wobei Q
(i) ein organisches Radikal R₅ ist, welches ein olefinisch-ungesättigtes copolymerisierbares Radikal mit 2 bis 24 Kohlenstoffatomen ist, welches weiter substituiert sein kann, oder
(ii) ein Radikal der Formeln -(NH )ᵣ-Q₁ oder -O-Q₁, wobei Q₁ ein Radikal der Formel 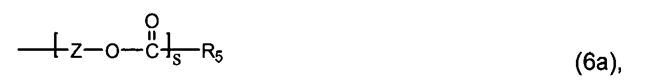 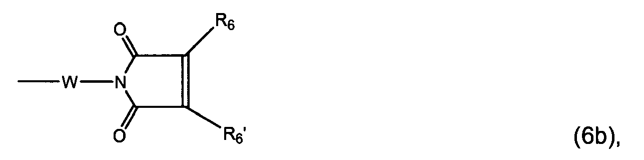 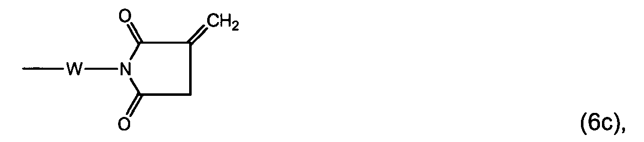 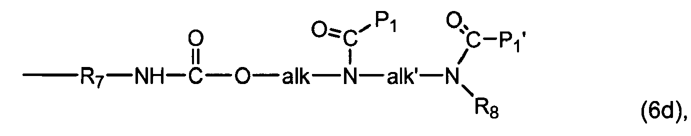 oder 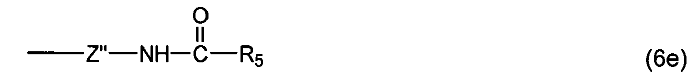 ist, und wobei
Z ein lineares oder verzweigtes C₂-C₁₂ Alkylen ist,
R₅ ein olefinisch-ungesättigtes copolymerisierbares Radikal mit 2 bis 24 Kohlenstoffatomen ist, welches weiter substituiert sein kann, W ein C₂-C₁₂ Alkylen-Radikal, ein Phenylen-Radikal oder ein C₇-C₁₂ Aralkylen-Radikal ist,
jeder der R₆ und R₆' unabhängig voneinander Wasserstoff, C₁-C₄ Alkyl oder Halogen ist, R₇ ein divalentes aliphatisches, cycloaliphatisches, aliphatisch-cycloaliphatisches, aromatisches oder araliphatisches Kohlenwasserstoff-Radikal ist,
R₈ Wasserstoff oder C₁-C₄ Alkyl ist,
jeder der alk und alk' unabhängig voneinander ein lineares oder verzweigtes C₁-C₁₂Alkylen-Radikal ist,
jeder der r und s unabhängig voneinander eine Zahl 0 oder 1 ist,
Z" ein C₁-C₆ Alkylen ist, und
P₁ und P₁' unabhängig voneinander ein Radikal der Formeln -(NH )ᵣ-Q₁ oder -O-Q₁ sind.

37. Medizinische Vorrichtung gemäss Anspruch 19, wobei Q ein Radikal der Formel 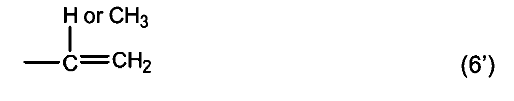 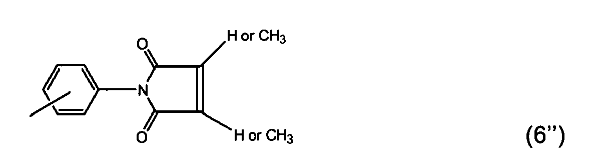 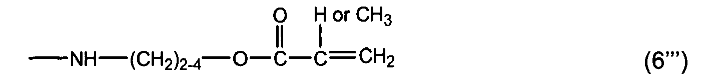 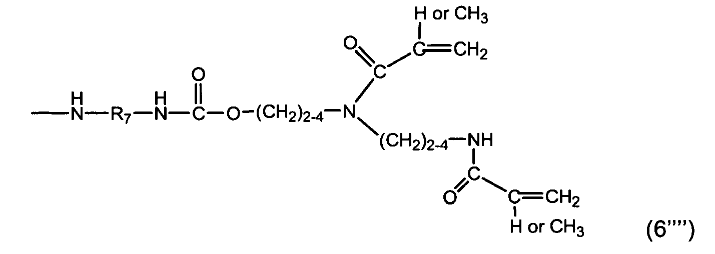 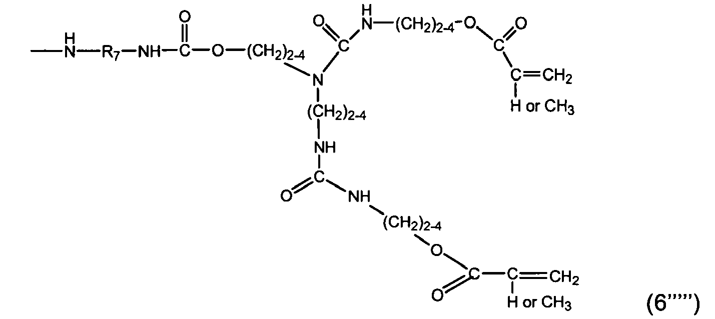 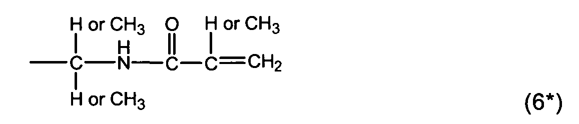 oder 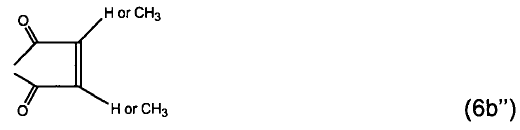 ist, wobei für R₇ in jedem Fall die Bedeutungen und bevorzugten Bedeutungen wie oben angegeben gelten.

38. Medizinische Vorrichtung gemäss Anspruch 37, wobei Q ein Radikal der Formel -(NH )₁-Q₁, ist, wobei r 0 ist und Q₁ ein Radikal der Formel (6a) ist, wobei s 0 ist, R₅ ein Radikal der Formel 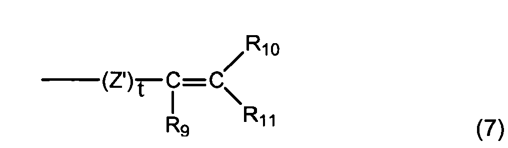 ist,
wobei t eine Zahl 0 oder 1 ist,
R₉ Wasserstoff, C₁-C₄ Alkyl oder Halogen ist,
jeder der R₁₀ und R₁₁ unabhängig voneinander Wasserstoff, C₁-C₄ Alkyl, Phenyl, Carboxy oder Halogen ist, und
Z' ein lineares oder verzweigtes C₁-C₁₂ Alkylen oder unsubstituiertes oder C₁-C₄ Alkyl- oder C₁-C₄ Alkoxy-substituiertes Phenylen oder C₇-C₁₂ Aralkylen ist.

39. Medizinische Vorrichtung gemäss Anspruch 37, wobei Q ein Radikal der Formel -(NH )ᵣ-Q₁ ist, wobei r 1 ist und Q₁ ein Radikal der Formel (6a) ist, wobei s 1 ist, R₅ ein Radikal der Formel 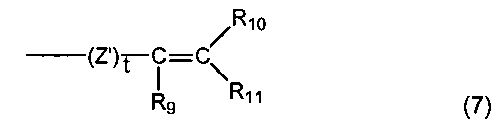 ist, wobei t 0 ist,
R₉ Wasserstoff oder C₁-C₄ Alkyl ist, R₁₀ Wasserstoff, Methyl, Chlor oder Phenyl ist, R₁₁ Wasserstoff oder Carboxy ist, und Z' ein lineares oder verzweigtes C₁-C₁₂ Alkylen ist.

40. Medizinische Vorrichtung gemäss Anspruch 23, wobei die medizinische Vorrichtung eine Kontaktlinse ist.

41. Verfahren zur Herstellung einer Kontaktlinse, welches die Schritte umfasst:
(I) Einfüllen eines fliessfähigen linsenbildenden Materials in eine Form, wobei das fliessfähige linsenbildende Material
(i) eine Flüssigkeit oder eine Schmelze eines vernetzbaren Poly(oxyalkylen)-enthaltenden Copolymer-Präpolymeren in der Gegenwart oder Abwesenheit eines oder mehrerer zusätzlicher vinylischer Comonomere und optional in der Gegenwart eines Photoinitiators ist, oder
(ii) eine wässrige Lösung des vernetzbaren Poly(oxyalkylen)-enthaltenden Copolymer-Präpolymeren mit eine Konzentration von 30 bis 90 Gewichtsprozent ist, wobei optional die Flüssigkeit oder die Schmelze im wesentlichen frei von organischen Lösungsmitteln ist, wobei die wässrige Lösung optional ein oder mehrer Verbindungen enthält, die aus der Gruppe bestehend aus physiologisch verträglichen Salzen, isotonisierende Mitteln welche üblicherweise im Gebiet der Kontaktlinsenpflegemittel eingesetzt werden, vinylischen Comonomeren und Photoinitiatoren, ausgesucht sind;
(II) Auslösen der Vernetzung des vernetzbaren Poly(oxyalkylen)-enthaltenden Copolymer-Präpolymeren durch actinische Strahlung; und
(III) Öffnen der From, so dass die Kontaktlinse aus der Form enfernt wird,
wobei das Präpolymer ein Reaktionsprodukt eines mit Amin-Endgruppen versehenen Poly(oxyalkylen)-enthaltenden Polyamid und einer multifunktionellen Verbindung mit mindestens einer ethylenisch-ungesättigten Gruppe und einer, mit der Amin-Endruppe des mit Amin-Endgruppen versehenen Poly(oxyalkylen)-enthaltenden Polyamid, coreaktiven funktionellen Gruppe ist, wobei das mit Amin-Endgruppen versehene Poly(oxyalkylen)-enthaltende Polyamid ein Copolymerisationsprodukt einer Mischung enthaltend die folgenden Verbindungen ist:
(a) mindestens ein Aminoalkyl-polyalkylenglykol der Formel (1)
CG-(R₁-O)ₙ-(R₂-O)ₘ,-(R₃ -O)ₚ-CG' (1)
wobei CG und CG' unabhängig voneinander eine primäre oder sekundäre Amingruppe, oder ein Amino-C₁-C₁₂ alkyl, R₁, R₂, und R₃, unabhängig voneinander, je ein lineares oder verzweigtes C₂-C₄-Alkylen oder Hydroxy-substitutiertes C₂-C₈ Alkylen Radikal sind, und n, m und p, unabhängig voneinander, je eine Zahl von 0 bis 500 sind, wobei die Summe (n+m+p) eine Zahl von 5 bis 1000 ist,
(b) optional mindestens ein organisches Di- oder Polyamin, wobei das organische Diamin ein lineares oder verzweigtes C₂-C₂₄ aliphatisches Diamin, ein C₅-C₂₄ cycloaliphatisches oder aliphatisch-cycloaliphatisches Diamin, oder ein C₆-C₂₄ aromatisches oder araliphatisches Diamin ist, und wobei das organische Polyamin eine Verbindung der Formel 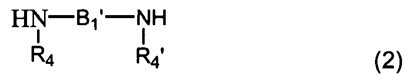 ist, wobei R₄ und R₄' unabhängig voneinander Wasserstoff oder unsubstituiertes oder substituiertes C₁-C₆ Alkyl oder zusammen eine direkte Bindung oder eine ringförmige Bindung sind, und B₁' ein divalentes Radikal ausgewält aus der Gruppe bestehend aus einem linearen oder verzweigten C₃-C₂₄ Alkylen, einem unsubstituierten C₆-C₁₀ Arylen, einem C₁-C₄ alkylsubstituierten C₆-C₁₀ Arylen, einem C₇-C₁₈ Aralkylen, C₆-C₁₀ Arylen-C₁-C₂ Alkylen-C₆-C₁₀ Arylen, C₃-C₈ Cycloalkylen, C₃-C₈ Cycloalkylen-C₁-C₆ Alkylen, C₃-C₈ Cycloalkylen-C₁-C₂ Alkylen-C₃-C₈ Cycloalkylen oder C₁-C₆ Alkylen-C₃-C₈ Cycloalkylen-C₁-C₆ Alkylen ist, von denen jedes mindestens durch eine divalente Amingruppe (-NH-) getrennt ist oder eine primäre oder sekundäre Amingruppe aufweist,
(c) mindestens ein Dicarboxylderivat welches eine organische Verbindung mit zwei 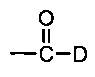 Gruppen ist, wobei D Halogenid, OH, oder Alkoxyl, Cycloalkoxyl, oder Aralkoxyl ist, wobei das Dicarboxylderivat erhalten wird aus einer linearen oder verzweigten C₃-C₂₄ aliphatischen Dicarboxylsäure, einer C₅-C₂₄ cycloaliphatischen oder aliphatischcycloaliphatischen Dicarboxylsäure, einer C₆-C₂₄ aromatischen oder araliphatischen Dicarboxylsäure, oder einer Dicarboxylsäure welche Amino- oder Imidogruppen oder N-heterocyclische Ringe enthält,
(d) mindestens ein Polycarboxylderivat welches eine organische Verbindung mit drei oder mehr 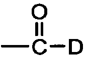 Gruppen ist, wobei D wie oben definiert ist, und
(e) optional ein Carbodiimid.

42. Verfahren gemäss Anspruch 41, wobei das strahlungshärtbare Präpolymer vor dem Schritt des Einfüllens im wesentlichen gereinigt wird.

43. Verfahren gemäss Anspruch 42, wobei das fliessfähige zu formende Material die wässrige Lösung ist, wobei das strahlungshärtbare Präpolymer vor dem Schritt des Einfüllens im wesentlichen gereinigt wird.

44. Verfahren gemäss Anspruch 43, wobei die wässrige Lösung Puffersalze enthält welche üblicherweise im Gebiet der Kontaktlinsenpflege eingesetzt werden und/oder isotonisierende Mittel enthält welche üblicherweise im Gebiet der Kontaktlinsenpflege eingesetzt werden.

45. Verfahren gemäss Anspruch 42, wobei das fliessfähige zu formende Material die Flüssigkeit oder die Schmelze ist.

46. Verfahren gemäss Anspruch 45, ferner umfassend den Schritt (IV) Hydratisieren der Kontaktlinse in Wasser, in einer wässrigen Salzlösung mit einer Osmolarität von 200 bis 450 mOsm/ml, oder in einer Mischung aus Wasser oder einer wässrigen Salzlösung mit einem physiologisch verträglichen polaren organischen Lösungsmittel.

## Revendications

1. Prépolymère réticulable de copolymère contenant un poly(oxyalkylène), qui est un produit réactionnel d'un polyamide contenant un poly(oxyalkylène) coiffé par une amine et d'un composé multifonctionnel ayant au moins un groupe éthyléniquement insaturé et un groupe fonctionnel coréactif avec les groupes amine coiffants du polyamide contenant un poly(oxyalkylène) coiffé par une amine, le polyamide contenant un poly(oxyalkylène) coiffé par une amine étant un produit de copolymérisation d'un mélange comprenant les composants suivants :
(a) au moins un polyalkylèneglycol aminoalkylé de formule (1) :
CG-(R₁-O)ₙ-(R₂-O)ₘ-(R₃-O)ₚ-CG' (1)
dans laquelle CG et CG' représentent indépendamment l'un de l'autre un groupe amino primaire ou secondaire ou un groupe aminoalkyle en C₁ à C₁₂, R₁, R₂ et R₃ représentent chacun indépendamment les uns des autres un radical alkylène en C₂ à C₄ linéaire ou ramifié ou un radical alkylène en C₂ à C₈ substitué par un groupe hydroxy, et n, m et p représentent chacun indépendamment les uns des autres un nombre de 0 à 500, la somme (n + m + p) ayant une valeur de 5 à 1000,
(b) éventuellement, au moins une di- ou polyamine organique, la diamine organique étant une diamine aliphatique en C₂ à C₂₄ linéaire ou ramifiée, une diamine cycloaliphatique ou aliphatique - cycloaliphatique en C₅ à C₂₄, ou une diamine aromatique ou araliphatique en C₆ à C₂₄, et la polyamine organique étant un composé de formule : 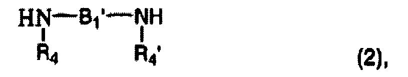 dans laquelle R₄ et R₄' représentent indépendamment l'un de l'autre l'hydrogène ou un groupe alkyle en C₁ à C₆ non substitué ou substitué, ou représentent conjointement une liaison directe formant un cycle, et B₁' est un radical bivalent choisi dans le groupe constitué par un groupe alkylène en C₃ à C₂₄ linéaire ou ramifié, un groupe arylène en C₆ à C₁₀ non substitué, un groupe arylène en C₆ à C₁₀ substitué par un groupe alkyle en C₁ à C₄, un groupe aralkylène en C₇ à C_{18,} un groupe arylène en C₆ à C₁₀ - alkylène en C₁ ou C₂ - arylène en C₆ à C₁₀, un groupe cycloalkylène en C₃ à C₈, un groupe cycloalkylène en C₃ à C₈ - alkylène en C₁ à C₆, un groupe cycloalkylène en C₃ à C₈ - alkylène en C₁ ou C₂ - cycloalkylène en C₃ à C₈, et un groupe alkylène en C₁ à C₆ - cycloalkylène en C₃ à C₈ - alkylène en C₁ à C₆, chacun d'entre eux étant interrompu par au moins un groupe amine bivalent (-NH-) ou ayant un groupe amine primaire ou secondaire,
(c) au moins un dérivé dicarboxylique qui est un composé organique ayant deux groupes : 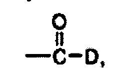 dans lesquels D représente un halogénure, OH, ou un groupe alkoxyle, cycloalkoxyle ou aralkoxyle, le dérivé dicarboxylique étant dérivé d'un acide dicarboxylique aliphatique en C₃ à C₂₄ linéaire ou ramifié, d'un acide dicarboxylique cycloaliphatique ou aliphatique - cycloaliphatique en C₅ à C₂₄, d'un acide dicarboxylique aromatique ou araliphatique en C₆ à C₂₄, ou d'un acide dicarboxylique qui contient des groupes amino ou imido ou des cycles N-hétérocycliques,
(d) au moins un dérivé polycarboxylique qui est un composé organique ayant au moins trois groupes : 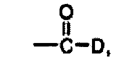 dans lesquels D est tel que défini ci-dessus, et
(e) éventuellement, un carbodiimide.

2. Prépolymère réticulable contenant un poly(oxyalkylène) selon la revendication 1, dans lequel D est un halogénure.

3. Prépolymère réticulable contenant un poly(oxyalkylène) selon la revendication 2, dans lequel D est un chlorure.

4. Prépolymère réticulable contenant un poly(oxyalkylène) selon la revendication 3, dans lequel le dérivé dicarboxylique est un chlorure de diacide qui est le chlorure de fumaryle, le chlorure de subéroyle, le chlorure de succinyle, le chlorure de phtaloyle, le chlorure d'isophtaloyle, le chlorure de téréphtaloyle, le chlorure de sébacoyle, le chlorure d'adipoyle, le chlorure de triméthyladipoyle, le chlorure d'azélaoyle, le chlorure d'acide dodécanedioïque, le chlorure succinique, le chlorure glutarique, le chlorure d'oxalyle, le chlorure de cyclobutanedicarbonyle, le chlorure de cyclopentanedicarbonyle, le chlorure de cyclohexanedicarbonyle, le chlorure de méthylcyclohexanedicarbonyle, le chlorure de dicyclohexyldicarbonyle, un chlorure d'acide dimère, ou des mélanges de ceux-ci.

5. Prépolymère réticulable contenant un poly(oxyalkylène) selon la revendication 2, dans lequel le mélange comprend un halogénure de tricarbonyle.

6. Prépolymère réticulable contenant un poly(oxyalkylène) selon la revendication 5, dans lequel l'halogénure de tricarbonyle est un halogénure de tricarbonyle cycloaliphatique, un chlorure de tricarbonyle aliphatique - cycloaliphatique, un chlorure de tricarbonylbenzène, ou des mélanges de ceux-ci.

7. Prépolymère réticulable contenant un poly(oxyalkylène) selon la revendication 6, dans lequel l'halogénure de tricarbonyle est le chlorure de 1,3,5-tricarbonylcyclohexane, le chlorure de 1,3,5-triméthyl-1,3,5-tricarbonylcyclohexane, le chlorure de trimésoyle, ou des mélanges de ceux-ci.

8. Prépolymère réticulable contenant un poly(oxyalkylène) selon la revendication 1, dans lequel D représente OH, et dans lequel le mélange comprend un carbodiimide.

9. Prépolymère réticulable contenant un poly(oxyalkylène) selon la revendication 8, dans lequel le carbodiimide est le 1-éthyl-3-(3-diméthylaminopropyl)carbodiimide (EDC), le N,N'-dicyclohexylcarbodiimide (DCC), le 1-cyclohexyl-3-(2-morpholinoéthyl)carbodiimide, le diisopropylcarbodiimide, ou des mélanges de ceux-ci.

10. Prépolymère réticulable contenant un poly(oxyalkylène) selon la revendication 8, dans lequel le carbodiimide est un carbodiimide lié à une résine, et dans lequel le mélange comprend éventuellement comme catalyseur un composé 1-hydroxybenzotriazole lié à une résine.

11. Prépolymère réticulable contenant un poly(oxyalkylène) selon la revendication 8, dans lequel le mélange comprend en outre un acide aminé.

12. Prépolymère réticulable contenant un poly(oxyalkylène) selon la revendication 1, dans lequel le composé multifonctionnel comprend un groupe éthyléniquement insaturé et un groupe acide carboxylique, la réaction entre le composé multifonctionnel et le polyamide contenant un poly(oxyalkylène) coiffé par une amine ayant lieu en présence d'un carbodiimide.

13. Prépolymère réticulable contenant un poly(oxyalkylène) selon la revendication 12, dans lequel le carbodiimide est un carbodiimide lié à une résine.

14. Prépolymère réticulable contenant un poly(oxyalkylène) répondant à la formule (4) :
CP-(Q)_{q} (4)
dans laquelle q est un nombre entier ≥ 3, Q est un radical organique qui comprend au moins un groupe réticulable, CP est un fragment multivalent de copolymère linéaire ou ramifié comprenant des segments A, A₁, T, et éventuellement des segments G, dans lequel :
A est le radical bivalent -(R₁-O)ₙ-(R₂-O)ₘ-(R₃-O)ₚ-, dans lequel R₁, R₂ et R₃ représentent chacun indépendamment les uns des autres un radical alkylène en C₂ à C₄ linéaire ou ramifié ou un radical alkylène en C₂ à C₈ substitué par un groupe hydroxy, et n, m et p représentent chacun indépendamment les uns des autres un nombre de 0 à 500, la somme (n + m + p) ayant une valeur de 5 à 1000 ;
G est un radical trivalent aliphatique en C₃ à C₂₄ linéaire ou ramifié, un radical trivalent cycloaliphatique en C₅ à C₄₅, un radical trivalent aliphatique - cycloaliphatique en C₅ à C₄₅, ou un radical trivalent aromatique ou araliphatique en C₃ à C₂₄ ;
A₁ est un radical bivalent aliphatique en C₂ à C₂₄ linéaire ou ramifié, un radical bivalent cycloaliphatique ou aliphatique - cycloaliphatique en C₅ à C₂₄, un radical bivalent araliphatique en C₆ à C₂₄, ou un radical bivalent aliphatique - hétérocyclique, chacun d'entre eux étant interrompu par au moins un groupe de formule -NRₘ-, dans lequel Rₘ représente l'hydrogène, un radical Q mentionné ci-dessus, ou un radical de formule : 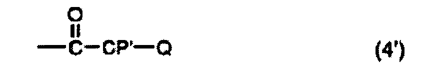 dans laquelle Q est tel que défini ci-dessus, et CP' est un fragment bivalent de copolymère comprenant un ou plusieurs segments choisis dans le groupe constitué par A, A₁, T et G ;
T est un radical bivalent de formule : 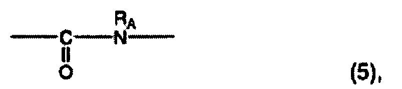 dans laquelle R_{A} représente l'hydrogène, un groupe alkyle en C₁ à C₆ non substitué, ou un groupe alkyle en C₁ à C₆ substitué ;
sous réserve que, dans les fragments de copolymère CP et CP', un segment A soit lié à un segment A₁ ou G par l'intermédiaire d'un segment T ;
sous réserve que l'atome C de -CO- soit lié à un segment A₁ ou G lorsque Rₘ est un radical de formule (4') ;
sous réserve que Q soit lié au fragment de copolymère CP ou CP' par l'intermédiaire d'un segment T.

15. Prépolymère réticulable de copolymère contenant un poly(oxyalkylène) selon la revendication 14, dans lequel Q représente :
(i) un radical organique R₅ qui est un radical copolymérisable oléfiniquement insaturé ayant 2 à 24 atomes de carbone, qui peut être en outre substitué, ou
(ii) un radical de formule -(NH)ᵣ-Q₁ ou -O-Q₁, dans lequel Q₁ représente : 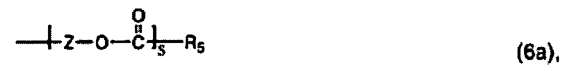 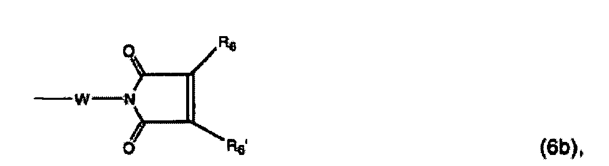 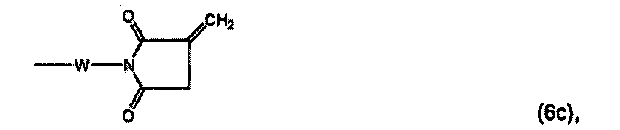 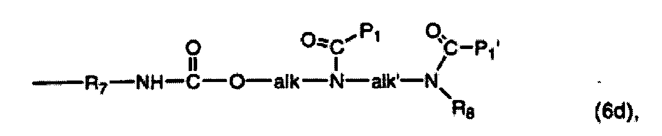 ou 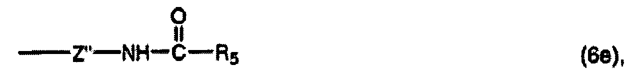 et dans lequel :
Z est un groupe alkylène en C₂ à C₁₂ linéaire ou ramifié,
W est un radical alkylène en C₂ à C₁₂, un radical phénylène, ou un radical aralkylène en C₇ à C₁₂,
R₆ et R₆' représentent indépendamment l'un de l'autre l'hydrogène, un groupe alkyle en C₁ à C₄, ou un halogène,
R₇ est un radical hydrocarboné bivalent aliphatique, cycloaliphatique, aliphatique - cycloaliphatique, aromatique ou araliphatique,
R₈ représente l'hydrogène ou un groupe alkyle en C₁ à C₄,
alk et alk' représentent indépendamment l'un de l'autre un radical alkylène en C₁ à C₁₂ linéaire ou ramifié,
r et s représentent indépendamment l'un de l'autre le nombre 0 ou 1,
Z" est un groupe alkylène en C₁ à C₆, et
P₁ et P₁' représentent indépendamment l'un de l'autre un radical de formule -(NH)ᵣ-Q₁ ou -O-Q₁, dans lequel Q₁ est un radical de formule (6a), (6b), (6c) ou (6e) ci-dessus.

16. Prépolymère réticulable de copolymère contenant un poly(oxyalkylène) selon la revendication 15, dans lequel Q est un radical de formule -(NH)ᵣ-Q₁, dans laquelle r vaut 0 et Q₁ est un radical de formule (6a) dans laquelle s vaut 0, R₅ est un radical de formule : 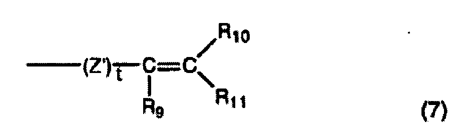 dans laquelle t est le nombre 0 ou 1,
R₉ représente l'hydrogène, un groupe alkyle en C₁ à C₄, ou un halogène, R₁₀ et R₁₁ représentent indépendamment l'un de l'autre l'hydrogène, un groupe alkyle en C₁ à C₄, un groupe phényle, un groupe carboxy ou un halogène, et
Z' est un groupe alkylène en C₁ à C₁₂ linéaire ou ramifié, un groupe phénylène non substitué ou substitué par un groupe alkyle en C₁ à C₄ ou par un groupe alkoxy en C₁ à C₄, ou un groupe aralkylène en C₇ à C₁₂.

17. Prépolymère réticulable de copolymère contenant un poly(oxyalkylène) selon la revendication 15, dans lequel Q est un radical de formule -(NH)ᵣ-Q₁, dans laquelle r vaut 1 et Q₁ est un radical de formule (6a), dans laquelle s vaut 1, R₅ est un radical de formule : 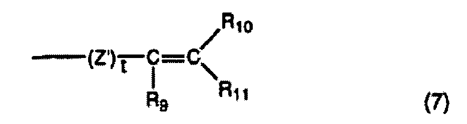 dans laquelle t vaut 0,
R₉ représente l'hydrogène ou un groupe alkyle en C₁ à C₄, R₁₀ représente l'hydrogène, un groupe méthyle, le chlore ou un groupe phényle, R₁₁ représente l'hydrogène ou un groupe carboxy, et Z' est un groupe alkylène en C₁ à C₁₂ linéaire ou ramifié.

18. Prépolymère réticulable de copolymère contenant un poly(oxyalkylène) selon la revendication 15, dans lequel Q est un radical de formule : 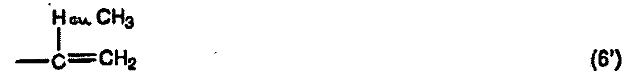 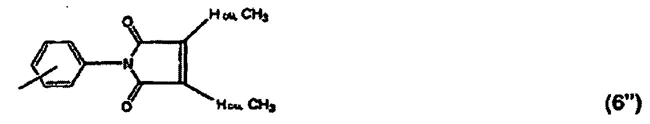 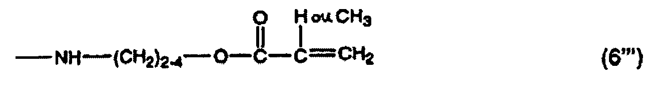 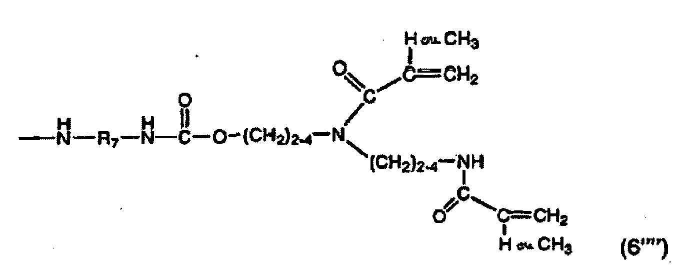 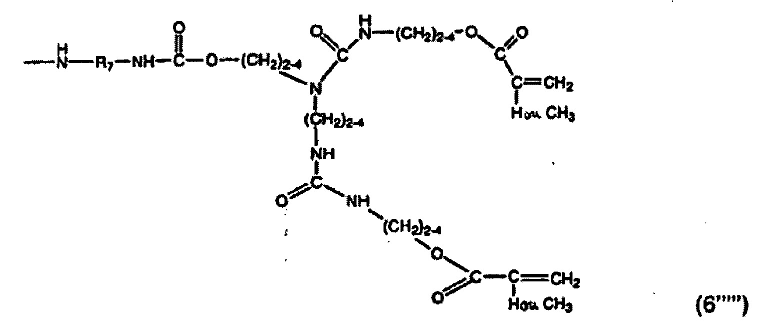 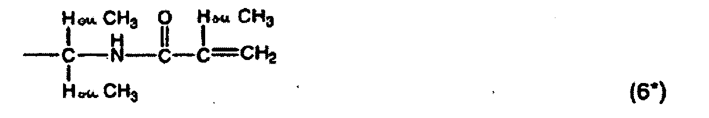 ou 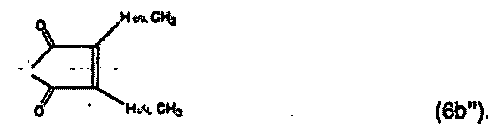 où pour R₇, les significations et les préférences indiquées ci-dessus s'appliquent dans chaque cas.

19. Prépolymère réticulable de copolymère contenant un poly(oxyalkylène) selon la revendication 18, dans lequel Q est un radical de formule (6') ou (6"').

20. Polymère obtenu en réticulant un prépolymère réticulable contenant un poly(oxyalkylène) selon l'une quelconque des revendications 1 à 13, en la présence ou en l'absence d'un monomère vinylique additionnel.

21. Polymère selon la revendication 20, obtenu en réticulant un prépolymère réticulable de copolymère contenant un poly(oxyalkylène) selon l'une quelconque des revendications 1 à 13, en l'absence d'un monomère vinylique additionnel.

22. Polymère obtenu en réticulant un prépolymère réticulable contenant un poly(oxyalkylène) selon l'une quelconque des revendications 14 à 19, en la présence ou en l'absence d'un monomère vinylique additionnel.

23. Dispositif médical, comprenant un hydrogel de copolymère contenant un poly(oxyalkylène) qui est un produit de réticulation actinique d'un prépolymère réticulable contenant un poly(oxyalkylène), en l'absence ou en la présence d'un monomère vinylique additionnel et éventuellement en présence d'un photo-initiateur, où le prépolymère est un produit réactionnel d'un polyamide contenant un poly(oxyalkylène) coiffé par une amine et d'un composé multifonctionnel ayant au moins un groupe éthyléniquement insaturé et un groupe fonctionnel coréactif avec les groupes amine coiffants du polyamide contenant un poly(oxyalkylène) coiffé par une amine, le polyamide contenant un poly(oxyalkylène) coiffé par une amine étant un produit de copolymérisation d'un mélange comprenant les composants suivants :
(a) au moins un polyalkylèneglycol aminoalkylé de formule (1) :
CG-(R₁-O)ₙ-(R₂-O)ₘ-(R₃-O)ₚ-CG' (1)
dans laquelle CG et CG' représentent indépendamment l'un de l'autre un groupe amino primaire ou secondaire ou un groupe aminoalkyle en C₁ à C₁₂, R₁, R₂ et R₃ représentent chacun indépendamment les uns des autres un radical alkylène en C₂ à C₄ linéaire ou ramifié ou un radical alkylène en C₂ à C₈ substitué par un groupe hydroxy, et n, m et p représentent chacun indépendamment les uns des autres un nombre de 0 à 100, la somme (n + m + p) ayant une valeur de 5 à 1000,
(b) éventuellement, au moins une di- ou polyamine organique, la diamine organique étant une diamine aliphatique en C₂ à C₂₄ linéaire ou ramifiée, une diamine cycloaliphatique ou aliphatique - cycloaliphatique en C₅ à C₂₄, ou une diamine aromatique ou araliphatique en C₆ à C₂₄, et la polyamine organique étant un composé de formule : 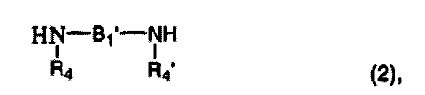 dans laquelle R₄ et R₄' représentent indépendamment l'un de l'autre l'hydrogène ou un groupe alkyle en C₁ à C₆ non substitué ou substitué, ou représentent conjointement une liaison directe formant un cycle, et B₁' est un radical bivalent choisi dans le groupe constitué par un groupe alkylène en C₃ à C₂₄ linéaire ou ramifié, un groupe arylène en C₆ à C₁₀ non substitué, un groupe arylène en C₆ à C₁₀ substitué par un groupe alkyle en C₁ à C₄, un groupe aralkylène en C₇ à C₁₈, un groupe arylène en C₆ à C₁₀ - alkylène en C₁ ou C₂ - arylène en C₆ à C₁₀, un groupe cycloalkylène en C₃ à C₈, un groupe cycloalkylène en C₃ à C₈ - alkylène en C₁ à C₆, un groupe cycloalkylène en C₃ à C₈ - alkylène en C₁ ou C₂ - cycloalkylène en C₃ à C₈, et un groupe alkylène en C₁ à C₆ - cycloalkylène en C₃ à C₈ - alkylène en C₁ à C₆, chacun d'entre eux étant interrompu par au moins un groupe amine bivalent (-NH-) ou ayant un groupe amine primaire ou secondaire,
(c) au moins un dérivé dicarboxylique qui est un composé organique ayant deux groupes : 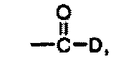 dans lesquels D représente un halogénure, OH, ou un groupe alkoxyle, cycloalkoxyle ou aralkoxyle, le dérivé dicarboxylique étant dérivé d'un acide dicarboxylique aliphatique en C₃ à C₂₄ linéaire ou ramifié, d'un acide dicarboxylique cycloaliphatique ou aliphatique - cycloaliphatique en C₅ à C₂₄, d'un acide dicarboxylique aromatique ou araliphatique en C₆ à C₂₄, ou d'un acide dicarboxylique qui contient des groupes amino ou imido ou des cycles N-hétérocycliques,
(d) au moins un dérivé polycarboxylique qui est un composé organique ayant au moins trois groupes : 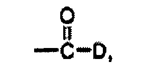 dans lesquels D est tel que défini ci-dessus, et
(e) éventuellement, un carbodiimide.

24. Dispositif médical selon la revendication 23, dans lequel D est un halogénure.

25. Dispositif médical selon la revendication 24, dans lequel D est un chlorure.

26. Dispositif médical selon la revendication 25, dans lequel le dérivé dicarboxylique est un chlorure de diacide qui est le chlorure de fumaryle, le chlorure de subéroyle, le chlorure de succinyle, le chlorure de phtaloyle, le chlorure d'isophtaloyle, le chlorure de téréphtaloyle, le chlorure de sébacoyle, le chlorure d'adipoyle, le chlorure de triméthyladipoyle, le chlorure d'azélaoyle, le chlorure d'acide dodécanedioïque, le chlorure succinique, le chlorure glutarique, le chlorure d'oxalyle, le chlorure de cyclobutanedicarbonyle, le chlorure de cyclopentanedicarbonyle, le chlorure de cyclohexanedicarbonyle, le chlorure de méthylcyclohexanedicarbonyle, le chlorure de dicyclohexyldicarbonyle, un chlorure d'acide dimère, ou des mélanges de ceux-ci.

27. Dispositif médical selon la revendication 24, dans lequel le mélange comprend un halogénure de tricarbonyle.

28. Dispositif médical selon la revendication 27, dans lequel l'halogénure de tricarbonyle est un halogénure de tricarbonyle cycloaliphatique, un chlorure de tricarbonyle aliphatique - cycloaliphatique, un chlorure de tricarbonylbenzène, ou des mélanges de ceux-ci.

29. Dispositif médical selon la revendication 28, dans lequel l'halogénure de tricarbonyle est le chlorure de 1,3,5-tricarbonylcyclohexane, le chlorure de 1,3,5-triméthyl-1,3,5-tricarbonylcyclohexane, le chlorure de trimésoyle, ou des mélanges de ceux-ci.

30. Dispositif médical selon la revendication 23, dans lequel D représente OH, et dans lequel le mélange comprend un carbodiimide.

31. Dispositif médical selon la revendication 30, dans lequel le carbodiimide est un carbodiimide lié à une résine, et dans lequel le mélange comprend éventuellement comme catalyseur un composé 1-hydroxybenzotriazole lié à une résine.

32. Dispositif médical selon la revendication 30, dans lequel le mélange comprend en outre un acide aminé.

33. Dispositif médical selon la revendication 23, dans lequel le composé multifonctionnel comprend un groupe éthyléniquement insaturé et un groupe acide carboxylique, la réaction entre le composé multifonctionnel et le polyamide contenant un poly(oxyalkylène) coiffé par une amine ayant lieu en présence d'un carbodiimide.

34. Dispositif médical selon la revendication 33, dans lequel le carbodiimide est un carbodiimide lié à une résine.

35. Dispositif médical selon la revendication 23, dans lequel le prépolymère réticulable contenant un poly(oxyalkylène) répond à la formule (4) :
CP-(Q)_{q} (4)
dans laquelle q est un nombre entier ≥ 3, Q est un radical organique qui comprend au moins un groupe réticulable, CP est un fragment multivalent de copolymère linéaire ou ramifié comprenant des segments A, A₁, T, et éventuellement des segments G, dans lesquels :
A est le radical bivalent -(R₁-O)ₙ-(R₂-O)ₘ-(R₃-O)ₚ-, dans lequel R₁, R₂ et R₃ représentent chacun indépendamment les uns des autres un radical alkylène en C₂ à C₄ linéaire ou ramifié ou un radical alkylène en C₂ à C₈ substitué par un groupe hydroxy, et n, m et p représentent chacun indépendamment les uns des autres un nombre de 0 à 500, la somme (n + m + p) ayant une valeur de 5 à 1000 ;
G est un radical trivalent aliphatique en C₃ à C₂₄ linéaire ou ramifié, un radical trivalent cycloaliphatique en C₅ à C₄₅, un radical trivalent aliphatique - cycloaliphatique en C₅ à C₄₅, ou un radical trivalent aromatique ou araliphatique en C₃ à C₂₄ ;
A₁ est un radical bivalent aliphatique en C₂ à C₂₄ linéaire ou ramifié, un radical bivalent cycloaliphatique ou aliphatique - cycloaliphatique en C₅ à C₂₄, un radical bivalent araliphatique en C₆ à C₂₄, ou un radical bivalent aliphatique - hétérocyclique, chacun d'entre eux étant interrompu par au moins un groupe de formule -NRₘ-, dans lequel Rₘ représente l'hydrogène, un radical Q mentionné ci-dessus, ou un radical de formule : 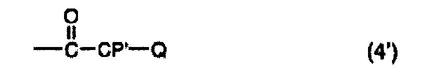 dans laquelle Q est tel que défini ci-dessus, et CP' est un fragment bivalent de copolymère comprenant un ou plusieurs segments choisis dans le groupe constitué par A, A₁, T et G ;
T est un radical bivalent de formule : 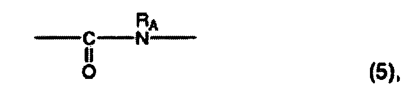 dans laquelle R_{A} représente l'hydrogène, un groupe alkyle en C₁ à C₆ non substitué, ou un groupe alkyle en C₁ à C₆ substitué ;
sous réserve que, dans les fragments de copolymère CP et CP', un segment A soit lié à un segment A₁ ou G par l'intermédiaire d'un segment T ;
sous réserve que l'atome C de -CO- soit lié à un segment A₁ ou G lorsque Rₘ est un radical de formule (4') ;
sous réserve que Q soit lié au fragment de copolymère CP ou CP' par l'intermédiaire d'un segment T.

36. Dispositif médical selon la revendication 35, dans lequel Q représente :
(i) un radical organique R₅ qui est un radical copolymérisable oléfiniquement insaturé ayant 2 à 24 atomes de carbone, qui peut être en outre substitué, ou
(ii) un radical de formule -(NH)ᵣ-Q₁ ou -O-Q₁, dans lequel Q₁ représente un radical de formule : 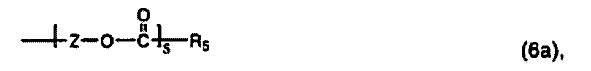 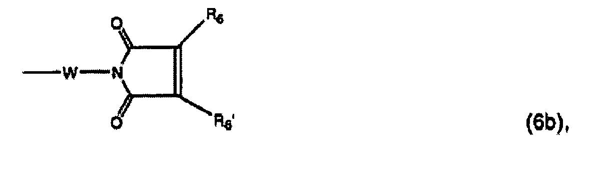 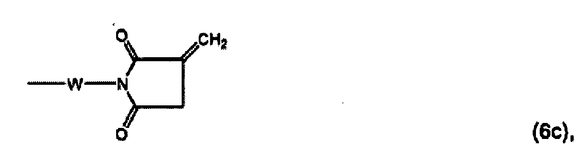 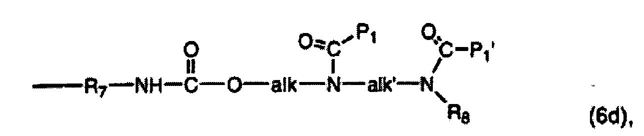 ou 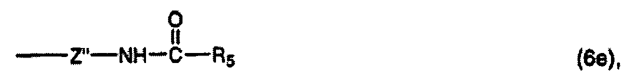 et dans lequel :
Z est un groupe alkylène en C₂ à C₁₂ linéaire ou ramifié,
R₅ est un radical copolymérisable oléfiniquement insaturé ayant 2 à 24 atomes de carbone, qui peut en outre être substitué,
W est un radical alkylène en C₂ à C₁₂, un radical phénylène, ou un radical aralkylène en C₇ à C₁₂,
R₆ et R₆' représentent indépendamment l'un de l'autre l'hydrogène, un groupe alkyle en C₁ à C₄, ou un halogène,
R₇ est un radical hydrocarboné bivalent aliphatique, cycloaliphatique, aliphatique - cycloaliphatique, aromatique ou araliphatique,
R₈ représente l'hydrogène ou un groupe alkyle en C₁ à C₄,
alk et alk' représentent indépendamment l'un de l'autre un radical alkylène en C₁ à C₁₂ linéaire ou ramifié,
r et s représentent indépendamment l'un de l'autre le nombre 0 ou 1,
Z" est un groupe alkylène en C₁ à C₆, et
P₁ et P₁' représentent indépendamment l'un de l'autre un radical de formule -(NH)ᵣ-Q₁ ou -O-Q₁.

37. Dispositif médical selon la revendication 19, dans lequel Q est un radical de formule : 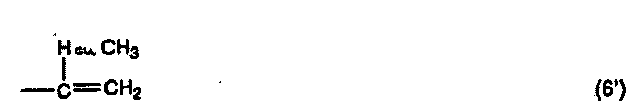 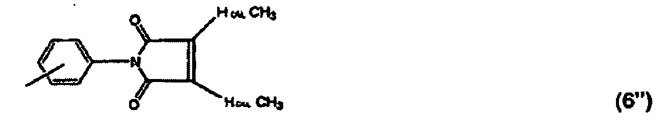 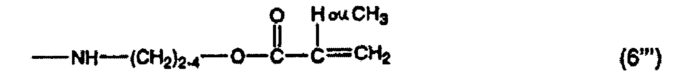 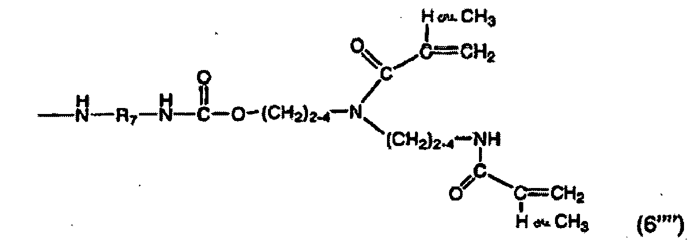 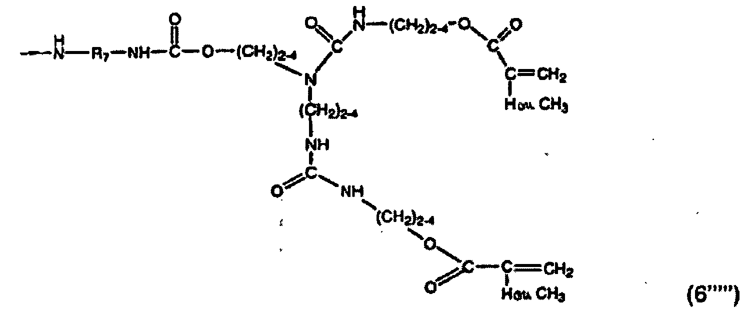 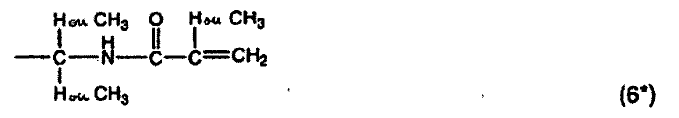 ou 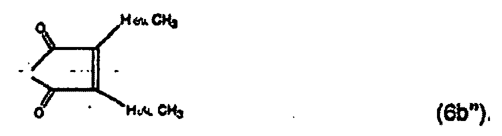 où pour R₇, les significations et les préférences indiquées ci-dessus s'appliquent dans tous les cas.

38. Dispositif médical selon la revendication 37, dans lequel Q est un radical de formule -(NH)ᵣ-Q₁, dans laquelle r vaut 0 et Q₁ est un radical de formule (6a) dans laquelle s vaut 0, R₅ est un radical de formule : 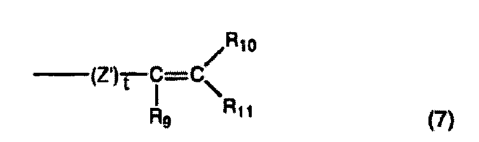 dans laquelle t est le nombre 0 ou 1,
R₉ représente l'hydrogène, un groupe alkyle en C₁ à C₄, ou un halogène,
R₁₀ et R₁₁ représentent indépendamment l'un de l'autre l'hydrogène, un groupe alkyle en C₁ à C₄, un groupe phényle, un groupe carboxy, ou un halogène, et
Z' est un groupe alkylène en C₁ à C₁₂ linéaire ou ramifié, un groupe phénylène non substitué ou substitué par un groupe alkyle en C₁ à C₄ ou par un groupe alkoxy en C₁ à C₄, ou un groupe aralkylène en C₇ à C₁₂.

39. Dispositif médical selon la revendication 37, dans lequel Q est un radical de formule -(NH)ᵣ-Q₁ dans laquelle r vaut 1 et Q₁ est un radical de formule (6a), dans laquelle s vaut 1, R₅ est un radical de formule : 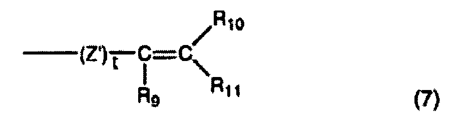 dans laquelle t vaut 0,
R₉ représente l'hydrogène ou un groupe alkyle en C₁ à C₄, R₁₀ représente l'hydrogène, un groupe méthyle, le chlore ou un groupe phényle, R₁₁ représente l'hydrogène ou un groupe carboxy, et Z' est un groupe alkylène en C₁ à C₁₂ linéaire ou ramifié.

40. Dispositif médical selon la revendication 23, dans lequel le dispositif médical est une lentille de contact.

41. Procédé de fabrication d'une lentille de contact, comprenant les étapes consistant à :
(I) introduire une matière fluide de formation de lentille dans un moule, la matière fluide de formation de lentille étant (i) un liquide ou un produit fondu d'un prépolymère réticulable de copolymère contenant un poly(oxyalkylène) en la présence ou en l'absence d'un ou plusieurs comonomères vinyliques additionnels et éventuellement en présence d'un photo-initiateur, ou (ii) une solution aqueuse du prépolymère réticulable de copolymère contenant un poly(oxyalkylène) à une concentration de 30 % à 90 % en poids, le liquide ou le produit fondu étant éventuellement essentiellement dépourvu de solvants, la solution aqueuse contenant éventuellement un ou plusieurs composés choisis dans le groupe constitué par des sels physiologiquement compatibles, des agents d'isotonicité classiquement utilisés dans le domaine de l'entretien des lentilles de contact, des comonomères vinyliques et des photo-initiateurs ;
(II) initier par un rayonnement actinique la réticulation du prépolymère réticulable de copolymère contenant un poly(oxyalkylène) ; et
(III) ouvrir le moule de telle sorte que la lentille de contact soit retirée du moule,
le prépolymère étant un produit réactionnel d'un polyamide contenant un poly(oxyalkylène) coiffé par une amine et d'un composé multifonctionnel ayant au moins un groupe éthyléniquement insaturé et un groupe fonctionnel coréactif avec les groupes amine coiffants du polyamide contenant un poly(oxyalkylène) coiffé par une amine, le polyamide contenant un poly(oxyalkylène) coiffé par une amine étant un produit de copolymérisation d'un mélange comprenant les composants suivants :
(a) au moins un polyalkylèneglycol aminoalkylé de formule (1) :
CG-(R₁-O)ₙ-(R₂-O)ₘ-(R₃-O)ₚ-CG' (1)
dans laquelle CG et CG' représentent indépendamment l'un de l'autre un groupe amino primaire ou secondaire ou un groupe aminoalkyle en C₁ à C₁₂, R₁, R₂ et R₃ représentent chacun indépendamment les uns des autres un radical alkylène en C₂ à C₄ linéaire ou ramifié ou un radical alkylène en C₂ à C₈ substitué par un groupe hydroxy, et n, m et p représentent chacun indépendamment les uns des autres un nombre de 0 à 100, la somme (n + m + p) ayant une valeur de 5 à 1000,
(b) éventuellement, au moins une di- ou polyamine organique, la diamine organique étant une diamine aliphatique en C₂ à C₂₄ linéaire ou ramifiée, une diamine cycloaliphatique ou aliphatique - cycloaliphatique en C₅ à C₂₄, ou une diamine aromatique ou araliphatique en C₆ à C₂₄, et la polyamine organique étant un composé de formule : 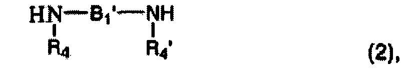 dans laquelle R₄ et R₄' représentent indépendamment l'un de l'autre l'hydrogène ou un groupe alkyle en C₁ à C₆ non substitué ou substitué, ou représentent conjointement une liaison directe formant un cycle, et B₁' est un radical bivalent choisi dans le groupe constitué par un groupe alkylène en C₃ à C₂₄ linéaire ou ramifié, un groupe arylène en C₆ à C₁₀ non substitué, un groupe arylène en C₆ à C₁₀ substitué par un groupe alkyle en C₁ à C₄, un groupe aralkylène en C₇ à C₁₈, un groupe arylène en C₆ à C₁₀ - alkylène en C₁ ou C₂ - arylène en C₆ à C₁₀, un groupe cycloalkylène en C₃ à C₈, un groupe cycloalkylène en C₃ à C₈ - alkylène en C₁ à C₆, un groupe cycloalkylène en C₃ à C₈ - alkylène en C₁ ou C₂ - cycloalkylène en C₃ à C₈, et un groupe alkylène en C₁ à C₆ - cycloalkylène en C₃ à C₈ - alkylène en C₁ à C₆, chacun d'entre eux étant interrompu par au moins un groupe amine bivalent (-NH-) ou ayant un groupe amine primaire ou secondaire,
(c) au moins un dérivé dicarboxylique qui est un composé organique ayant deux groupes : 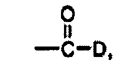 dans lesquels D représente un halogénure, OH, ou un groupe alkoxyle, cycloalkoxyle ou aralkoxyle, le dérivé dicarboxylique étant dérivé d'un acide dicarboxylique aliphatique en C₃ à C₂₄ linéaire ou ramifié, d'un acide dicarboxylique cycloaliphatique ou aliphatique - cycloaliphatique en C₅ à C₂₄, d'un acide dicarboxylique aromatique ou araliphatique en C₆ à C₂₄, ou d'un acide dicarboxylique qui contient des groupes amino ou imido ou des cycles N-hétérocycliques,
(d) au moins un dérivé polycarboxylique qui est un composé organique ayant au moins trois groupes : 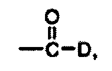 dans lesquels D est tel que défini ci-dessus, et
(e) éventuellement, un carbodiimide.

42. Procédé selon la revendication 41, ledit prépolymère durcissable par un rayonnement étant sensiblement purifié avant l'étape d'introduction.

43. Procédé selon la revendication 42, dans lequel la matière de formation de fluide est la solution aqueuse, ledit prépolymère durcissable par rayonnement étant sensiblement purifié avant l'étape d'introduction.

44. Procédé selon la revendication 43, dans lequel ladite solution aqueuse contient des sels tampons classiquement utilisés dans le domaine de l'entretien des lentilles de contact et/ou des agents d'isotonicité classiquement utilisés dans le domaine de l'entretien des lentilles de contact.

45. Procédé selon la revendication 42, dans lequel la matière de formation de fluide est le liquide ou le produit fondu.

46. Procédé selon la revendication 45, comprenant en outre l'étape consistant à (IV) hydrater ladite lentille de contact dans de l'eau, dans une solution aqueuse de sel ayant une osmolarité d'environ 200 à 450 mOsm/ml, ou dans un mélange d'eau ou d'une solution aqueuse de sel avec un solvant organique polaire physiologiquement compatible.
